(19) Europäisches Patentamt
European Patent Office
Office européen des brevets

(11) **EP 1 682 392 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(21) Anmeldenummer: **04791325.6**

(22) Anmeldetag: **28.10.2004**

(51) Int Cl.:
***B60T 8/1755*** (2006.01)

(86) Internationale Anmeldenummer:
**PCT/EP2004/052689**

(87) Internationale Veröffentlichungsnummer:
**WO 2005/042321 (12.05.2005 Gazette 2005/19)**

(54) **VERFAHREN UND SYSTEM ZUR VERBESSERUNG DES FAHRVERHALTENS EINES FAHRZEUGS**

METHOD AND SYSTEM FOR IMPROVING THE HANDLING CHARACTERISTICS OF A VEHICLE

PROCEDE ET SYSTEME PERMETTANT D'AMELIORER LE COMPORTEMENT ROUTIER D'UN VEHICULE

(84) Benannte Vertragsstaaten:
**DE FR**

(30) Priorität: **28.10.2003 DE 10350398**

(43) Veröffentlichungstag der Anmeldung:
**26.07.2006 Patentblatt 2006/30**

(73) Patentinhaber: **Continental Teves AG & Co. oHG 60488 Frankfurt am Main (DE)**

(72) Erfinder:
• **WANKE, Peter 60437 Frankfurt (DE)**
• **HERRMANN, Torsten 60487 Frankfurt/Main (DE)**
• **ROSZYK, Mario 65817 Eppstein (DE)**
• **WICKENHÖFER, Thorsten 60489 Frankfurt/M (DE)**
• **PANK, Matthias 61440 Oberursel (DE)**
• **KONANZ, Jochen 60326 Frankfurt (DE)**

(56) Entgegenhaltungen:
WO-A-02/081279     WO-A1-02/36401
WO-A1-03/002392    DE-A- 4 010 332
DE-A- 10 054 647   DE-A- 10 060 347
DE-A- 19 936 439   US-B1- 6 289 272

**Beschreibung**

1. Allgemeine Struktur der Fahrstabilitätsregelung (FSR)

Unter dem Begriff Fahrstabilitätsregelung (FSR) vereinigen sich vier Prinzipien zur Beeinflussung des Fahrverhaltens eines Fahrzeugs mittels vorgebbarer Drücke in einzelnen Radbremsen und mittels Eingriffe in das Motormanagement des Antriebsmotors. Dabei handelt es sich um Bremsschlupfregelung (ABS), welche während eines Bremsvorgangs das Blockieren einzelner Räder verhindern soll, um Antriebsschlupfregelung (ASR), welche das Durchdrehen der angetriebenen Räder verhindert, um elektronische Bremskraftverteilung (EBV), welche das Verhältnis der Bremskräfte zwischen Vorder- und Hinterachse des Fahrzeugs regelt, sowie um eine Giermomentregelung (GMR), welche für stabile Fahrzustände beim Durchfahren einer Kurve sorgt.

Mit Fahrzeug ist also in diesem Zusammenhang ein Kraftfahrzeug mit vier Rädern gemeint, welches mit einer hydraulischen Bremsanlage ausgerüstet ist. In der hydraulischen Bremsanlage kann mittels eines pedalbetätigten Hauptzylinders vom Fahrer ein Bremsdruck aufgebaut werden. Jedes Rad besitzt eine Bremse, welcher jeweils ein Einlaßventil und ein Auslaßventil zugeordnet ist. Über die Einlaßventile stehen die Radbremsen mit dem Hauptzylinder in Verbindung, während die Auslaßventile zu einem drucklosen Behälter bzw. Niederdruckspeicher führen. Schließlich ist noch eine Hilfsdruckquelle vorhanden, welche auch unabhängig von der Stellung des Bremspedals einen Druck in den Radbremsen aufzubauen vermag. Die Einlaß- und Auslaßventile sind zur Druckregelung in den Radbremsen elektromagnetisch betätigbar. Zur Erfassung von fahrdynamischen Zuständen sind vier Drehzahlsensoren, pro Rad einer, mindestens ein Giergeschwindigkeitsmesser, ein Querbeschleunigungsmesser und mindest ein Drucksensor für den vom Bremspedal erzeugten Bremsdruck vorhanden. Dabei kann der Drucksensor auch ersetzt sein durch einen Pedalweg- oder Pedalkraftmesser, falls die Hilfsdruckquelle derart angeordnet ist, daß ein vom Fahrer aufgebauter Bremsdruck von dem der Hilfsdruckquelle nicht unterscheidbar ist. Darüber hinaus können Informationen über den Getriebezustand z.B. über gangschalter und dgl. Abgefragr werden.

Vorteilhafterweise wird bei einer solchen Vielzahl von Sensoren eine Fall-back-Lösung verwirklicht. Das bedeutet, daß bei Ausfall eines Teils der Sensorik jeweils nur der Bestandteil der Regelung abgeschaltet wird, der auf diesen Teil angewiesen ist. Fällt beispielsweise der Giergeschwindigkeitsmesser aus, so kann zwar keine Giermomentregelung vorgenommen werden, ABS, ASR und EBV sind aber weiter funktionstüchtig. Die Fahrstabilitätsregelung kann also auf diese drei übrigen Funktionen begrenzt werden.

Bei einer Fahrstabilitätsregelung wird das Fahrverhalten eines Fahrzeugs derart beeinflußt, daß es für den Fahrer in kritischen Situationen besser beherrschbar wird oder daß kritische Situationen von vornherein vermieden werden. Eine kritische Situation ist hierbei ein instabiler Fahrzustand, in welchem im Extremfall das Fahrzeug den Vorgaben des Fahrers nicht folgt. Die Funktion der Fahrstabilitätsregelung besteht also darin, innerhalb der physikalischen Grenzen in derartigen Situationen dem Fahrzeug das vom Fahrer gewünschte Fahrzeugverhalten zu verleihen.

Während für die Bremsschlupfregelung, die Antriebsschlupfregelung und die elektronische Bremskraftverteilung in erster Linie der Längsschlupf der Reifen auf der Fahrbahn von Bedeutung ist, fließen in die Giermomentregelung (GMR) weitere Größen ein, beispielsweise die Gierwinkelgeschwindigkeit $\dot{\psi}$.

Zur Giermomentregelung kann auf unterschiedliche Fahrzeug-Referenzmodelle zurückgegriffen werden. Am einfachsten gestaltet sich die Berechnung anhand eines Einspur-Modells, d.h. daß Vorderräder und Hinterräder in diesem Modell jeweils paarweise zu einem Rad zusammengefaßt sind, welches sich auf der Fahrzeuglängsachse befindet. Wesentlich komplexer werden Berechnungen, wenn ein Zweispur-Modell zugrundegelegt wird. Da bei einem Zweispur-Modell aber auch seitliche Verschiebungen des Massenschwerpunkts (Wank-Bewegungen) berücksichtigt werden können, sind die Ergebnisse genauer.

Für ein Einspur-Modell stehen in Zustandsraumdarstellung die Systemgleichungen:

F 1.1

$$\dot{\beta} = c_{11}\frac{\beta}{v}\,\dot{\Psi} + c_{12}\frac{\dot{\Psi}}{v^2} + c_{13}\frac{\delta}{v}$$

F 1.2

$$\ddot{\Psi} = c_{21}\beta + c_{22}\frac{\dot{\Psi}}{v} + c_{23}\delta$$

Der Schwimmwinkel β und die Gierwinkelgeschwindigkeit $\dot{\psi}$ stellen die Zustandsgrößen des Systems dar. Die auf das Fahrzeug einwirkende Eingangsgröße stellt dabei der Lenkwinkel δ dar, wodurch das Fahrzeug die Gierwinkelgeschwindigkeit $\dot{\psi}$ als Ausgangsgröße erhält. Die Modellkoeffizienten $c_{ij}$ sind dabei folgendermaßen gebildet:

F 1.3

$$c_{11} = -\frac{c_h + c_v}{m} \qquad c_{12} = \frac{c_h l_h - c_v l_v}{m} \qquad c_{13} = \frac{c_v}{m}$$

$$c_{21} = \frac{c_h l_h - c_v l_v}{\Theta} \qquad c_{22} = -\frac{c_h l_h^2 + c_v l_v^2}{\Theta} \qquad c_{23} = -\frac{c_v l_v}{\Theta}$$

Dabei stehen $c_h$ und $c_v$ für die resultierenden Steifigkeiten. aus Reifen-, Radaufhängungs- und Lenkungselastizität an der Hinter- bzw. Vorderachse. $l_h$ und $l_v$ stehen für die Abstände der Hinterachse und der Vorderachse vom Fahrzeugschwerpunkt. θ ist das Gierträgheitsmoment des Fahrzeugs, also das Trägheitsmoment des Fahrzeugs um seine Hochachse.

In diesem Modell werden Längskräfte und Schwerpunktverlagerungen nicht berücksichtigt. Auch gilt diese Näherung nur für kleine Winkelgeschwindigkeiten. Die Genauigkeit dieses Modells nimmt also mit kleineren Kurvenradien und größeren Geschwindigkeiten ab. Dafür ist jedoch der Rechenaufwand überschaubar. Weitere Ausführungen zu diesem Einspur-Modell finden sich im Buch "Fahrwerktechnik: Fahrverhalten" von Adam Zomotor, Vogel Buchverlag, Würzburg 1987.

Aus der WO 03/002 392 A1 ist ein Verfahren zur Modifizierung einer Fahrstabilitätsregelung eines Fahrzeugs bekannt, bei dem anhand eines Vergleichs zwischen einem Sollwert und einem gemessenen Istwert der Gierwinkelgeschwindigkeit ein zusätzliches Giermoment bestimmt wird, wobei in der Berechnung des Sollwerts ein modellbasierter Reibwert berücksichtigt wird. Um ein Kippen des Fahrzeugs zu verhindern, wird der Reibwert in Abhängigkeit von der Grenzquerbeschleunigung oder davon abgeleiteten Größen auf einen Wert unterhalb des maximal zulässigen Reibwerts begrenzt.

Aus der DE 199 36 439 A1 ist eine Überwachungseinrichtung für eine Sensoranordnung beschrieben, die Fehlermeldungen ausgibt, wenn Differenzen zweier Signale vorbestimmte Schwellenwerte übersteigen. Gemäß einer Ausführungsform erfolgt im Rahmen dieser Fehlerüberwachung eine Überprüfung auf stationäres Fahrverhalten ohne Unterscheidung zwischen Kurven- und Geradeausfahrt.

In der DE- 40 30 704 A1 wird ein Zweispur-Modell für ein Fahrzeug vorgeschlagen, welches in seiner Genauigkeit einem Einspur-Modell überlegen ist. Auch hier bilden die Gierwinkelgeschwindigkeit $\dot{\psi}$ und der Schwimmwinkel β die Zustandgrößen. Bei der Verwendung eines Zweispur-Modells ist jedoch zu beachten, daß eine enorme Rechenkapazität benötigt wird, um in hinreichend kurzer Zeit einen Regeleingriff vornehmen zu können.

Die Verfahren und Regelsysteme dienen dazu, durch gezielte Eingriffe an den einzelnen Bremsen eines Fahrzeugs ein zusätzliches Drehmoment zu schaffen, welches über die tatsächlich gemessene Gierwinkeländerung pro Zeiteinheit (Ist-Gierrate) eines Fahrzeugs zu der von dem Fahrer beeinflußten Gierwinkeländerung pro Zeiteinheit (Soll-Gierrate) hinführt. Ein derartiges Verfahren und Regelsystem greift also insbesondere dann unterstützend in das Lenkverhalten des Fahrzeugs ein, wenn aufgrund von Gegebenheiten (z.B. zu hoher Geschwindigkeit, glatte Fahrbahn) die von dem Fahrzeug tatsächlich zurückgelegte Kurvenbahn nicht mit der von dem Fahrer ohne zusätzliches Drehmoment gewünschten übereinstimmt. Solche Verfahren und Regelsysteme zur Verbesserung der Fahrstabilität sind im Prinzip schon umfangreich beschrieben worden und sollen daher hier nicht nochmals im einzelnen erläutert werden. Bei derartigen Verfahren und Regelsystemen werden stets Eingangsgrößen, welche aus der von dem Fahrer gewünschten Kurvenbahn resultieren (beispielsweise Lenkradwinkel, Fahrgeschwindigkeit) einer Fahrzeugmodellschaltung zugeführt, welche anhand eines bekannten Einspur-Modells oder eines anderen Fahrmodells aus diesen Eingangsgrößen und für das Fahrverhalten des Fahrzeugs charakteristischen Parametern aber auch durch die Eigenschaften der Umgebung vorgegebenen Größen (Reibwert der Fahrbahn) eine Soll-Gierrate ($\psi_{Soll}$) bestimmt, die mit der gemessenen tatsächlichen Gierrate ($\psi_{Ist}$) verglichen wird. Die Differenz der Gierwinkel ($\Delta\psi_{Diff}$) wird mittels eines Giermomentreglers in ein zusätzliches Giermöment $M_G$ umgerechnet, welches die Eingangsgröße einer Verteilungslogik bildet.

Die Verteilungslogik selbst bestimmt wiederum, ggf. in Abhängigkeit von dem einen bestimmten Bremsdruck an den Radbremsen anfordernden Bremswunsch des Fahrers, den an den einzelnen Bremsen aufzubringenden Bremsdruck. Dieser soll zusätzlich zu der gegebenenfalls erwünschten Bremswirkung noch ein zusätzliches Drehmoment an dem Fahrzeug erzeugen, welches das Fahrverhalten des Fahrzeugs in Richtung des Lenkwunsches des Fahrers unterstützt.

Treten aufgrund von äußeren oder im Verhalten des Fahrers liegenden Gegebenheiten beim Fahren Änderungen des fahrzeugdynamischen Fahrverhaltens (z.B. Reibwertänderungen), z.B. eine Änderung des Motormoments, z.B. durch Gaswegnahme oder einen Gasstoß oder durch Bremsen, auf, ändert sich das Fahrverhalten des Fahrzeugs, weil durch das Zusammenspiel mehrerer Einflüsse, wie Reifeneinflüsse, kinematische Einflüsse und elastokinematische Einflüsse unter anderem eine Änderung der Achslast und damit der Kräfte erfolgt.

Z.B. beim Durchfahren einer Kurve, bei der eine Gaswegnahme erfolgt, wirken vor der Gaswegnahme an den Antriebsrädern die Antriebskräfte $F_a$. Durch die seitliche Deformation der Reifenaufstandsfläche wirkt die Antriebslängskraft $F_A = 2 \times F_a$ in Abhängigkeit von den Seitenkräften etwas außerhalb der Radmittelebene. Durch die zur Fahrzeuglängsachse asymmetrisch wirkende Antriebslängskraft $F_A$ entsteht ein untersteuerndes Giermoment ($\dot{\psi}_{unter}$).

Nach der Gaswegnahme bremst der Motor (und sonstige Widerstände) das Fahrzeug ab, die Antriebs(längs)kräfte werden negativ. Gleichzeitig entsteht durch die Verzögerung eine Massenkraft mx im Schwerpunkt SP, wodurch sich die Achslast an den vorderen Rädern erhöht und an den hinteren Rädern um den gleichen Betrag verringert. Damit ändert sich die Verteilung der übertragbaren Seitenkräfte. Die Seitenkraftänderung (Seitenkraft an der Vorderachse steigt geringfügig an und fällt an der Hinterachse stark ab) erzeugt ein übersteuerndes Giermoment ($\dot{\psi}_{über}$), die Schräglaufwinkel an der Hinterachse vergrößern sich und das Fahrzeug dreht in die Kurvenbahn hinein. Bei Wechsel des Motormoments von Antriebskraft in Bremskraft tritt durch Umkehr dieser Momente eine Änderung des Fahrverhaltens des Fahrzeugs von einem übersteuernden zu einem untersteuernden Fahrverhalten auf.

Es existieren bereits Methoden, welche nur Teilaspekte der genannten Anforderung erfüllen.

So ist es für Teilbremsungen in der Kurve die Funktion "ABS-plus" bekannt. Diese erreicht die Fahrzeugstabilisierung durch Druckabbau an den kurveninneren Rädern. ABS-plus ermittelt das Fahrzeugverhalten jedoch ausschließlich aus den gemessenen Radgeschwindigkeiten.

Bremst der Fahrer in einer Kurve so stark, dass er eine ABS-Regelung auslöst, so ist oft schon die ABS-Funktion selbst in der Lage, der Eindrehtendenz entgegenzuwirken. Dies liegt darin begründet, dass an der Kurvenaußenseite eine größere Aufstandskraft und damit ein größeres Längskraftpotential herrscht als an der Kurveninnenseite. ABS stellt die optimale Ausnutzung des Längskraftpotentials sicher. Das entstehende Kräfteungleichgewicht bewirkt dann ein stabilisierendes Giermoment.

Nachteilig ist, daß diese Methoden keinen eigen Regler haben, sondern die GMR-Regler von Standard-ESP mitbenutzen. Sie entfalten dadurch ihre Wirkung, dass sie die Parameter der GMR-Regler beeinflussen (z.B. Absenkung der Regelschwellen).

Die bisherigen Methoden haben folgende Nachteile:Nachteile der bisherigen Methoden

Die bisherigen Methoden haben folgende Nachteile:

1) Jede Methode wirkt nur in einer oder in wenigen bestimmten Fahrsituationen und beschränkt sich nur auf eine bestimmte Eingriffsstrategie.

2) Jede Methode hat nicht-optimale Teillösungen; z.B. ist der Komfort in der einen Methode optimal, da zum Druckaufbau die Hydraulikpumpe voll angesteuert wird; bei der anderen Methode wird die Referenzgierrate nicht durchgängig verwendet.

3) Die Abdeckung von immer mehr Fahrsituationen durch parallele Aktivierung von immer mehr Einzelmethoden stößt schnell an Grenzen, da sich die Wirkungsbereiche (Fahrsituationen) der Methoden ungewünscht überdeckten können oder Lücken lassen und sich die Eingriffsstrategien zum Teil widersprechen.

Der Erfindung liegt daher die Aufgabe zugrunde, ein Verfahren und ein Regelsystem zur Verbesserung des Fahrverhaltens eine Fahrzeugs zu schaffen, welche das Fahrverhalten eines Fahrzeugs so beeinflusst, daß es in Abhängigkeit von der Fahrsituation frühzeitig und komfortabel an das gewünschte Fahrverhalten angepasst wird. Darüber hinaus soll die Ansprechempfindlichkeit der Regelung erhöht werden.

Diese Aufgabe wird gelöst in Verbindung mit den kennzeichnenden Merkmalen des Anspruchs 1.

Die Erfindung betrifft ein Fahrsituationserkennungsverfahren zum Beobachten und Analysieren von Fahrsituationen eines Fahrzeugs, wie Geradeausfahrt, Kurvenfahrt u. dgl., dadurch gekennzeichnet, dass in der Fahrsituationserkennung Fahrsituationen mit nahezu stationären Kursverläufen des Fahrzeugs mit einer Lenkwinkelgeschwindigkeit kleiner/gleich 120°/s beobachtet und analysiert werden, wobei die Fahrsituationserkennung als Zustandautomat aufgebaut ist, der mindestens einen der Zustände Geradeausfahrt mit Teilbremsung, Kurvenfahrt mit Teilbremsung und/oder Kurvenfahrt mit Lastwechsel erkennt und in Abhängigkeit von den Zuständen, die eine Kursabweichung wiedergeben, einen Regler aktiviert.

Erfindungsgemäß ist vorgesehen, dass die Fahrsituationserkennung mit einem Referenzsignalmodell verbunden ist, in dem eine GMR-Referenzgröße mit einem Offset korrigiert wird, wobei die Fahrsituationserkennung den Zeitpunkt bestimmt, wann die Offsetkorrektur beginnt und endet, und der Offsetwert zum Startzeitpunkt der Referenzgröße überlagert wird.

Eine Vorrichtung zur Regelung des Gierverhaltens eines zweiachsigen, vierrädrigen Fahrzeugs, welches mit einer hydraulischen Bremsanlage, die für jedes Rad eine Bremse aufweist, und mit mindestens einer Sensorik oder Modellen zur Erfassung bzw. Berechnung der Raddrehzahlen, der Querbeschleunigung, der Gierwinkelgeschwindigkeit, des Lenkwinkels und/oder der Lenkwinkelgeschwindigkeit ausgestattet ist gekennzeichnet durch mindestens zwei elektronische Gierratenregler, wobei der erste Regler ein zusätzliches Giermoment $MG_{SESP}$ zur Verbesserung des Spurverhaltens des Fahrzeugs in Abhängigkeit von einem Soll-/Istgierratenvergleich unterhalb der ESP-Eingriffsschwelle und der zweite Regler (10) zur Stabilisierung des Fahrzustandes des Fahrzeugs oberhalb der ESP-Eingriffsschwelle durch entsprechende Bremsbetätigung umsetzt.

Eine Fahrstabilitätsregelung für ein Fahrzeug, mit einem ESP-Regler zur Regelung eines zusätzlichen Giermoments, mit einer Situationserkennung, in der verschiedene Fahrsituationen, wie Geradeausfahrt, Kurvenfahrt u.dgl. unterschieden und bei der Regelung berücksichtigt werden, wobei die Regelung in Abhängigkeit von Regelschwellen aktiv oder inaktiv ist, dadurch gekennzeichnet, dass eine weitere Fahrsituationserkennung vorgesehen ist, in der nahezu stationäre Kursverläufe des Fahrzeugs mit einer Lenkwinkelgeschwindigkeit kleiner/gleich 120°/s beobachtet und analysiert werden, und dass in Abhängigkeit von erwarteten oder tatsächlich ermittelten Abweichungen im stationären Bereich, die den Fahrerwunsch und den Fahrzeugzustand wiedergeben, eine Modifikation einer den gewünschten Fahrzeugkurs repräsentierenden Referenzgröße aktiviert wird, wenn die Regelung durch den ESP-Regler inaktiv ist.

Eine Ausgestaltung der Fahrstabilitatsregelung ist dadurch gekennzeichnet, dass weiterhin der gewünschten Fahrkurs des Fahrzeugs in der ESP-Regelung ermittelt und Abweichungen von dem gewünschten Fahrkurs ausgewertet werden, wobei bei einem gewünschten Fahrkurs ermittelt wird, ob anhand einer Teilbrems- oder Lastwechselsituation eine Tendenz zu einer nachfolgenden Kursabweichung vorliegt

Ein Verfahren zur Verbesserung des Regelverhaltens eines Stabilitätsregelungssystems (ESP), bei dem das Drehverhalten des Fahrzeugs gemessen und als Eingangsgröße des Regelungssystems ausgewertet wird, wobei durch logische Verknüpfung der Gierrate mit dem vom Fahrer gewünschten Kurs des Fahrzeugs Regelgrößen zur Veränderung des Fahrzeugkurses gebildet werden, und die Regelgrößen zur Veränderung des Fahrzeugkurses in Abhängigkeit von Regelschwellen inaktiv oder aktiv gesetzt werden, ist dadurch gekennzeichnet, dass die Regelschwellen in Abhängigkeit von Fahrsituationen verändert werden, wobei bei einem nahezu stationären Kursverlauf des Fahrzeugs einer Lenkwinkelgeschwindigkeit kleiner/gleich 120°/s Abweichungen vom gewünschten Fahrzeugkurs beobachten und analysiert werden und dass bei erwarteten oder tatsächlich ermittelten Abweichungen im stationären Bereich eine den gewünschten Fahrzeugkurs repräsentierende Referenzgröße unter Berücksichtigung eines definierten Fahrzeugverhaltens modifiziert wird, wenn die Regelschwellen unterhalb der ESP Regelschwellen liegen.

Eine Ausgestaltung des Verfahrens ist, dadurch gekennzeichnet, dass die modellbasierte Fahrzeugreferenzgeschwindigkeit aus den Sensorsignalen der Fahrstabilitätsregelung GMR berechnet werden.

Eine weitere Ausgestaltung des Verfahren ist dadurch gekennzeichnet, dass die modellbasierte Fahrzeugreferenzgeschwindigkeit aus der Gierwinkelgeschwindigkeit, dem Lenkradwinkel und/oder der Querbeschleunigung und/oder deren Ableitungen bzw. Ersatzsignalen ermittelt wird.

Die Methode SESP (Sensitives Elektronisches Stabilitätsprogramm) ist anwendbar auf langsame Eindrehvorgänge. Eine solche Fahrsituation liegt vor, wenn alle nachfolgend genannten Bedingungen erfüllt sind:

1) Der Fahrer wünscht stationäre Fahrt, d.h. seine Lenkdynamik ist relativ gering. Dabei kann es sich sowohl um Geradeausfahrt als auch um Kurvenfahrt handeln.

2) Das Fahrzeug folgt zumindest anfänglich dem Fahrerwunsch.

3) Während der stationären Fahrt baut sich langsam eine Kursabweichung in dem Sinne auf, dass das Fahrzeug die gewünschte Geradeausfahrt verläßt bzw. sich bei gewünschter Kurvenfahrt zum Kurveninneren dreht ("Übersteuern").

4) Für die Kursabweichung gibt es eine zeitlich vorgelagerte meßbare Ursache.

Aufgrund der Einschränkung auf Übersteuersituationen kommen hier insbesondere solche Ursachen in Frage, die bei Geradeausfahrt eine asymmetrische Verteilung der Rad-Längskräfte (z.B. inhomogene Fahrbahn, asymmetrische Bremsenabnutzung) und bei Kurvenfahrt eine Verlagerung des Rad-Seitenkraftpotentials zur Vorderachse bewirken (z.B. Bremsen oder Lastwechsel).

In der Automobilindustrie gibt es mittlerweile die Forderung, dass der ESP-Regler (ESP (GMR) = Elektronisches Stabilitätsprogramm) den Fahrer bei der Beherrschung solcher lamgsamer Eindrehvorgänge unterstützt. Dabei sollen die korrigierenden Eingriffe vom Fahrer möglichst unbemerkt bleiben.

Das Standard-AYC(GMR)-Modul (AYC = Active Yaw Control) des ESP-Reglers erfüllt diese Anforderung nur unzureichend, da es aus Robustheitsgründen erst bei deutlicher Kursabweichung eingreift und diese Eingriffe oft für den Fahrer deutlich spürbar sind, z.B. durch die Rückwirkung der Druckaufbauten über das Bremspedal und über das Lenkrad.

Daher muß das AYC-Modul für den gewünschten Zweck erweitert werden.

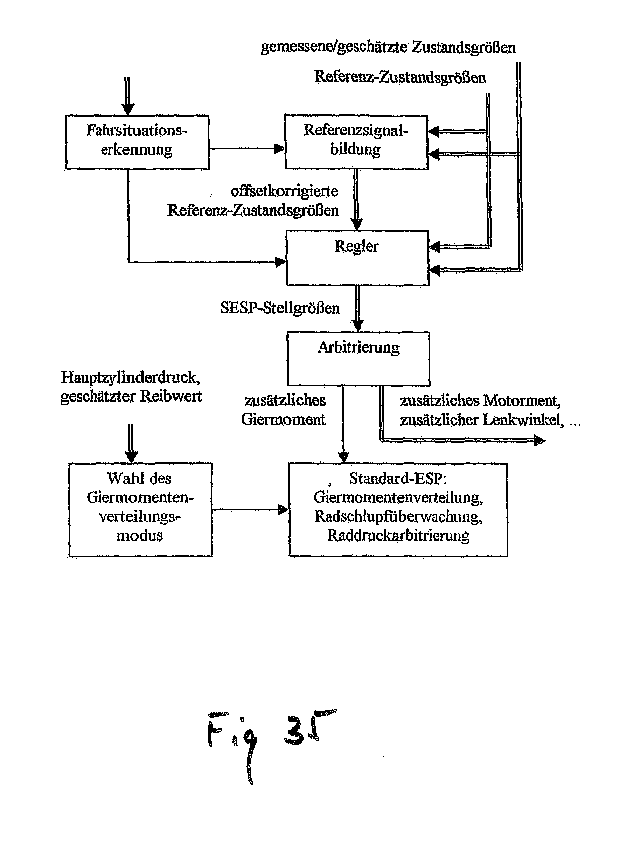

Die neue Methode SESP stellt einen allgemeinen Ansatz zur Korrektur von Eindrehvorgängen im Sinne der oben beschriebenen Anforderung dar. Sie bietet eine Struktur, die geeignet ist, vorhandene Methoden und spätere Erweiterungen zu integrieren. Figur 35 zeigt die Struktur von SESP.

SESP ist als Ergänzung der Standard-AYC-Funktion angelegt. Dadurch kann SESP zum einen Größen und Mechanismen von AYC mitbenutzen. Zum anderen arbeitet AYC im Hintergrund ungehindert weiter und greift wie gewohnt ein, wenn SESP das Fahrzeug nicht hinreichend stabilisieren kann. Wenn Standard-AYC eingreift, werden SESP-Regelungen verboten bzw. laufende SESP-Regelungen abgebrochen. Dieser Abbruch kann wahlweise schlagartig oder (komfortabler) über eine moderate Absenkung der SESP-Stellgrößen erfolgen Fig.35.

Im folgenden werden die einzelnen Elemente von SESP kurz beschrieben.

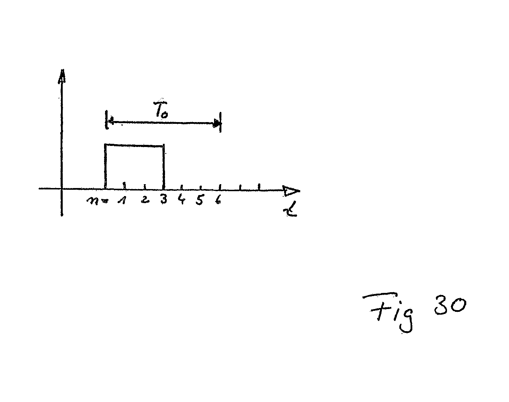

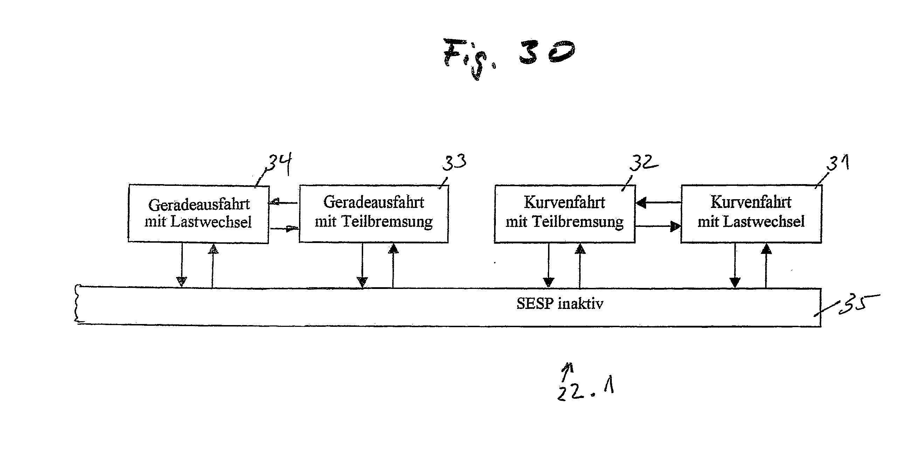

Die **Fahrsituationserkennung** benutzt Informationen über den Fahrerwunsch (z.B. Lenkradwinkel, Motormomentenanforderung, Bremsdruck) und den aktuellen Fahrzeugzustand (z.B. Querbeschleunigung, geschätzter Kurvenradius, Geschwindigkeit) um zu entscheiden, ob eine potentielle Eindrehsituation vorliegt. Die Erkennung ist als Zustandsautomat aufgebaut. Figur 30 zeigt beispielhaft die möglichen Zustände und erlaubten Zustandsübergänge in der aktuellen SESP-Realisierung. Durch die Verwendung eines Zustandsautomaten ist die Eindeutigkeit der erkannten Fahrsituation sichergestellt. Die Differenzierung zwischen mehreren Zuständen ist notwendig, um die SESP-Regler optimal an die aktuelle Fahrsituation anpassen zu können. Parallel wird ständig überprüft (z.B. anhand von AYC-Zustand, ABS-Zustand, Fahrbahnquerneigung, Fahrzeuggeschwindigkeit), ob SESP-Eingriffe erlaubt sind. Bei negativem Ergebnis wird sofort der Zustand "SESP inaktiv" zugewiesen. Manche Eindrehursachen (z.B. Lastwechsel) haben von Natur aus nur eine zeitlich begrenzte Wirkung auf das Fahrzeugverhalten. In diesen Fällen wird der betreffende Zustand in der SESP-Fahrsituationserkennung nach einer bestimmten Zeit wieder verlassen. Ein weiteres Argument für die zeitliche Begrenzung solcher Zustände ist, dass der Fahrer langsame Eindrehvorgänge nach einer gewissen "Anpassungszeit" oft selbst beherrschen kann.

Wie schon erwähnt, wird der erkannte Zustand der Fahrsituationserkennung dazu verwendet, die SESP-Regler zu aktivieren und deren Parameter optimal an die aktuelle Fahrsituation anzupassen (z.B. die Regelschwellen). Um die empfindlichen SESP-Regler möglichst früh "scharf schalten" zu können, wertet die SESP-Fahrsituationserkennung nicht nur die Fahrzeugreaktion sondern schon die vorgelagerten Ursachen aus. Neben der Beeinflussung der Reglerparameter hat die Fahrsituationserkennung auch die Aufgabe, der Referenzsignalbildung anzuzeigen, wann der Offset für die Offsetkorrektur der Referenzgrößen gespeichert werden soll. Dies geschieht ebenfalls schon bei Erkennen einer möglichen Ursache für eine Eindrehsituation.

Für die **Referenzsignalbildung** nutzt SESP das Prinzip einer Offsetkorrektur. Der Fahrerwunsch wird durch die SESP-Referenzgierrate repräsentiert. Gegenüber der AYC-Referenzgierrate enthält die SESP-Referenzgierrate einen Offset, der gerade so groß ist, daß die SESP-Gierratenabweichung zu Beginn des Lastwechsels oder des Einbremsens Null ist.

Durch diesen Offset werden zum einen etwaige unkompensierte Offsets des Gierratensensors ausgeglichen. Dies ist notwendig, um Fehlregelungen des empfindlichen SESP-Gierratenreglers zu vermeiden. Zum anderen werden durch die Offset-Kompensation nur die Abweichungen vom aktuellen Fahrzeugverhalten ausgeregelt.

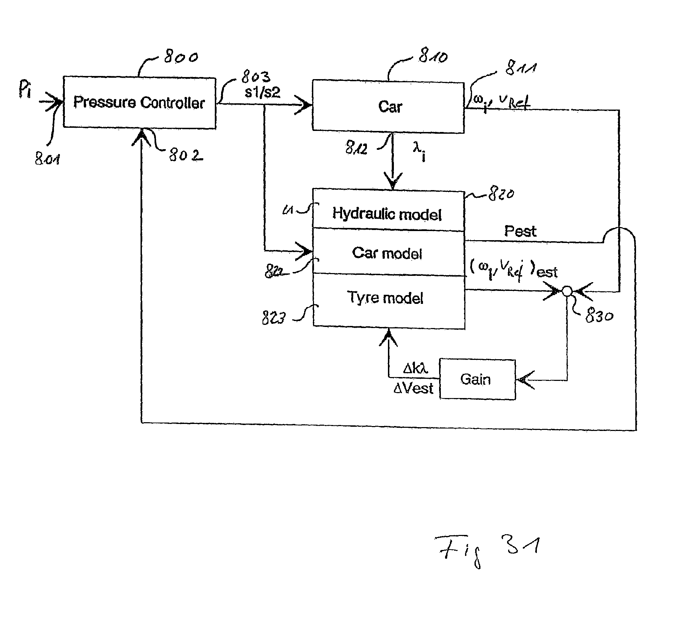

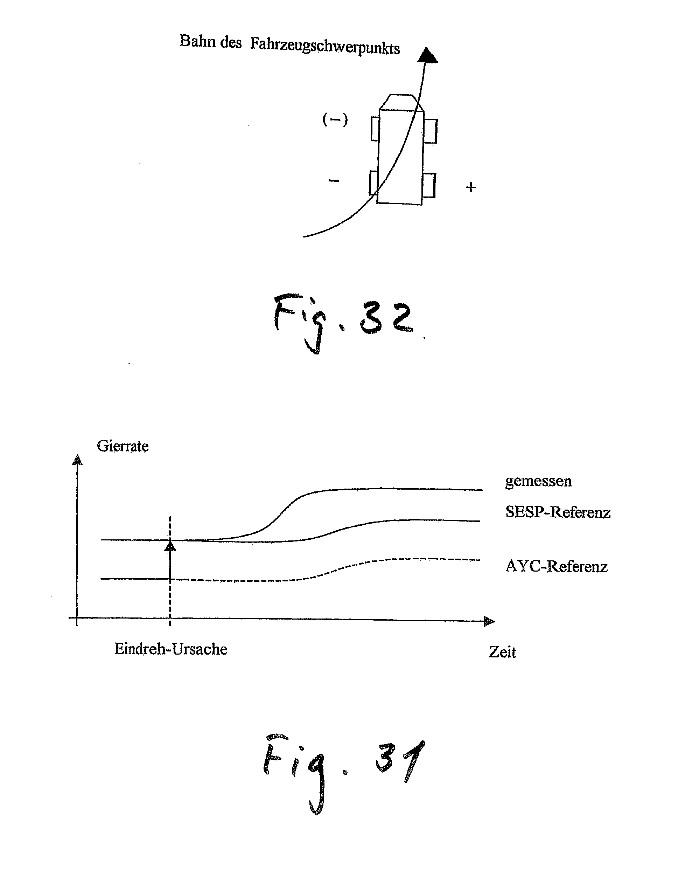

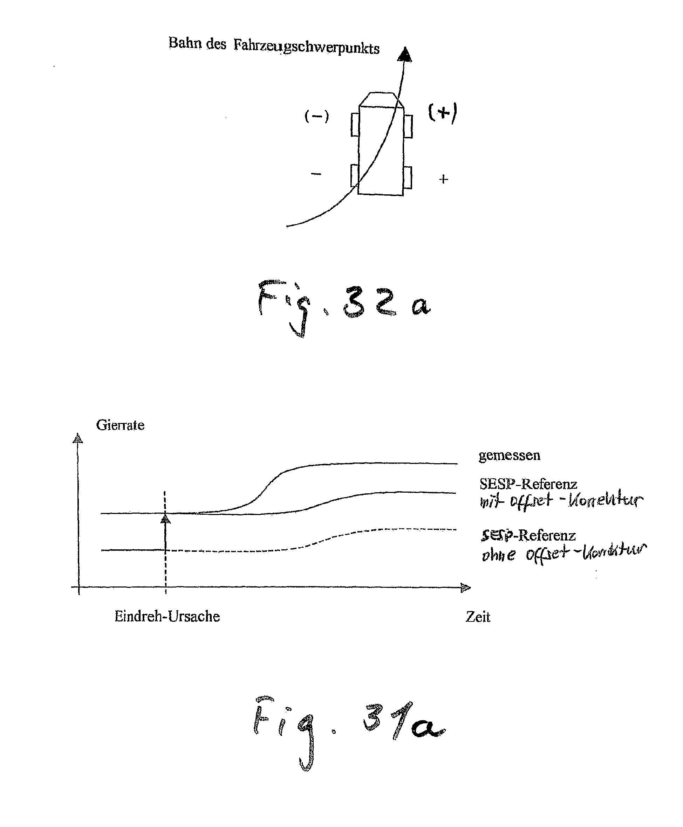

Die Figur 31 zeigt die Bildung der SESP-Referenzgierrate für den Fall eines positiven Gierratensensor-Offsets.

Anzahl und Art der SESP-**Regler** kann vom Anwendungsfall abhängig gemacht werden. Die Regelgröße des Reglers ist die Gierrate und ein zusätzliches Giermoment als Stellgröße. Es kann aber auch ohne weiteres z.B. die Regelgröße Schwimmwinkelgeschwindigkeit oder die Stellgröße zusätzliches Motormoment mitbetrachtet werden. Weitere mögliche Stellgrößen sind (sofern die entsprechenden Aktuatoren vorhanden sind): zusätzlicher Lenkwinkel, Änderung der Feder-/Dämpfercharakteristik, Änderung der Motormomentenverteilung zwischen Vorder- und Hinterachse. Der Gierratenregler hat die Aufgabe, aus der Abweichung der Tst-Gierrate von der SESP-Refernzgierrate das zur Fahrzeugstabilisierung notwendig zusätzliche Giermoment zu berechnen.

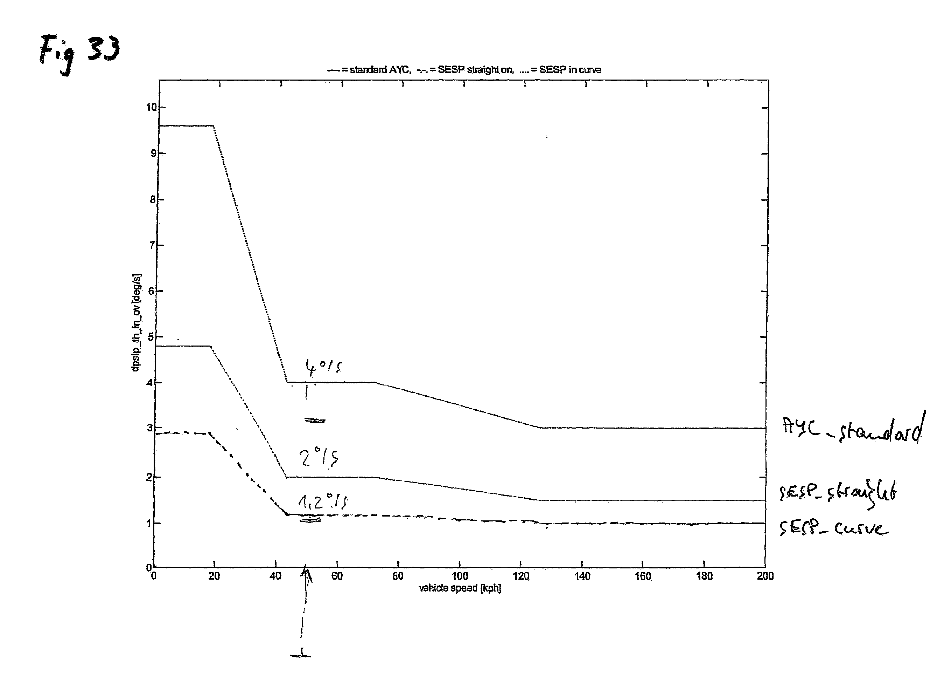

Der als reiner p-Regler ausgelegte Regler hat als Aktivierungskriterium neben dem Vorhandensein einer erlaubten Fahrsituation eine Schwelle für die SESP-Gierratenabweichung. Diese Schwelle ist je nach Fahrsituation höchstens halb so groß wie beim Standard-AYC-Gierratenregler, siehe Figur 33. Für die Situation "Lastwechsel in der Kurve" wird eine andere Schwelle verwendet.

Im SESP-Modul **Arbitrierung** werden alle gleichartigen Stellgrößen (z.B. zusätzliche Giermomente) der SESP-Regler nach bestimmten Prioritätsregeln zusammengefaßt. Die Wahl dieser Prioritätsregeln kann wiederum vom Anwendungsfall abhängig gemacht werden. Maximum, Addition und Unterdrückung gegensinniger Anforderung sind bekannte Beispiele solcher Regeln. Desweiteren hat die Arbitrierung die Aufgabe, die muls die Arbitrierung die SESP-Stellgrößen mit den Anforderungen anderer Regler (insbesondere von Standard-AYC) zu koordinieren und auf Wunsch "sanfte" Übergänge sicherstellen.

Im letzten Schritt werden die **Stellgrößen umgesetzt**. Dabei muß beachtet werden, dass der Fahrer die SESP-Eingriffe möglichst nicht spüren darf. Dazu gehört auch, dass er keine Informationen über SESP-Eingriffe über das Kombiinstrument erhält. Dabei werden in diesem Schritt Standard-Mechanismen des ESP-Reglers mitbenutzt. Die von SESP gewünschte Strategie wird diesen Mechanismen über ein Interface mitgeteilt.

Im folgenden sei die Umsetzung des zusätzlichen Giermomentes in der aktuellen SESP-Realisierung beispielhaft erläutert, vergleiche Figur 32. Zunächst wird geprüft, ob der Fahrer mit einem Mindestdruck bremst. Wenn ja, wird das zuätzliche Giermoment durch Druckabbau am kurveninneren Hinterrad umgesetzt. Diese Eingriffsart ist komfortabel, da sie zum einen gegenüber einem aktiven Druckaufbau mit stark reduzierten Ventil und Pumpenaktivitäten auskommt und zum anderen durch den Eingriff an der Hinterachse eine Rückwirkung über die Lenkung vermeidet. Gleichzeitig wird durch die Erhöhung des Seitenkraftpotentials des kurveninneren Hinterrades die Querstabilität des Fahrzeugs unterstützt. Bei Bedarf wird zusätzlich am kurveninneren Vorderrad Druck abgebaut. Wenn der Bremsdruck des Fahrers unter dem anfangs genannten Mindestdruck liegt, dann wird das zusätzliche Giermoment über Druckaufbau am kurvenäußeren Hinterrad und bei Bedarf zusätzlich am kurvenäußeren Vorderrad umgesetzt. Um das Seitenkraftpotential des betroffenen Rades zu erhalten, wird der Druck (durch Verwendung eines bereits existierenden "Schlupfüberwachers") auf das Niveau der maximalen Längskraft zwischen Rad und Straße nach oben begrenzt. Damit dieses Druckniveau auf keinen Fall überschritten wird, wird zur doppelten Sicherheit der ABS-Regler in einen emfindlichen Modus versetzt. Gleichzeitig wird der EBV-Regler stillgelegt, um ungewollte Druckbegrenzungen zu verhindern. Um den Komfort des SESP-Druckaufbaumodus sicherzustellen, wird der Raddruck mittels der bereits existierenden geräuscharmen Methode "EUV-Trennventil-Regelung" eingestellt.

Um bei niedrigem Fahrbahnreibwert die Gefahr einer Destabilisierung der Hinterachse durch den aktiven Druckaufbau zu minimieren, wird vorgeschlagen, umso mehr Druck vom kurvenäußeren Hinterrad an das kurvenäußere Vorderrad umzuverteilen, je niedriger der geschätzte Fahrbahnreibwert ist. Des weiteren kann es vorteilhaft sein, statt der "binären" Entscheidung zwischen Druckabbau- und Druckaufbaumodus einen fließenden Übergang in dem Sinne zu wählen, dass zunächst das Potential zum Druckabbau ausgenutzt wird. Der danach eventuell noch nicht berücksichtigte Teil des des zusätzlichen Giermoments wird dann auf die oben beschriebene Weise im Rahmen des zur Verfügung stehenden Längskraftpotentials durch Druckaufbau umgesetzt. Dieser Teil bliebe bei einer rein "binären" Entscheidung unberücksichtigt Figur 32.

Falls im ESP-Regler die Information zur Verfügung steht, ob das Fahrzeug einen Anhänger besitzt, wird vorgeschlagen, diese Information für SESP in dem Sinne zu nutzen, dass die Fahrzeuglängsverzögerung, die durch SESP-Eingriffe (wie Druckaufbau) erzeugt wird, auf ein Niveau begrenzt wird, welches den Anhänger nicht destabilisiert. Im einfachsten Fall kann z.B. bei erkanntem Anhänger ein SESP-Druckaufbau ganz unterbunden werden.

Zur Stellgrößenumsetzung sei noch erwähnt, dass beim Vorhandensein mehrer Aktuatoren für eine Stellgröße eine anteilige Verteilung der Stellgröße auf die Aktuatoren notwendig ist. Als Verteilkriterien kommen z.B. Komfort oder Wirksamkeit in Frage. Das Kriterium Reaktionszeit läßt sich z.B. nach folgendem Prinzip berücksichtigen. Zunächst wird die Stellgröße komplett an den reaktionsschnellsten Aktuator weitergegeben. Der Anteil, den dieser Aktuator nicht umsetzen kann, wird dann an den zweitschnellsten Aktuatur weitergegeben, usw. Mit diesem Prinzip wird eine minimale Gesamtreaktionszeit erreicht.

Darüber hinaus sei noch erwähnt, daß zur Umsetzung des zusätzlichen Giermoments zunächst geprüft wird, ob der Fahrer mit einem Mindestdruck von z.B. 20 bar bremst. Wenn ja, wird das zuätzliche Giermoment durch einen komfortablen Druckabbau am kurveninneren Hinterrad (und gegebenenfalls am kurveninneren Vorderrad) umgesetzt.

Wenn der Bremsdruck des Fahrers unter dem anfangs genannten Mindestdruck liegt, dann wird das gesamte zusätzliche Giermoment über Druckaufbau am kurvenäußeren Hinterrad umgesetzt. Um das Seitenkraftpotential des betroffenen Rades zu erhalten, wird der Druck (durch Verwendung eines bereits existierenden "Radschlupfüberwachers") auf das Niveau der maximalen Längskraft zwischen Rad und Straße nach oben begrenzt. Damit dieses Druckniveau auf keinen Fall überschritten wird, wird zur doppelten Sicherheit der ABS-Regler in einen emfindlichen Modus versetzt. Gleichzeitig wird die Aktivierung des EBV-Reglers verhindert, um ungewollte Druckbegrenzungen zu verhindern.

Um den Komfort von SESP auch im Druckaufbaumodus sicherzustellen, wird der Raddruck in diesem Modus mittels der bereits existierenden geräuscharmen Methode "EUV-Trennventil-Regelung" eingestellt.

Die Figur 33 verdeutlicht am Beispiel einer Linkskurve, an welchen Rädern SESP Druckabbau (-) und Druckaufbau (+) durchführt.

**Vorteile der neuen Methode SESP**

Die neue Methode SESP hat gegenüber existierenden Methoden die folgenden Vorteile:

1) Die Struktur von SESP ermöglicht die Zusammenfassung existierender Methoden, welche für sich betrachtet jeweils nur einen kleinen Wirkungsbereich abdecken, zu einer Gesamtmethode mit größerem Wirkungsbereich.

2) Die Struktur von SESP ist offen für Erweiterungen. Neue Situationen, Regelgrößen und Stellgrößen können beliebig hinzugefügt werden. Sie hat damit das Potential, langsame Eindrehmanöver im Rahmen der zur Verfügung stehenden Sensorik und Aktuatorik abzudecken.

3) Durch die klare Abtrennung der Teilmodule Regler und Stellgrößenumsetzung von der Fahrsituationserkennung können die selben Wirkmechanismen für verschiedene Fahrsituationen verwendet werden. Dies stellt eine durchgehende Regelgüte sicher und erleichtert die Applikation und Weiterentwicklung von SESP.

4) Gegenüber dem modellbasierten Ansatz der "Schwimmwinkelregelung" ist SESP im Rahmen seines Wirkungsbereiches nicht auf zusätzliche Sensorik (wie individuelle Radkraft- oder Radbremsdrucksensoren) angewiesen. Es genügt die herkömmliche ESP-Sensorik.

5) Durch die konsequente Auswertung der zeitlich vorgelagerten Eindrehursachen und durch die nur selektive Regleraktivierung kann SESP relativ empfindliche Regelschwellen verwenden. Dies befähigt SESP im Gegensatz zu Standard-AYC einerseits zum Erkennen der langsamen Eindrehvorgänge als auch zu deren frühzeitigen Korrektur mit relativ wenig Stellenergie.

6) Durch die Verwendung eigener SESP-Regler kann der Standard-AYC-Regler im Hintergrund weiterlaufen und ständig prüfen, ob die stabilisierende Wirkung von SESP ausreicht. Ist dies nicht der Fall, greift AYC wie gewohnt ein.

7) Die durchgehende Verwendung der beschriebenen offsetkorrigierten Referenzgrößen reduziert den störenden Einfluß von Signalfehlern.

8) Die vorgeschlagene Strategie zur Umsetzung des zusätzlichen Giermoments hat sowohl im Druckabbau- als auch im Druckaufbaumodus einen hohen Komfort. Gleichzeitig ist sie konsequent auf die Erhaltung der Fahrzeugstabilität ausgelegt.

Die entscheidende Verbesserung stellt die klare Trennung zwischen Fahrsituationserkennung, Regelung und Stellgrößenumsetzung dar. SESP integriert auf diese Weise vorhandene Methoden, optimiert diese und ist offen für spätere Erweiterungen. Dadurch ist SESP in der Lage, ohne zusätzliche Sensorik oder Aktuatorik den Wirkungsbereich des ESP-Reglers deutlich zu erweitern.

Fig. 1          ein Blockschaltbild zur Gesamtstruktur eines Systems zur Fahrstabilitätsregelung,

Fig. 2          ein Blockschaltbild zur Struktur der Giermomentenregler,

Fig. 3          ein Flußdiagramm über die Ermittlung einer Fahrsituation, wie z.B. Kurvenfahrt,

Fig. 4 und 5   je ein Flußdiagramm über die Bestimmung des Fahrbahnreibwertes, wobei Fig. 5 in Fig. 4 einzufügen ist,

Fig. 6 und 8   Blockschaltbilder über ein kombiniertes Verfahren zur Bestimmung der aktuellen Werte der Schwimmwinkelgeschwindigkeit und des Schwimmwinkels in unterschiedlicher Darstellungsweise,

Fig. 7          ein Blockschaltbild zur direkten Bestimmung der Schwimmwinkelgeschwindigkeit aus kinematischen Betrachtungen als Teil des kombinierten Verfahrens von Fig. 6,

Fig. 9          ein Regelkreis zur Fahrstabilitätsregelung mit von der Fahrgeschwindigkeit abhängigem Wechsel des Rechenmodells für das Fahrzeug,

Fig. 10 und 11 Diagramme, aus denen die Abhängigkeit der Schräglaufwinkeldifferenz eines Fahrzeugs vom Schwimmwinkel und dem Geschwindigkeitsvektor der einzelnen Räder entnommen werden kann,

Fig. 12 bis 15 ein Blockschaltbild einer Regelschaltung zur Regelung der Fahrstabilität, bei der die in dem Vergleicher miteinander verglichenen Größen Ableitungen der Gierwinkelgeschwindigkeit darstellen,

Fig. 16         eine Regelschaltung zur Ermittlung der Fahrstabilität, bei der als Regelgröße der Druckgradient und/oder die Ventilschaltzeit der Fahrzeugbremse Verwendung findet,

Fig. 17          Blockschaltbild zur Beschreibung des Reglers zur Berechnung des Zusatzgiermoments,

Fig. 18          Blockschaltbild zur Beschreibung eines Tiefpaßfilters,

Fig. 19          Flußdiagramm zur Berechnung einer korrigierten Sollgierwinkelgeschwindigkeit,

Fig. 20          Blockdiagramm zum Berechnen eines korrigierten Zusatzgiermoments,

Fig. 21          schematische Darstellung eines Kraftfahrzeugs,

Fig. 22          Blockschaltbild zur Beschreibung der Verteilungslogik,

Fig. 23          schematische Darstellung eines Kraftfahrzeugs und den angreifenden Kräften bei eingeschlagenem Lenkrad,

Fig. 24          Diagramm zur Beschreibung der Seiten- und Längskraftbeiwerte in Abhängigkeit vom Radschlupf,

Fig. 25A, B      schematische Darstellung von Kraftfahrzeugen zur Beschreibung des unter- und übersteuernden Verhaltens,

Fig. 26          Flußdiagramm mit einer Entscheidungslogik innerhalb der Verteilungslogik,

Fig. 27          Blockschaltbild zur Berechnung von Schaltzeiten für Ein- und Auslaßventile,

Fig. 28          Diagramm zur Beschreibung von Zeitintervallen innerhalb eines Berechnungsflugs,

Fig. 29          prinzipielles Blockschaltbild zur Bestimmung des Radbremsdruckes.

Fig. 30          prinzipielles Blockschaltbild der Fahrsituationserkennung

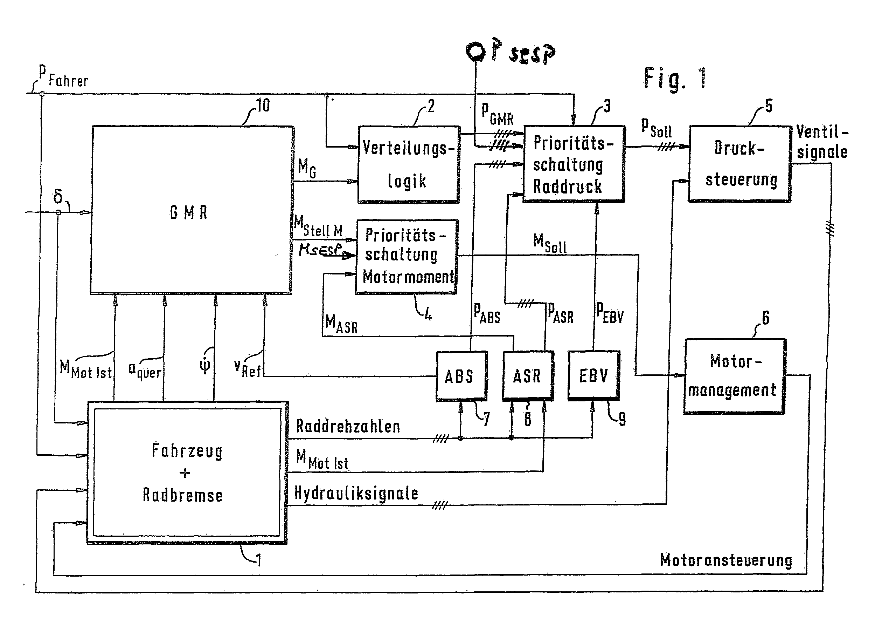

Eine generelle Beschreibung des Ablaufs einer Fahrstabilitätsregelung (FSR) erfolgt nun anhand von Fig. 1.

Das Fahrzeug bildet die sogenannte Regelstrecke:

Auf das Fahrzeug 1 wirken die vom Fahrer gegebenen Größen Fahrerbremsdruck $P_{Fahrer}$ bzw. $P_{THZ}$, Gaspedalstellung, Ganginformation und Lenkwinkel $\delta$. Am Fahrzeug 1 werden die hieraus resultierenden Größen Motoristmoment $M_{Motist}$, Querbeschleunigung $a_{quer}$, Gierwinkelgeschwindigkeit $\dot{\psi}_{mess}$, Raddrehzahlen $v_{wheel}$ und Hydrauliksignale wie Radbremsdrücke $P_{THZ}$ gemessen sowie Informationen über Gangwechsel ermittelt. Zur Auswertung dieser Daten weist die FSR-Anlage fünf elektronische Regler 7,8,9 10 und 20 auf, die jeweils dem Antiblockiersystem ABS, der Antriebsschlupfregelung ASR, der elektronischen Bremskraftverteilung EBV bzw. der Giermomentregelung GMR und der sensitiven Giermomentregelung SESP zugeordnet sind. Die elektronischen Regler für ABS 7, ASR 8, EBV 9 und GMR 10 können im wesentlichen dem Stand der Technik entsprechen.

Die Raddrehzahlen werden den Reglern für das Antiblockiersystem 7, die Antriebsschlupfregelung 8, die elektronische Bremskraftverteilung 9 und der sensitiven Giermomentregelung 20 zugeführt. Der Regler 8 der Antriebsschlupfregelung erhält zusätzlich noch Daten über das herrschende Motormoment, das Motoristmoment $M_{Motist}$. Diese Information geht auch dem Regler 10 zur Giermomentregelung GMR und dem Regler 20 zur sensitiven Giermomentregelung SESP zu. Der SESP Regler erhält zusätzlich noch Gangwechselinformationen. Außerdem erhalten sie von Sensoren die Daten über die Querbeschleunigung $a_{quer}$ und die Gierwinkelgeschwindigkeit $\dot{\psi}_{mess}$ des Fahrzeugs. Da im Regler 7 des ABS über die Einzelraddrehzahlen der Fahrzeugräder ohnehin eine Fahrzeugreferenzgeschwindigkeit $v_{Ref}$ ermittelt wird, anhand derer ein übermäßiger Bremsschlupf eines der Räder festgestellt werden kann, muß eine derartige Referenzgeschwindigkeit nicht im GMR-Regler 10 berechnet werden, sondern wird vom ABS-Regler 7 übernommen. Wo die Fahrzeugreferenzgeschwindigkeit berechnet wird oder ob zur Giermomentreglung eine eigene Berechnung vorgenommen wird, macht für den Ablauf der Giermomentregelung GMR nur einen kleinen Unterschied, Dasselbe gilt auch für die Längsbeschleuigung $a_{long}$ des Fahrzeugs. Entsprechend könnte der Wert hierfür auch im ABS-Regler 7 ermittelt und an den GMR-Regler 10 weitergegeben werden. Für eine Bestimmung des Fahrbahnreibwertes $\mu$ gilt dies nur eingeschränkt, da zur Giermomentregelung und zur sensitiven Giermomentregelung 20 ein genauer bestimmter Reibwert wünschenswert ist, als er für das Blockierschutzsystem ermittelt wird.

Alle fünf elektronischen Regler der FSR, also die Regler für SESP 20, GMR 10, ABS 7, ASR 8 und EBV 9 arbeiten parallel und unabhängig voneinander anhand ihrer eigenen Regelstrategien Bremsdruckvorgaben $P_{SESP}$, $P_{GMR}$, $P_{ABS}$, $P_{ASR}$, $P_{EBV}$ für die einzelnen Räder aus.

Zusätzlich werden vom ASR-Regler 8 und vom GMR-Regler 10 und SESP-Regler parallel Vorgaben $M_{ASR}$ und $M_{StellM}$ für das Motormoment berechnet.

Die Druckvorgaben $p_{GMR}$ und $P_{SESP}$ des GMR-Reglers 10 und des SESP-Reglers 20 für die einzelnen Radbremsdrücke werden folgendermaßen ermittelt:

Der GMR-Regler 10 und der SESP-Regler 20 berechnen zunächst jeweils ein zusätzliches Giermoment $MG_{GMR}$ bzw. $MG_{SESP}$, welches zur Stabilisierung des Fahrzustandes innerhalb einer Kurve bzw. zur Verbesserung des Fahrverhaltens innerhalb einer Kurve und bei einer Geradeausfahrt führt, wenn es durch entsprechende aktive Bremsbetätigung erzeugt wird. Diese $MG_{GMR}$ bzw. $MG_{SESP}$ werden jeweils einer Verteilungslogik 2 bzw. 21 zugeführt, welche auch als Teil des GMR-Reglers 10 bzw. SESP-Reglers 20 dargestellt werden könnten. In diese Verteilungslogik 2 bzw. 20 fließt außerdem ein möglicherweise vorhandener Fahrerwunsch zur Fahrzeugverzögerung ein, der anhand des Fahrerbremsdruckes PFahrer ($=P_{THZ}$) erkannt wird. Die Verteilungslogik 2 bzw. 21 berechnet aus den vorgegebenen Giermomenten $MG_{GMR}$ bzw. $MG_{SESP}$ und aus dem gewünschten Fahrerbremsdruck Giermomentregelbremsdrücke $p_{GMR}$ bzw. $P_{SESP}$ für die Radbremsen, welche individuell für die einzelnen Räder sehr unterschiedlich sein können. Diese Giermomentregelbremsdrücke $P_{GMR}$ bzw. $P_{SESP}$ werden genauso wie die von den übrigen Reglern 7, 8 und 9 für ABS, ASR und EBV zur Funktionsoptimierung berechneten Druckvorgaben einer Prioritätsschaltung 3 für die Radbremsdrücke zugeführt. Diese Prioritätsschaltung 3 ermittelt unter Berücksichtigung des Fahrerwunsches Sollraddrücke $p_{soll}$ für eine optimale Fahrstabilität bzw. für ein optimales Fahrverhalten. Diese Solldrücke können entweder den Druckvorgaben eines einzelnen dieser fünf Regler entsprechen oder aber eine Überlagerung darstellen.

Ähnlich wie mit den Radbremsdrücken wird mit dem Motormoment verfahren. Während ABS und EBV nur auf die Radbremsen einwirken, ist bei SESP, GMR und ASR auch ein Eingriff in das Motormoment vorgesehen. Die im SESP-Regler 20, im GMR-Regler. 10 und im ASR-Regler 8 separat berechneten Vorgaben $MM_{SESP}$, $MM_{StellM}$ und $M_{ASR}$ für das Motormoment werden wieder in einer Prioritätsschaltung 4 ausgewertet und zu einem Sollmoment überlagert. Dieses Sollmoment $M_{Soll}$ kann jedoch genausogut nur der berechneten Vorgabe eines der drei Regler entsprechen.

Anhand der berechneten Soll-Vorgaben für den Radbremsdruck $p_{Soll}$ und für das Motormoment $M_{Soll}$ kann nun eine Fahrstabilitätsregelung und/oder eine Verbesserung des Fahrverhaltens durch Bremsen- und Motoreingriff vorgenommen werden. In die Drucksteuerung 5 fließen dazu noch Hydrauliksignale oder Werte ein, die den tatsächlichen Radbremsdruck wiedergeben. Die Drucksteuerung 5 erzeugt hieraus Ventilsignale, die an die Regelventile der einzelnen Radbremsen im Fahrzeug 1 abgegeben werden. Das Motormanagement 6 steuert nach Maßgabe von $M_{Soll}$, den Antriebsmotor des Fahrzeugs, wodurch wiederum eine geändertes Motoristmoment erzeugt wird. Hieraus ergeben sich dann jeweils wieder neue Eingangsgrößen für die fünf elektronischen Regler 7, 8, 9 10 und 20 der FSR-Anlage.

2. Struktur des Giermomentreglers (GMR) mit dem sensitiven Giermomentregler (SESP)

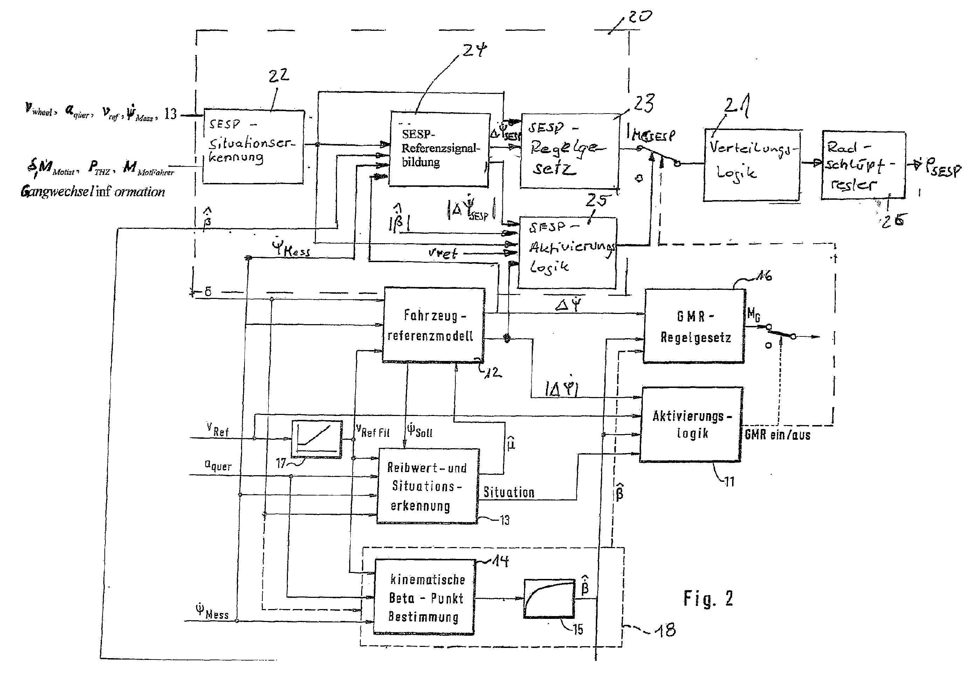

Fig. 2 zeigt in einem Blockschaltbild, wie innerhalb des GMR-Reglers 10 und dem sensitiven Giermomentregler 20 die Zusatzgiermomente $M_G$ und $MG_{SESP}$ für die Verteilungslogik 2 und 21 ermittelt werden. Hierzu fließen als Eingangsgrößen der Lenkwinkel $\delta$, die Fahrzeugreferenzgeschwindigkeit $v_{Ref}$ aus dem ABS-Regler 7, die gemessene Querbeschleunigung $a_{quer}$ sowie die gemessene Gierwinkelgeschwindigkeit $\dot{\psi}_{Mess}$ ein. Die Fahrzeugreferenzgeschwindigkeit vRef durchläuft einen Filter 17, welcher bei niedrigen Geschwindigkeiten einen konstanten Wert oberhalb Null ansetzt, damit bei weiteren Rechnungen der Nenner eines Bruchs nicht gleich Null wird. Der gefilterte Wert von $v_{Ref}$ wird einer SESP-Situationserkennung 22 und einer Aktivierungslogik 25 und der ungefilterte Wert einer Aktivierungslogik 11 zugeführt, welche Fahrzeugstillstand erkennt.

Diese direkte Erfassung der Fahrzeugreferenzgeschwindigkeit $v_{Ref}$ durch die Aktivierungslogik 11 kann auch wegfallen, wenn angenommen wird, daß Fahrzeugstillstand vorliegt, wenn die gefilterte Fahrzeugreferenzgeschwindigkeit $v_{RefFil}$ ihren konstanten Minimalwert einnimmt.

Im GMR-Regler ist ein Fahrzeugreferenzmodell 12 abgelegt, welches anhand des Lenkkwinkels $\delta$, der gefilterten Fahrzeugreferenzgeschwindigkeit vRefFil sowie der gemessenen Gierwinkelgeschwindigkeit $\dot{\psi}_{Mess}$ eine Vorgabe für eine Änderung der Gierwinkelgeschwindigkeit $\Delta\dot{\psi}$ berechnet.

Um die Vorgaben im physikalisch möglichen Rahmen zu halten, wird zu diesen Rechnungen auch der Fahrbahnreibwert $\mu$ benötigt, der in einer Reibwert- und Situationserkennung 13 als Schätzwert $\hat{\mu}$ berechnet wird. Bei hinreichender Genauigkeit des im Rahmen der Antiblockierregelung ermittelten Reibwertes kann auch letzterer verwendet werden. Oder aber im ABS-Regler 7 wird der im GMR-Regler 10 berechnete Reibwert übernommen.

Die Reibwert- und Situationserkennung 13 verwendet für ihre Rechnungen die gefilterte Referenzgeschwindigkeit $v_{RefFil}$, die gemessene Fahrzeugquerbeschleunigung $a_{quer}$, die gemessene Gierwinkelgeschwindigkeit $\dot{\psi}_{Mess}$, sowie den Lenkwinkel $\delta$. Die Situationserkennung 13 unterscheidet verschiedene Fälle wie Geradeausfahrt, Kurvenfahrt, Rückwärtsfahrt und Fahrzeugstillstand. Fahrzeugstillstand wird dann angenommen, wenn die gefilterte Fahrzeugreferenzgeschwindigkeit $v_{RefFil}$ ihren konstanten Minimalwert einnimmt. Anstelle der ungefilterten Fahrzeugreferenzgeschwindigkeit kann also auch diese Information zur Erkennung eines Fahrzeugstillstandes der Aktivierungslogik 11 zugeführt werden. Zur Erkennung der Rückwärtsfahrt wird ausgenutzt, daß bei gegebenem Lenkwinkel $\delta$ die Gierwin-

kelgeschwindigkeit $\dot{\psi}$ entgegengesetzt orientiert ist wie bei Vorwärtsfahrt. Hierzu wird die gemessene Gierwinkelgeschwindigkeit $\dot{\psi}_{Mess}$ mit der vom Fahrzeugreferenzmodell 12 vorgegebenen Soll-Giergeschwindigkeit $\dot{\psi}_{soll}$ verglichen. Wenn die Vorzeichen stets entgegengesetzt sind und dies auch für die zeitlichen Ableitungen der beiden Kurven gilt, so liegt eine Rückwärtsfahrt vor, da $\dot{\psi}_{soll}$ stets für Vorwärtsfahrt berechnet wird, weil gebräuchliche Drehzahlsensoren keine Information über die Raddrehrichtung erfassen.

Die Ausgangssignale der Reibwert- und Situationserkennung 13 werden der SESP-Situationserkennung 22 zugeführt, die anhand der erkannten Fahrsituationen des GMR-Reglers 10 und weiterer Informationen über den Fahrerwunsch ($\delta$, $M_{Motist}$, $P_{THZ}$, *Gangwechsel inf ormation*) und den aktuellen Fahrzustand (($v_{wheel}$, $\alpha_{quer}$, $v_{ref}$, $\dot{\psi}_{Mess}$, 13) ermittelt, ob eine potentielle Abweichung von dem vom Fahrer gewünschten Kurs (Drehzustand des Fahrzeugs um seine Hochachse, insbesondere Eindrehsituation) vorliegt. In die Fahrerwunscherkennung gehen dabei mindestens der Lenkwinkel $\delta$, die Motormomentanforderung $M_{Motist}$ und der Fahrerbremsdruck $P_{Fahrer}$ ein, während der Fahrzeugzustand aus mindestens $\dot{\psi}_{Mess}$, vwheel, aquer, $v_{REF}$ ermittelt wird. Durch die separate SESP-Situationserkennung 22 ist die Eindeutigkeit der erkannten Fahrsituation sichergestellt. Die Differenzierung zwischen mindestens den Zuständen Kurvenfahrt mit Lastwechsel 31, Kurvenfahrt mit Teilbremsung 32, Geradeausfahrt mit Teilbremsung 33 und Geradeausfahrt mit Lastwechsel 34 ist notwendig, um das Programm 23 zur Umsetzung des SESP-Giermomentregelgesetzes optimal an die aktuelle Fahrsituation anpassen zu können. Parallel wird ständig anhand von Bedingungen, z.B. des GMR-Zustands, ABS-Zustands, Fahrbahnquerneigung, Fahrzeuggeschwindigkeit überprüft, ob SESP-Eingriffe erlaubt sind. Bei negativem Ergebnis wird sofort der Zustand 35 (Fig. 30) "SESP inaktiv" zugewiesen. Manche Eindrehursachen des Fahrzeugs, wie z.B. Lastwechsel, haben von Natur aus nur eine zeitlich begrenzte Wirkung auf das Fahrzeugverhalten. In diesen Fällen wird der betreffende Zustand in der SESP-Fahrsituationserkennung nach einer bestimmten Zeit wieder verlassen. Die zeitliche Begrenzung solcher Zustände erlaubt es dem Fahrer langsame Eindrehvorgänge nach einer gewissen "Anpassungszeit" selbst zu korrigieren.

Der in der Fahrsituationserkennung 22 erkannte Zustand löst die Aktivierung des SESP-Regelgesetzes 23 aus und führt zu einer optimalen Anpassung der Parameter (z.B. der Regelschwellen) an die aktuelle Fahrsituation. Die Fahrsituationserkennung 22 wertet hierzu der Fahrzeugreaktion vorgelagerte Ursachen, wie $P_{THZ}$, Gangwechselinformation, Motormoment-Information, aus, so daß das empfindliche SESP-Regelgesetz 23 früh aktiviert wird. Neben der Beeinflussung der SESP-Reglerparameter hat die Fahrsituationserkennung 22 auch die Aufgabe, der Referenzsignalbildung 24 anzuzeigen, wann der Offset für die Offsetkorrektur der Referenzgrößen gespeichert werden soll. Dies geschieht ebenfalls schon bei Erkennen einer möglichen Ursache für eine Eindrehsituation des Fahrzeugs 1.

Schließlich wird anhand der gefilterten Fahrzeugreferenzgeschwindigkeit $V_{RefFi1}$, der gemessenen Fahrzeugquerbeschleunigung $a_{quer}$ sowie der gemessenen Gierwinkelgeschwindigkeit $\dot{\psi}_{Mess}$ in dem GMR-Regler 10 eine kinematische Schwimmwinkel-Geschwindigkeitsbestimmung, kurz kinematische $\dot{\beta}$-Bestimmung 14 vorgenommen.

Um bei starken Schwimmwinkeländerungen Spitzen abzuschneiden, durchläuft der berechnete Wert der Schwimmwinkelgeschwindigkeit einen Tiefpaß 15 erster Ordnung, welcher einen Schätzwert $\dot{\beta}$ für die Schwimmwinkelgeschwindigkeit an die Aktivierungslogik 11 und ggf. an die SESP- Aktivierungslogik 25, an ein Programm 16 zur Umsetzung des Giermomentregelgesetzes und an die SESP-Referenzsignalbildung 24 weitergibt. Das Programm 16 und SESP-Referenzsignalbildung 24 verwenden außerdem die Änderungsvorgaben $\Delta\dot{\psi}$ für die Gierwinkelgeschwindigkeit, welche sich als die Differenz aus der gemessenen Gierwinkelgeschwindigkeit $\dot{\psi}_{Mess}$ und der anhand des Fahrzeugreferenzmodells 12 berechneten Soll-Gierwinkelgeschwindigkeit $\dot{\psi}_{soll}$ darstellt. Hieraus wird das zusätzliche Giermoment $M_G$ für das Fahrzeug ermittelt, welches über die Bremsdrücke vermittelt werden soll.

Das Programm 16 und SESP-Regler 20 arbeiten permanent, um stets aktuelle Regelgrößen parat zu haben. Ob diese Stellmomente allerdings an die in den Figuren 1 und 2 dargestellten Verteilungslogiken 2, 21 weitergegeben werden, hängt von den Aktivierungslogiken 11, 25 ab.

Die Aktivierungslogik 11 des GMR Reglers 10 empfängt nicht nur den Wert der ungef ilterten Fahrzeugreferenzgeschwindigkeit $v_{Ref}$ und wie beschrieben den der Schwimmwinkelgeschwindigkeit $\hat{\dot{\beta}}$, sondern auch betragsmäßig die Abweichung $|\Delta\dot{\psi}|$ der Soll-Gierwinkelgeschwindigkeit $\dot{\psi}_{soll}$ von der gemessenen Gierwinkelgeschwindigkeit $\dot{\psi}_{Mes}$ sowie eine Information aus der Situationserkennung 13, wenn Rückwärtsfahrt vorliegt.

Befindet sich das Fahrzeug in Rückwärtsfahrt, so wird die Übertragung vom $M_G$ unterbrochen. Dasselbe gilt, wenn Fahrzeugstillstand erkannt wird oder wenn weder die geschätzte Schwimmwinkelgeschwindigkeit $\hat{\dot{\beta}}$ noch die Vorgabe für die Gierwinkelgeschwindigkeitsänderung $\Delta\dot{\psi}$ einen Betrag erreichen, der eine Regelung erforderlich macht. Die logische Schaltung zur Berechnung des Motorstellmoments $M_{StellM}$ ist nicht dargestellt.

Die Aktivierungslogik 25 des SESP-Reglers 20 empfängt nicht nur den Wert der SESP-Referenzsignalbildung 24 und der Aktivierungslogik 11, sondern auch die Abweichung $\left|\hat{\dot{\beta}}\right|$ und/oder $|\Delta\dot{\psi}_{SESP}|$ der SollGierwinkelgeschwin-

digkeit $\dot{\psi}_{soll}$ von der gemessenen Gierwinkelgeschwindigkeit $\dot{\psi}_{Mess}$ sowie eine Information der SESP-Situationserkennung 22, wenn einer der SESP-Zustände Kurvenfahrt mit Lastwechsel, Kurvenfahrt mit Teilbremsung, Geradeausfahrt mit Teilbremsung und Geradeausfahrt mit Lastwechsel vorliegt oder erwartet wird.

Befindet sich das Fahrzeug nicht in einem der ermittelten Zustände oder werden diese Zustände von Zuständen des GMR-Reglers 10 oder des ABS-Reglers 7, des ASR-Reglers 8 unter Einhaltung bestimmter Bedingungen überlagert , so wird die Übertragung vom $MG_{SSEP}$ unterbrochen. Dasselbe gilt, wenn Fährzeugstillstand erkannt wird oder wenn weder die geschätzte Schwimmwinkelgeschwindigkeit $\hat{\dot{\beta}}$ noch die Vorgabe für die Gierwinkelgeschwindigkeitsänderung $\Delta\dot{\psi}_{SESP}$ einen Wert erreichen, der eine Regelung erforderlich macht. Die logische Schaltung zur Berechnung des Motorstellmoments $M_{SESPStellM}$ ist nicht dargestellt.

2.1 Reibwert- und Situationserkennung des GMR-Reglers 10

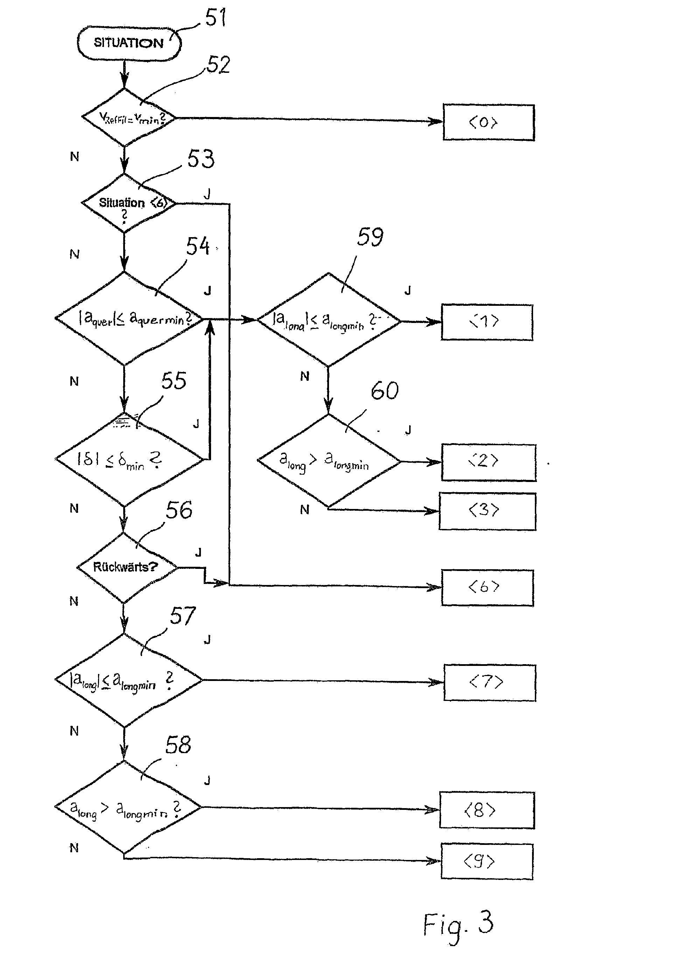

In Fig. 3, 4 und 5 sind in Form von Flußdiagrammen die logischen Abläufe bei der Reibwert- und Situationserkennung 13 dargestellt.

Fig. 3 hat die Situationserkennung zum Gegenstand. Mit dem gezeigten Ablauf können acht verschiedene Fahrsituationen unterschieden werden:

<0> Fahrzeugstillstand

<1> konstante Geradeausfahrt

<2> beschleunigte Geradeausfahrt

<3> verzögerte Geradeausfahrt

<6> Rückwärtsfahrt

<7> konstante Kurvenfahrt

<8> beschleunigte Kurvenfahrt

<9> verzögerte Kurvenfahrt

Logische Verzweigungen sind im Flußdiagramm als Rauten dargestellt.

Ausgehend von einer gegebenen, zu bestimmenden Situation 51 wird zunächst in Raute 52 festgestellt, ob ein Fahrzeugstillstand vorliegt oder nicht. Nimmt die gefilterte Fahrzeugreferenzgeschwindigkeit $v_{RefFil}$ ihren Minimalwert $v_{min}$ ein, so wird ein Fährzeugstillstand, also Situation <0> angenommen. Liegt $V_{RefFil}$ über $v_{min}$, so wird in Raute 53 das Ergebnis des vorhergehenden Durchlaufs der Situationserkennung abgefragt.

Wenn die zuvor festgestellte Situation auf Rückwärtsfahrt, also auf Situation <6> erkannt wurde, so liegt auch weiterhin Rückwärtsfahrt vor, da zwischenzeitlich kein Fahrzeugstillstand eingetreten ist. Sonst wäre nämlich in Raute 52 zwischenzeitlich Situation <0> erkannt worden.

Hat der vorhergehende Durchlauf der Situationserkennung eine andere Situation als Situation <6> ergeben, so wird in Raute 54 die betragsmäßig Größe der Querbeschleunigung $a_{quer}$ abgefragt. Ist diese kleiner als ein bestimmter Schwellenwert $aq_{uermin}$, so wird angenommen, daß das Fahrzeug geradeaus fährt, daß also eine der Situationen <1> bis <3> vorherrscht.

Dasselbe gilt, wenn zwar die gemessene Querbeschleunigung $a_{quer}$ betragsmäßig über dem Schwellenwert $a_{quermin}$ liegt, jedoch in Raute 55 im nächsten Schritt erkannt wird, daß der Lenkwinkel $\delta$ betragsmäßig kleiner ist als ein Schwellenwert $\delta_{min}$. Dann handelt es sich nämlich bei der gemessenen Querbeschleunigung $a_{quer}$ um einen Meßfehler, der daraus resultiert, daß Querbeschleunigungsmesser üblicherweise fest in der Fahrzeugquerachse montiert sind und sich bei seitlicher Fahrbahnneigung mit dem Fahrzeug neigen, so daß eine Querbeschleunigung angezeigt wird, die tatsächlich nicht vorliegt.

Befindet sich das Fahrzeug also in Geradeausfahrt, so wird in Raute 59 die Größe der Longitudinalbeschleunigung $a_{long}$ betrachtet. Ist diese betragsmäßig kleiner als ein Schwellenwert $a_{longmin}$, so wird konstante Geradeausfahrt angenommen. Ist die Longitudinalbeschleunigung $a_{long}$ betragsmäßig jedoch größer als dieser Schwellenwert, so unterscheidet Raute 60 zwischen positiver und negativer Longitudinalbeschleunigung. Liegt der Wert von $a_{long}$ oberhalb des Schwellenwertes $a_{longmin}$, dann befindet sich das Fahrzeug in beschleunigter Geradeausfahrt, also der Situation <2>. Liegt der Wert von $a_{long}$ unter dem Schwellenwert $a_{longmint}$ so bedeutet dies nichts anderes, als daß negative Longitudinalbeschleunigung vorliegt, also eine verzögerte Geradeausfahrt, die Situation <3>.

Liegt keine der Situationen <0> bis <3> vor und wird in Raute 55 betragsmäßig ein Lenkwinkel $\delta$ erkannt, der größer ist als der Schwellenwert $\delta_{min}$, so wird in Raute 56 abgefragt, ob das Fahrzeug inzwischen rückwärts fährt. Die Erkennung einer Rückwärtsfahrt ist erst an dieser Stelle notwendig, da bei Geradeausfahrt die Gierwinkelgeschwindigkeit $\dot{\psi}$ sich ohnehin kaum von Null unterscheidet und somit ein Regeleingriff nicht vorgenommen wird. Erst bei Erkennung einer Kurvenfahrt, bei welcher die Giermomentregelung an sich aktiv wird, muß eine Rückwärtsfahrt mit Sicherheit ausgeschlossen werden. Dies ist allein aufgrund der Signale der Raddrehzahlsensoren nicht möglich, da solche Sensoren die Geschwindigkeit nur betragsmäßig weitergeben, ohne Rückschlüsse auf die Fahrtrichtung zuzulassen.

Die Situation <6> wird, wie schon zuvor beschrieben, ermittelt, indem die gemessene Gierwinkelgeschwindigkeit $\dot{\psi}_{Mess}$ mit der im Fahrzeugreferenzmodell 12 ermittelten Soll-Gierwinkelgeschwindigkeit $\dot{\psi}_{soll}$ verglichen wird. Sind die Vorzeichen entgegengesetzt und gilt dies auch für die zeitlichen Ableitungen der beiden Größen, die Gierwinkelbeschleunigungen

$\ddot{\psi}_{Mess}$ und $\dot{\psi}_{Mess}$ so befindet sich das Fahrzeug in einer rückwärts durchfahrenen Kurve. Die Vorzeichen der Gierwinkelbeschleunigungen werden deshalb verglichen, damit ausgeschlossen werden kann, daß die entgegengesetzten Vorzeichen der Gierwinkelgeschwindigkeiten nicht nur aus einer Phasenverschiebung herrühren, die durch die zeitlich verzögerte Berechnung der Soll-Werte bedingt ist.

Sind die Bedingungen für eine Rückwärtsfahrt nicht erfüllt, so liegt eine Kurvenfahrt in Vorwärtsrichtung vor. Ob diese Kurvenfahrt, mit konstanter Geschwindigkeit erfolgt oder nicht, wird in Raute 57 untersucht. Wie schon zuvor bei der Geradeausfahrt in Raute 59 und 60 wird in Raute 57 zunächst der Betrag der Longitudinalbeschleunigung $a_{long}$ betrachtet. Ist er kleiner als der Schwellwert $a_{longmin}$, so liegt eine konstante Kurvenfahrt vor, Situation <7>. Bei einer Longitudinalbeschleunigung $a_{long}$, die betragsmäßig größer ist als der Schwellenwert $a_{longmin}$ wird weiter in Raute 58 untersucht, ob die Longitudinalbeschleunigung $a_{long}$ positiv oder negativ ist. Bei positiver Longitudinalbeschleunigung $a_{long}$ befindet sich das Fahrzeug in einer beschleunigten Kurvenfahrt, also Situation <8>, während bei negativer Longitudinalbeschleunigung $a_{long}$ eine verzögerte Kurvenfahrt erkannt wird, entsprechend Situation <9>,

Die Longitudinalbeschleunigung $a_{long}$ kann auf verschiedene Weise ermittelt werden. Sie kann beispielsweise aus der vom ABS-Regler 7 bereitgestellten Referenzgeschwindigkeit $v_{Ref}$ bestimmt werden, wobei zu berücksichtigen ist, daß eine solche Referenzgeschwindigkeit $v_{Ref}$ während eines ABS-Eingriffs von der tatsächlichen Fahrzeuggeschwindigkeit abweichen kann. Für einen ABS-Fall ist also eine Korrektur von $v_{Ref}$ angebracht. Die Longitudinalbeschleunigung $a_{long}$ kann aber unter Umständen auch direkt aus dem ABS-Regler übernommen werden, wenn dort eine derartige Berechnung stattfindet.

Die Situationserkennung nach Fig. 3 wird ständig aufs Neue durchfahren, wobei die zuletzt ermittelte Situation gespeichert bleibt und in Raute 53 zur Verfügung steht.

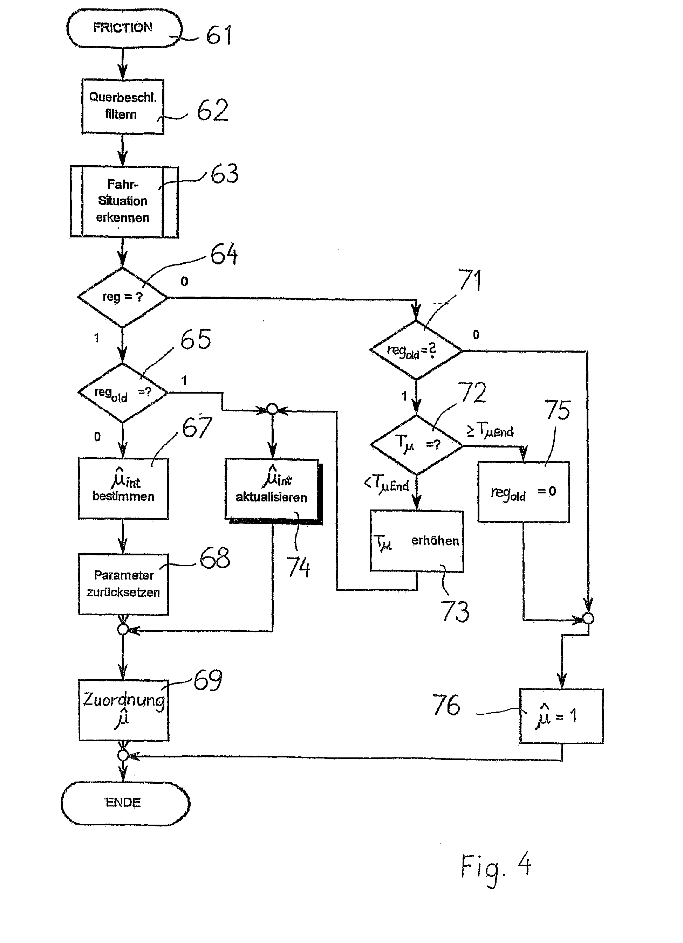

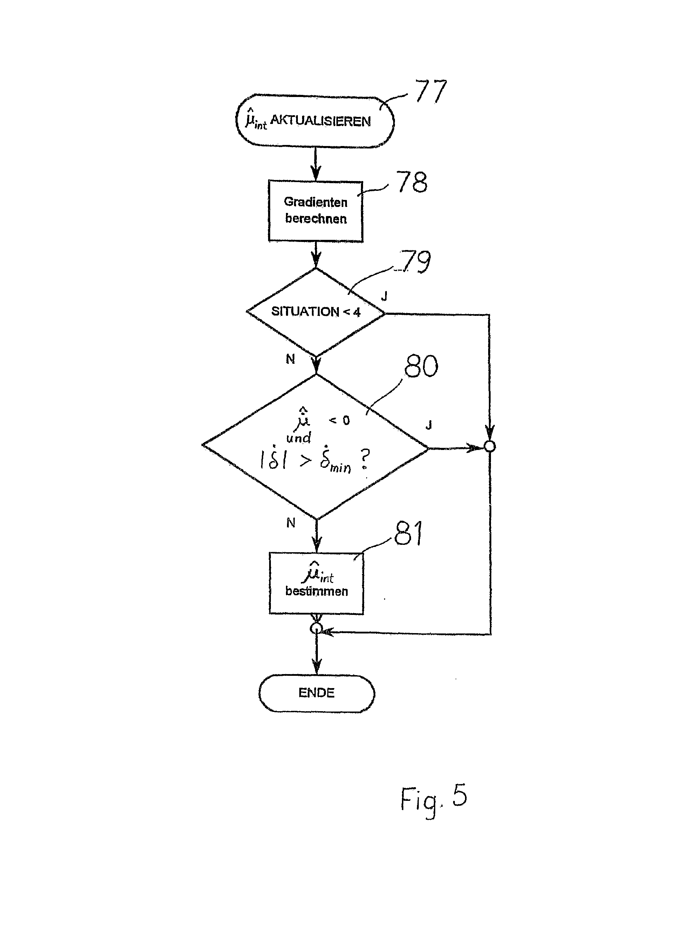

Ein möglicher Ablauf zur Reibwertbestimmung der Fahrbahn ist in Fig. 4 und 5 dargestellt. Eine Reibwertbestimmung erfolgt danach nur dann, wenn der Giermomentregler in die Regelung eintritt. Da bei Regeleintritt aber zunächst noch kein abgeschätzter Reibwert vorhanden ist, wird zu Beginn der Regelung der Reibwert $\mu = 1$ gesetzt.

Spricht die Giermomentregelung aufgrund einer augenblicklichen Fahrsituation an, so ist davon auszugehen, daß sich das Fahrzeug zumindest in der Nähe des Grenzbereiches zu instabilen Fahrsituationen befindet. Somit kann durch eine Betrachtung der aktuellen Meßgrößen am Fahrzeug auf den momentanen Fahrbahnreibwert geschlossen werden. Der dann beim Eintritt in die Regelung ermittelte Reibwert bietet im weiteren Verlauf die Basis für die Begrenzung der Sollgierwinkelgeschwindigkeit $\dot{\psi}_{soll}$ und somit auch für die an das GMR-Regelgesetz 16 weitergegeben Regeldifferenz für die GierWinkelgeschwindigkeit $\Delta\dot{\psi}$. Die Bestimmung des Reibwerts erfolgt erstmals bei Eintritt in die Regelung, verbunden mit einer sich anschließenden Aktualisierungsphase für die Begrenzung der Soll-Gierwinkelgeschwindigkeit auf physikalisch sinnvolle Werte. Dabei wird - ausgehend vom ursprünglich vorgegebenen Reibwert $\mu = 1$ - beim Regelungseintritt ein maximaler Reibwert $\hat{\mu}$ bestimmt, der dann der Berechnung des Zusatzgiermomentes $M_G$ zugrundegelegt wird.

Dazu wird zunächst ein interner Reibwert $\hat{\mu}_{int}$ aus der gemessenen Querbeschleunigung $a_{quer}$ und einem berechneten Wert für die Längsbeschleunigung $a_{long}$ berechnet, der unter der Annahme, daß eine vollständige Kraftschlußausnutzung vorliegt, dem momentanen Reibwert entspricht . Da aber davon ausgegangen werden muß, daß beim Regelungseintritt der maximale Kraftschluß noch nicht erreicht ist, wird dem internen Reibwert $\hat{\mu}_{int}$ mittels einer Tabelle, einer Kennlinie oder eines konstanten Faktors ein höhere Reibwert $\hat{\mu}$ zugeordnet. Dieser Reibwert $\hat{\mu}$ wird dann der Regelung zugeführt. Somit ist es möglich, im nächsten Rechenschritt mit einer an den Fahrtbahnreibwert angepaßten Soll-Gierwinkelgeschwindigkeit $\dot{\psi}_{soll}$ zur rechnen und die Regelung zu verbessern. Auch während die Giermomentregelung auf das Fahrzeug einwirkt, muß der geschätzte Reibwert $\hat{\mu}$ weiter aktualisiert werden, da sich während der Regelung eine Reibwertänderung einstellen könnte. Falls die Regelung aufgrund der Anpassung des Reibwertes im Fahrzeugreferenzmodell durch die resultierende veränderte Regeldifferenz der Gierwinkelgeschwindigkeit $\Delta\dot{\psi}$ nicht aktiviert wird, wird der Reibwert $\hat{\mu}$ bis zu einer Zahl $T_{\mu End}$ von Schritten weiter aktualisiert. Wenn auch innerhalb dieser Aktualisierungsphase die Giermomentregelung nicht einsetzt, so wird der geschätzte Reibwert $\hat{\mu}$ auf 1 zurückgesetzt.

Eine Anpassung bzw. Aktualisierung des geschätzten Reibwertes $\hat{\mu}$ kann in bestimmten Situationen auch ausbleiben. Derartige Situationen sind beispielsweise Geradeausfahrt, Rückwärtsfahrt oder Fahrzeugstillstand, also die Situationen <0> bis <4>. Dies sind Situationen, in denen ohnehin keine Giermomentregelung vorgenommen wird, so daß auch eine Reibwertabschätzung unnötig ist. Eine Aktualisierung des Reibwertes kann dann unterbleiben, wenn die zeitliche Ableitung des Reibwertes $\hat{\mu}$ also $\dot{\hat{\mu}}$ negativ ist und der Betrag der zeitlichen Ableitung des Lenkwinkels $\delta$, also $\Box\dot{\delta}\Box$ eine vorgegebene Schwelle überschreitet. Im letzteren Fall kann davon ausgegangen werden, daß eine Änderung in der Querbeschleunigung $a_{quer}$ auf einer Änderung des Lenkwinkels $\delta$ beruht und nicht etwa auf einer Reibwertänderung.

Generell gilt für den auf diese Weise berechneten Reibwert, daß es sich um einen mittleren Reibwert für alle vier Fahrzeugräder handelt . Radindividuell kann auf diese Weise der Reibwert nicht bestimmt werden.

Das Verfahren der Reibwertbestimmung wird nun anhand von Fig. 4 erläutert. In jeder Fahrsituation fließt in das Fahrzeugverhalten der vorherrschende Fahrbahnreibwert nach Feld 61 ein. Zur Bestimmung des zugehörigen Reibwertes wird zunächst die gemessene Querbeschleunigung $a_{quer}$ gemäß Schritt 62 gefiltert. Das heißt, daß die gemessenen Werte entweder geglättet werden oder aber die Kurve einen Tiefpaß durchläuft, so daß keine extremen Spitzen auftreten. Schritt 63 umfaßt die Situationserkennung nach Fig. 3. Die erkannte Fahrsituation ist später für die Aktualisierungsphase in Schritt 74 von Bedeutung. In Raute 64 wird abgefragt, ob die Notwendigkeit eines Regeleingriffes gegeben ist. Einer solchen Rechnung wird zunächst der Anfangsreibwert $\mu$ = 1 zugrundegelegt. Wird eine Regelung für notwendig erachtet, so wird in Raute 65 abgefragt, ob dies auch der Zustand bei Ende des vorherigen Durchlaufs der Reibwertbestimmung war. Für den Fall, daß es sich hier um einen Regelungeintritt handelt, hat es zuvor keine Erkennung auf Regelung ergeben, so daß folglich in Schritt 67 ein interner Reibwert $\hat{\mu}_{int}$ erstmals bestimmt wird. Seine Berechnung erfolgt anhand folgender Gleichung:

F 2.1

$$\hat{\mu}_{int} = \frac{\sqrt{a_{quer}^2 + a_{long}^2}}{g}$$

Dabei ist g die Gravitationskonstante g = 9,81 m/s$^2$.

Als nächstes wird in Schritt 68 der Parameter $reg_{old}$ für Schritt 65 auf 1 gesetzt, Außerdem wird der Zählparameter $T_\mu$ auf 1 gesetzt entsprechend der Tatsache, daß die erste Reibwertbestimmung des internen Reibwertes $\hat{\mu}_{int}$ erfolgt ist. In Schritt 69 erfolgt eine Zuordnung eines geschätzten Reibwertes $\hat{\mu}$ zum berechneten internen Reibwert $\hat{\mu}_{int}$. Dies geschieht unter der Annahme, daß die existierenden Beschleunigungskomponenten noch nicht auf einer vollen Kraftschlußausnut zung beruhen. Der geschätzte Reibwert $\hat{\mu}$ liegt also in der Regel zwischen dem ermittelten internen Reibwert $\hat{\mu}_{int}$ und 1. Damit ist die Reibwertbestimmung abgeschlossen.

Beim nächsten Durchlauf dieser Reibwertbestimmung wird also - unveränderte Fahrsituation vorausgesetzt - in Raute 65 auf $reg_{old}$ = 1 entschieden. Auch hier wird im weiteren Verlauf dann ein $\hat{\mu}_{int}$ bestimmt, welches an die Stelle des im vorhergehenden Durchlauf bestimmten $\hat{\mu}_{int}$ tritt. Eine Aktualisierung der- in Feld 68 bestimmten Parameter erfolgt nicht, da die Aktualisierung von $\hat{\mu}_{int}$ während einer Regelung erfolgt ist. Schon im Durchlauf zuvor war $reg_{old}$ auf 1 gesetzt worden und bleibt unverändert Die Zahl $T_\mu$ der durchgeführten Durchläufe bleibt weiterhin 1, da sie nur dann weitergezählt wird, wenn keine Regelung stattfindet. Auch dem aktualisierten Wert für $\hat{\mu}_{int}$ wird dann - wie schon zuvor beschrieben - mittels einer Tabelle, einer nicht linearen Relation oder aber eines konstanten Faktors ein geschätzter Reibwert $\hat{\mu}$ zugeordnet.

Wird in einem Durchlauf in Raute 64 festgestellt, daß eine Regelung nicht erforderlich ist, so wird weiter in Raute 71 abgefragt, ob der Parameter $reg_{old}$ für die Regelung zuletzt auf 0 oder 1 gesetzt wurde. Ist er im letzten Durchlauf auf 1. gesetzt worden, so wird in Raute 72 die Zahl $T_\mu$ der Durchläufe abgefragt. Dieses $T_\mu$ beträgt 1, wenn im letzten Durchlauf eine Regelung erfolgt ist. Wurde eine Regelung nur im vorletzten Durchlauf vorgenommen, so ist $T_\mu$ = 2 und so weiter. Solange das $T_\mu$ im Schritt 72 ein bestimmtes $T_{\mu End}$ noch nicht erreicht hat, wird es im Schritt 73 um 1 erhöht und in Schritt 74 eine erneute Aktualisierung des internen Reibwertes $\hat{\mu}_{int}$ vorgenommen. Wenn dann in einem der folgenden Durchläufe die Zahl $T_{\mu End}$ erreicht wird, ohne daß eine Regelung stattgefunden hat, so wird der Parameter $reg_{old}$ für die Regelung wieder auf 0 zurückgesetzt (75). Der geschätzte Reibwert $\hat{\mu}$ wird dem Ausgangsreibwert $\hat{\mu}$ = 1 gleichgesetzt. Damit ist die Aktualisierungsphase für den Reibwert $\mu$ beendet.

Wenn dann beim nächsten Durchlauf in Raute 64 wieder erkannt wird, daß keine Regelung erforderlich ist, so wird in Raute 71 mit $reg_{old}$ = 0 der Ausgangsreibwert $\hat{\mu}$ = 1 im Feld 76 beibehalten. Erst wenn in Raute 64 die Notwendigkeit eines Regeleingriffs erkannt wird, wird wieder eine Reibwertbestimmung vorgenommen .

Die Kriterien für eine Aktualisierung des internen Reibwerts $\hat{\mu}_{int}$ nach Schritt 74 sind in Fig. 5 dargestellt. Ausgehend von der Vorgabe im Feld 77, daß der interne Reibwert $\hat{\mu}_{int}$ zu aktualisieren ist, werden in Schritt 78 die zeitlichen Ableitungen der zuvor gebildeten geschätzten Reibwerte $\hat{\mu}$ oder $\hat{\mu}_{int}$ sowie des Lenkwinkels $\delta$ gebildet.

Wenn dann in Raute 79 erkannt wird, daß das Fahrzeug weder stillsteht noch geradeausfährt, daß also eine der Situationen <6> bis <9> vorliegt, so werden die Ergebnisse aus Schritt 78 in Schritt 80 ausgewertet. Nur dann, wenn - wie bereits zuvor erläutert - ein sinkender Reibwert nicht auf ein Lenkmanöver zurückzuführen ist, wird eine Reibwert- bestimmung vorgenommen. Keine Reibwertaktualisierung erfolgt, wenn entweder das Fahrzeug sich bei einer Geradeausfahrt - vorwärts oder rückwärts - oder im Fahrzeugstillstand befindet oder aber ein Absinken des geschätzten Reib- wertes $\hat{\mu}$ auf ein Lenkmanöver zurückzuführen ist.

2.1.1 SESP-Situationserkennung

Die SESP-Situationserkennung 22 ist als Zustandsautomat aufgebaut. Der Zustandsautomat ermittelt den Zustand (die Fahrsituationen) des Fahrzeugs anhand der Menge der Attributswerte (Eingangssignale). Zustandsdiagramme zeigen an, bei welchem Ereignis das Fahrzeug von einem bestimmten Zustand in einen Nachbarzustand übergeht. Ein Nachfolgezustand hängt vom Ausgangszustand und vom eingetretenen Ereignis ab. Figur 30 zeigt beispielhaft die möglichen Zustände Kurvenfahrt mit Lastwechsel 31, Kurvenfahrt, mit Teilbremsung 32, Geradeausfahrt mit Teilbremsung 33 und Geradeausfahrt mit Lastwechsel 34 und die erlaubten Zustandsübergänge in der SESP- Situationserkennung

22. Durch die Verwendung eines Zustandsautomaten ist die Eindeutigkeit der erkannten Fahrsituation sichergestellt. Die Differenzierung zwischen mehreren Zuständen ist notwendig, um die Programme 23 zur Umsetzung des SESP-Giermomentregelgesetzes optimal an die aktuelle Fahrsituation anpassen zu können. In der SESP-Situationserkennung 22 werden alle Fahrsituationen, die für die Berechnung des SESP-Fahrsituation-Zustandes 31 bis 34 relevant sind, ermittelt. Die Situationserkennung 22 ermittelt hierzu die folgenden Fahrsituationen, die dann als Eingangsinformation in den Zustandsautomat 22.1 verwendet werden.

Stationäre Geradeausfahrt

Die SESP-Situationserkennung 22 stellt fest, ob der Fahrer geradeaus fahren möchte und verwendet dabei die durch die Reibwert- und Situationserkennung 13 erfasste Fahrsituation <1>, <2> und <3> und den Lenkwinkel $\delta$, d.h. die Lenkeingabe des Fahrers. Das Ergebnis wird im Flag

***Sesp_straight_ahead***

gespeichert.

Das Flag ***Sesp_straight_ahead*** wird auf True gesetzt, wenn alle folgenden Bedingungen erfüllt sind:

i. Die Fahrsituation aus 13 ist <1>, <2> oder <3>

ii. Der Betrag des Lenkwinkels $|\delta|$ < Schwellenwert k1

iii. Der Betrag der Lenkwinkelgeschwindigkeit $|\dot{\delta}|$ < Schwellenwert k2

Andernfalls wird das Flag ***Sesp_straight_ahead*** auf ***False*** gesetzt.

Stationäre Kurvenfahrt

Die SESP-Situationserkennung 22 stellt fest, ob der Fahrer eine Dauerkurve fahren möchte und verwendet dabei die von der Reibwert- und Situationserkennung 13 erfasste Fahrsituation <7>, <8> und<9>, die Querbeschleunigung, die Lenkeingabe des Fahrers $\delta$ sowie den in der Reibwert- und Situationserkennung 13 bzw. in dem GMR-Regler 10 aus $a_{quer}$ und $v_{ref}$ geschätzten Fahrbahnradius. Das Ergebnis wird im Flag

gespeichert.

Das Flag **Sesp_steady_curve** wird auf True gesetzt, wenn alle folgenden Bedingungen über eine vorgegebene Zeitdauer (Zähler) erfüllt sind:

iv. Die Fahrsituation aus 13 ist <7>, <8> oder <9>

v. Der geschätzte Kurvenradius (aus 10,13) < Schwellenwert k3

vi. Der Betrag der Lenkwinkelgeschwindigkeit $|\dot{\delta}|$ < Schwellenwert k4

Wenn eine der Bedingungen nicht erfüllt ist, wird das Flag **Sesp_steady_curve** auf **False** gesetzt; der Zähler wird auf 0 zurückgesetzt.

Betätigung der Bremsen möglich,

Die SESP-Situationserkennung 22 stellt fest, ob der Fahrer auf eine bestimmte Weise bremst, bei der das Risiko besteht, daß ein "Schiefziehen (Abweichung von der Sollbahn) " des Fahrzeugs eintritt, weil der Fahrer bremst, wobei die Information, ob der Fahrer in der bestimmten Weise bremst, mittels des Hauptzylinderdxucks $P_{THZ}$ und dessen Gradient ermittelt wird. Das Ergebnis wird im Flag

**Sesp_brake_pull_possible**

gespeichert.

Das Flag **Sesp_brake_pull_possible** wird auf **True** gesetzt, wenn alle folgenden Bedingungen verfüllt sind:

vii. Der GMR-Regler 10 erkennt eine Fahrerbremsung
viii. Der Fahrebremsdruck $P_{THZ}$ > Schwellenwert k5

Andernfalls wird das Flag **Sesp_brake_pull_possible** auf **False** gesetzt.

Eindrehen möglich, weil Fahrer bremst

Die SESP-Situationserkennung 22 stellt fest, ob eine Übersteuertendenz (Eindrehtendenz) in Kurven besteht, weil der Fahrer auf eine bestimmte Weise bremst, das ein Eindrehen des Fahrzeugs in die Kurve nach sich ziehen kann, wobei die Information, ob der Fahrer in der bestimmten Weise bremst, mittels des Hauptzylinderdrucks $P_{THZ}$ und dessen Gradient ermittelt wird. Das Ergebnis wird im Flag

**Sesp_brake_ov_possible**

gespeichert.

Das Flag **Sesp_brake_ov_possible** wird auf **True** gesetzt, wenn alle folgenden Bedingungen erfüllt sind:

ix. Der GMR-Regler 10 erkennt eine Fahrerbremsung
x. Der Gradient von $P_{Fahrer}$ > Schwellwert k6; die Bedingung x. wird innerhalb eines vorgegebenen Zeitfensters (Zeitraum) aufrecht erhalten, weil nach Erkennen eines Einbremsen durch den Fahrer noch während einer bestimmten Zeitrdauer die Möglichkeit besteht, daß das Fahrzeug in die Kurve eindreht.
xi. Der Fahrebremsdruck $P_{THZ}$ > Schwellenwert k7

Andernfalls wird das Flag **Sesp_brake_ov_possible** auf **False** gesetzt.

Übersteuerung durch Motorschleppmoment möglich

Die SESP-Situationserkennung 22 stellt fest, ob ein Motorschleppmoment bzw. Motorbremsmoment vorliegt, das zum Eindrehen in eine Kurve führten kann. Das Ergebnis wird im Flag **Sesp_drag_ov_possible** gespeichert.

Das Flag **Sesp_drag_ov_possible** wird auf **True** gesetzt, wenn die folgenden Bedingungen erfüllt sind:

xii. $M_{Motist}$ < Schwellenwert k8
und gleichzeitig eine der folgenden Bedingungen:
xiii. Summe der Radgeschwindigkeiten vwheel der nicht angetrieben Achse - Summe der Radgeschwindigkeiten vwheel der angetrieben Achse < Schwellenwert k9; das Signal der Geschwindigkeitsdifferenz der Radgeschwindigkeiten wird in einem Tiefpassfilter lter Ordnung gefilterte. Die Geschwindigkeitsdifferenz der Räder zeigt einen Lastwechsel an. oder
xiv. Gradient des Motormoments $M_{MotFahrer}$ < negativer Schwellenwert k10; die Bedingung xiv. muß innerhalb eines vorgegebenen Zeitfensters (Zeitraum) rückschauend erfüllt sein, wenn die Bedingung xii. aktuell ermittelt ist. oder
xv. Gangwechsel findet statt bzw. hat statt gefunden.

Andernfalls wird das Flag **Sesp_drag_ov_possible** nach einer vorgegebenen Zeit auf **False** gesetzt. Das zeitverzögerte Zurücksetzen des Flags erfolgt deshalb, weil die erkannten Lastwechsel sich noch während einer bestimmten Zeitdauer nach deren Ermittlung auf das Fahrverhalten des Fahrzeugs auswirken, und ein Eindrehen bewirken können.

Erkennung einer Eindrehtendenz

Die SESP-Situationserkennung 22 stellt fest, ob das Fahrzeug bei Geradeausfahrt oder Kurvenfahrt zum Eindrehen neigt, wobei die Gierrate und deren Beschleunigung verwendet werden.
Das Ergebnis wird im Flag
**Sesp_oversteer_tendency**
gespeichert.

Das Flag **Sesp_oversteer_tendency** wird auf True gesetzt, wenn alle folgenden Bedingungen erfüllt sind:

xvi. $\ddot{\psi}_{Mess}$(=Ableitung von $\dot{\psi}_{Mess}$) > Schwellenwert k11
xvii. Vorzeichen von $\dot{\psi}_{Mess}$ = dem Vorzeichen von $\ddot{\psi}_{Mess}$

Andernfalls wird das Flag **Sesp_oversteer.tendency** auf **False** gesetzt.

Diese Bedingungen sind für das SESP ausreichend, weil das SESP auf Situationen beschrankt ist, in denen der Fahrer eine nahezu gleichbleibende Gierrate wünscht. Es werden hier keine SESP-Referenzwerte verwendet, weil diese nicht immer zur Verfügung stehen.

**ABS an Hinterachse aktiv**

Die SESP-Situationserkennung 22 stellt fest, ob zumindest ein Rad der Hinterachse ABS-gesteuert wird. Das Ergebnis wird im Flag

**Sesp_abs_active_at_ra**

gespeichert .

Das Flag **Sesp_abs_active_at_ra** wird auf **True** gesetzt, wenn eine der folgenden Bedingungen erfüllt ist:

xviii. Rechtes Hinterrad ist ABS-gesteuert oder
xix. Linkes Hinterrad ist ABS-gesteuert

Andernfalls wird das Flag **Sesp_abs_active_at_ra** auf *False* gesetzt.

**SESP - Fahrzustand**

Die SESP-Situationserkennung 22 berechnet den SESP-Fahrsituationszustand **SESP_DRIVE_STATE.** Dies erfolgt in dem Zustandsautomaten 22.1 (Fig. 30), der die Ergebnisse der einzelnen, zuvor beschriebenen SESP-Erfassungen der Fahrsituationen und der SESP-Deaktivierungsregelung als Eingabe verwendet. **SESP_DRIVE_STATE** wird verwendet, um die SESP-Regelung an die Fahrsituation anzupassen.

Die folgenden Zustandsübergänge werden in Verbindung mit Figur 30 für **SESP_DRIVE_STATE** festgelegt: Übergang von Zustand 35 auf Zustand 33.
*Sesp_straight_braked :*

```
    Sesp_straight_ahead == True
  AND Sesp_brake_pull_posssible == True
  AND Abs_cycle == False
  AND Sesp_forbidden == False
```

Übergang von Zustand 35 auf Zustand 32 *Sesp_curve_braked :*

```
    Sesp_steady_curve == True
  AND Sesp_brake_ov_possible === True
  AND Sesp_oversteer_tendency == True
  AND Sesp_abs_active_at_ra == False
  AND Sesp_forbidden == False
```

Übergang von Zustand 35 auf Zustand 3.1
*Sesp_curve_drag_tq:*

```
Sesp_steady_curve() == True
  AND Sesp_drag_ov_possible() == True
  AND Sesp_oversteer_tendency() == True
  AND Ayc_driver_braking() == False
  AND Sesp_forbidden() == False
```

Übergang von Zustand 35 auf Zustand 34 Übergang von Zustand 33 auf Zustand 35 *Sesp_straight_brake Sesp_drive_idle :*

```
    Sesp_straight_ahead == False
```

```
  OR Abs_cycle == True
  OR Sesp_forbidden == True
  OR Sesp_in_cycle == False)
  AND (Sesp_brake_pull_possible == False))
```

Übergang von Zustand 32 auf Zustand 31 *Sesp_curve_braked Sesp_curve_drag_tq:*

```
      Sesp_in_cycle == True
  AND Sesp_steady_curve == True
  AND Sesp_drag_ov_possible == True
  AND Sesp_brake_ov_possible == False
  AND Ayc_driver_braking == False
  AND Sesp_forbidden == False
```

Übergang von Zustand 32 auf Zustand 35 *Sesp_drive_idle:*

```
      Sesp_steady_curve == False
  OR Sesp_brake_ov_possible == False
  OR Sesp_abs_active_at_ra == True
  OR Sesp_forbidden == True
  OR ((Sesp_in_cycle == False)
  AND (Sesp_oversteer_tendency == False))
```

Übergang von Zustand 31 auf Zustand 32 *Sesp_curve_drag_tq Sesp_curve_braked:*

```
      Sesp_in_cycle == True
  AND Sesps_teady_curve == True
  AND Sesp_brake_ov_possible == True
  AND Sesp_abs_active_at_ra == False
  AND Sesp_forbidden == False
```

Übergang von Zustand 31 auf Zustand 35 *Sesp_drive_idle :*

```
      Sesp_steady_curve == False
  OR Sesp_drag_ov_possible == False
  OR Sesp_forbidden == True
  OR (Sesp_in_cycle == False
  AND (Ayc_driver_braking == True
  OR Sesp_oversteer_tendency == False))
```

Außerhalb der SESP-Regelung geht ein Übergang immer über den Zustand **Sesp_drive_idle** 35. Innerhalb der SESP-Regelung gehen die Übergänge z.B. zwischen den beiden Zuständen **Sesp_curve_braked** 32 und **Sesp_curve_drag_tq** 31 (oder zwischen den Zuständen 34 und 33) nicht über den Zustand **Sesp_drive_idle** 35, wenn die Regelung im neuen Zustand fortgesetzt werden soll. Dadurch soll ein Zurücksetzen der SESP Referenz-Gierrate 24 vermieden werden.

Wenn die Bedingungen für die Zustände **Sesp_curve_braked** 32 und **Sesp_drag_tq** 31 gleichzeitig erfüllt sind, hat immer der Zustand mit Teilbremsung, z.B. **Sesp_curve_braked** 32, die höhere Priorität gegenüber dem Zustand mit Lastwechsel.

2.1.1.1 Gemeinsame Eingänge für alle SESP-Regler 20, 23

Die von dem GMR-Regler 10 durchgeführte Signalberechnung, die von den SESP-Reglern gemeinsam als Eingang verwendet werden.

Mindestreibung

Schätzt die Straßenreibung, wobei die Längsbeschleunigung des Fahrzeugs 1 und das von der Reibwert- und Situationserkennung 13 berechnete Reibsignal verwendet werden. Das Ergebnis wird in **SESP_MY_MIN** gespeichert.

In den meisten Situationen, die für die SESP-Regelung von Bedeutung sind, nutzt das Fahrzeug die vorhandene Straßenreibung nicht vollständig. Deshalb stellt **SESP_MY_MIN** nur den Teil der Straßenreibung dar, der normalerweise vom Fahrzeug 1 genutzt wird.

## 2.2 $\hat{\beta}$ und $\bar{\beta}$ -Bestimmung

Ein Maß für die Stabilität eines Fahrzustandes ist der vorherrschenden Schwimmwinkel β sowie dessen zeitliche Ableitung, die Schwimmwinkelgeschwindigkeit β̇. Die Bestimmung dieser Werte wird im folgenden erläutert.

### 2.2.1 kinematische β̇-Bestimmung

Die kinematische β̇-Bestimmung 14 beinhaltet nichts anderes, als daß - losgelöst von irgendwelchen Fahrzeugmodellen - die Schwimmwinkelgeschwindigkeit β̇ aus gemessenen bzw. aus anhand gemessener Werte berechneten Größten folgendermaßen nach rein physikalischen Betrachtungen ermittelt wird:

Die Beschleunigung $a_{quer}$ des Fahrzeugschwerpunktes quer zur Längsachse in der Bewegungsebene wird gemessen. Der Schwerpunkt des Fahrzeugs bewegt sich mit dem Geschwindigkeitsvektor $\underline{v}$ relativ zu einem Intertialsystem:

F 2.2

$$\underline{v} = v \begin{bmatrix} \cos(\Psi + \beta) \\ \sin(\Psi + \beta) \end{bmatrix}$$

Dabei bezeichnet ψ den Gierwinkel und β den Schwimmwinkel. Der Beschleunigungsvektor $\underline{a}$ ergibt sich als Ableitung nach der Zeit t zu:

F 2.3

$$\underline{a} = \frac{d}{dt} \underline{v} = \dot{v} \begin{bmatrix} \cos(\Psi + \beta) \\ \sin(\Psi + \beta) \end{bmatrix} + v(\dot{\Psi} + \dot{\beta}) \begin{bmatrix} -\sin(\Psi + \beta) \\ \cos(\Psi + \beta) \end{bmatrix}$$

Der Beschleunigungssensor mißt die Projektion des Beschleunigungsvektors auf die Querachse des Fahrzeugs:

F 2.4

$$a_{quer} = \underline{a}^T \begin{bmatrix} -\sin \Psi \\ \cos \Psi \end{bmatrix}$$

F 2.5

$$a_{quer} = \dot{v} \sin \beta + v(\dot{\Psi} + \dot{\beta}) \cos \beta$$

Nach einer Linearisierung der trigonometrischen Funktionen (sinβ=β; cosβ=1) kann man die Gleichung umformulieren zu

F 2.6

$$\dot{\beta} = \frac{a_{quer}}{v} - \dot{\Psi} - \frac{\dot{v}}{v}\beta$$

Die schwimmwinkelgeschwindigkeit $\dot{\beta}$ kann nun entsprechend der obigen Differentialgleichung berechnet werden. Als Meßgröße gehen neben der Querbeschleunigung $a_{quer}$ die Gierwinkel $\dot{v}$ geschwindigkeit $\dot{\psi}$, die skalare Fahrzeuggeschwindigkeit v und deren zeitliche Ableitung $\dot{v}$ ein. Zur Ermittlung von β kann das $\dot{\beta}$ der vorherigen Rechnung numerisch integriert werden, wobei für die erste $\dot{\beta}$-Bestimmung $\dot{v}$ = 0 angenommen wird. Eine Vereinfachung ergibt stich, wenn generell der letzte Term vernachlässigt wird, so daß kein β bestimmt werden muß.

Das vorgeschlagene Verfahren hat den Vorteil, daß die Schwimmwinkelgeschwindigkeit $\dot{\beta}$ direkt aus den Sensorsignalen hergeleitet ist und damit auch im nichtlinearen Bereich der Querdynamik ermittelt werden kann. Nachteilig wirken sich die Empfindlichkeit des Verfahren gegenüber Meßrauschen und das Aufintegrieren von Meßfehlern aus, wodurch eine Schwimmwinkelbestimmung möglicherweise sehr ungenau wird.

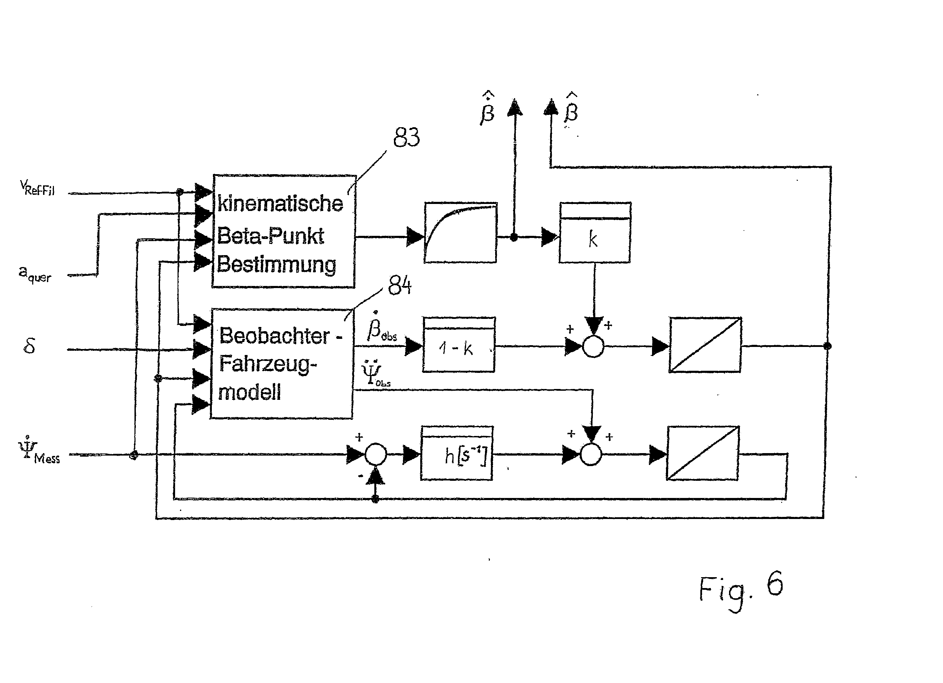

Diese Nachteile werden durch die Kombination mit einem modellgestützten Verfahren umgangen. Wie eine derartige Kombination von kinematischer und auf ein Beobachtermodell gestützter Bestimmung der Schwimmwinkelgeschwindigkeit $\dot{\beta}$ gestaltet sein kann, zeigt Fig. 6, die anstelle des gestrichelt eingezeichneten Blocks 18 in Fig. 2 einfügbar ist. In ein solches modellgestütztes Verfahren fließt zusätzlich noch als Eingangsgröße der Lenkwinkel δ ein, wie durch einen gestrichelten Pfeil angedeutet ist. Durch eine gegenseitige Beeinflussung und Korrektur der kombinierten Bestimmungsmethoden der Schwimmwinkelgeschwindigkeit $\tilde{\beta}$ wird auch eine weniger fehlerhafte Berechnung des Schwimmwinkels β selbst möglich, so daß dieser dann auch als $\hat{\beta}$ der Regelung zur Verfügung gestellt werden kann. Dies ist ebenfalls durch einen gestrichelten Pfeil angedeutet.

2.2.2 Kombination der kinematischen $\dot{\beta}$-Bestimmung mit einem Beobachterfahrzeugmodell

Mit der Darstellung nach Fig. 6 läßt sich der gestrichelt umrandete Bereich 18 aus Fig. 2 ersetzen. Damit wird es möglich, nicht nur die vorliegende Schwimmwinkelgeschwindigkeit $\dot{\beta}$, sondern auch den vorherrschenden Schwimmwinkel β zu bestimmen.

Im Gegensatz zu einer rein kinematischen Berechnung der Schwimmwinkelgeschwindigkeit $\tilde{\dot{\beta}}$ wird hier zusätzlich zur kinematischen $\dot{\beta}$-Bestimmung 83 ein Beobachterfahrzeugmodell 84 zur Feststellung des Fahrzustandes herangezogen. Als Eingangsgröße erhält das Beobachterfahrzeugmodell 84 - genauso wie das Fahrzeugreferenzmodell 12 zur Bestimmung der Gierwinkelgeschwindigkeit - den Lenkwinkel δ. Die gefilterte Fahrzeugreferenzgeschwindigkeit $V_{RefFil}$ fließt als Parameter ein. Die meßbaren Ausgangsgröße Querbeschleunigung $a_{quer}$ und Gierwinkelgeschwindigkeit $\dot{\psi}_{Mess}$ werden zur kinematischen $\dot{\beta}$-Bestimmung 83 benötigt, nicht jedoch für das Beobachterfahrzeugmodell 84, welches diese Größen im Prinzip selbst kreiert. Ein weiter Term Y, der im einfachsten Fall identisch ist mit dem vom GMR-Regelgesetz berechneten Zusatzgiermoment, stellt die Änderungen des Fahrzeugverhaltens dar, die durch einen Regeleingriff verursacht sind. Y dient also dazu, das nachgebildete Fahrzeug des Beobachters denselben Bedingungen auszusetzen, wie das reale Fahrzeug.

Außer einer Schwimmwinkelgeschwindigkeit $\dot{\beta}_{Obs}$ gibt das Beobachterfahrzeugmodell auch noch einen Wert für die Gierwinkelbeschleunigung $\dot{\psi}_{Obs}$. Die aus der kinematischen β-Bestimmung herrührende Größe für die Schwimmwinkelgeschwindigkeit $\tilde{\dot{\beta}}$ wird nach Durchlauf des Tiefpasses mit einem Wichtungsfaktor k multipliziert, während die aus dem Beobachterfahrzeugmodell stammende Größe für die Schwimmwinkelgeschwindigkeit $\dot{\beta}_{Obs}$ Y nach Addition mit einem Korrekturfaktor aus der gemessenen Gierwinkelgeschwindigkeit multipliziert mit einem die Größe der Korrektur bestimmenden Faktor h - mit einem Wichtungsfaktor (1-k) multipliziert wird. Der Wert von k liegt dabei immer zwischen 0 und 1. Ohne Beobachterfahrzeugmodell wäre k = 1. Nach Addition der beiden Schwimmwinkelgeschwindigkeiten wird die Summe aufintegriert zu einem geschätzten Schwimmwinkel $\hat{\beta}$. Dieser wird neben der kinematischen Schwimmwinkelgeschwindigkeit $\tilde{\dot{\beta}}$ ebenfalls der Regelung zur Verfügung gestellt. Außerdem wird der Schwimmwinkel $\hat{\beta}$ sowohl zur kinematischen $\dot{\beta}$-Bestimmung 83 als auch zum Beobachterfahrzeugmodell 84 weitergegeben. Eine ähnliche Korrekturgröße stellt die vom Beobachterfahrzeugmodell 84 berechnete Gierwinkelbeschleunigung $\dot{\psi}_{Obs}$ dar.

Zunächst wird diese zu einer Gierwinkelgeschwindigkeit aufintegriert und fließt zum einen an das Beobachterfahrzeugmodell 84 zurück und wird andererseits von der gemessenen Gierwinkelgeschwindigkeit $\dot{\psi}_{Mess}$ abgezogen. Diese Differenz wird mit einem Faktor $h_2$ multipliziert, welcher die Größe der kommenden Regelschritte in der Korrektur des Beobachterfahr zeugmoclells 84 bestimmt und mit der Dimension 1/s versehen ist. Die mit diesem Faktor $h_2$ multiplizierte Gierwinkelgeschwindigkeit hat somit dieselbe Dimension wie die Gierwinkeibeschleunigung $\dot{\psi}$, so daß beide Größen miteinander addiert werden können und nach weiterer Integration eine rückfließende Korrekturgröße für die Gierwinkelgeschwindigkeit bilden. Im Verlauf einer Giermomentregelung nimmt der Term Y von Null abweichende Werte entsprechend dem aufgebrachte Zusatzgiermonent $M_G$ an. Durch Division durch das Gierträgheitsmoment 0 des Fahrzeugs enthält Y ebenfalls die Dimension einer Gierwinkelbeschleunigung und wird zur Summe der Gierwinkelbeschleunigungen hinzuaddiert, so daß die aufintegrierte Korrekturgröße auch die Regeleinflüsse berücksichtigt.

Wenn nach Fig. 6 ein Beobachterfahrzeugmodell 84 vorhanden ist, welches eine zuverlässigere Bestimmung des Schwimmwinkels β erlaubt, als es mit einer reinen kinematische Bestimmung der Schwimmwinkelgeschwindigkeit $\tilde{\dot{\beta}}$ und Aufintegration möglich wäre, kann der so bestimmte Schwimmwinkel $\hat{\beta}$ auch an den eigentlichen Giermomentregler 10 weitergegeben werden.

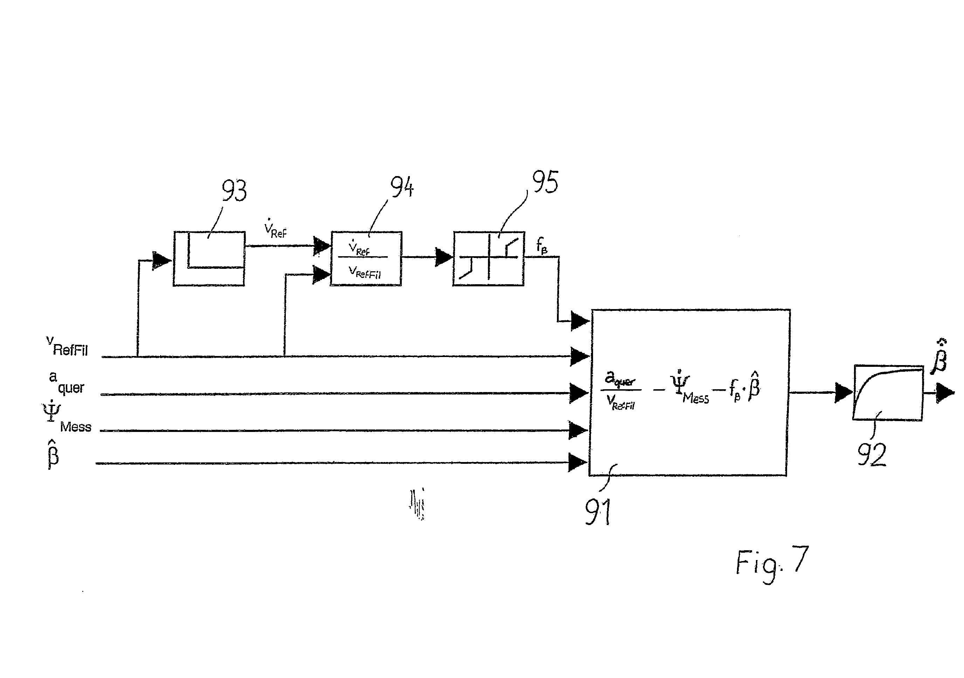

Die kinematische $\hat{\beta}$-Bestimmung, die in Kombination mit einem Beoachterfahrzeugmodell abläuft, ist in Fig. 7 dargestellt. Wie schon aus Fig. 6 ersichtlich, gehen die Querbeschleunigung $a_{quer}$ und die Gierwinkelgeschwindigkeit $\dot{\psi}_{Mess}$ als gemessene Ausgangsgrößen in die Rechnung 91 nach Gleichung F 2.6 ein.

Die gefilterte Fahrzeugreferenzgeschwindigkeit $v_{RefFil}$ wird in Feld 93 differenziert zur Fahrzeugreferenzbeschleunigung $\dot{v}_{Ref}$, die in Feld 94 durch die gefilterte Fahrzeugreferenzgeschwindigkeit $v_{RefFil}$ dividiert wird, was nach nichtlinearer Multiplikation 95 zu einem Faktor $f_\beta$ führt. Diese nichtlineare Multiplikation 95 bewirkt, das bei kleinem Quotienten aus $\dot{v}_{Ref}$ und $v_{RefFil}$ der Faktor $f_\beta$ gleich Null gesetzt wird, so daß dieser Faktor, der vor dem Schwimmwinkel $\hat{\beta}$ steht, vernachlässigt werden kann. Nur dann, wenn die Fahrzeugbeschleunigung $\dot{v}_{Ref}$ eine signifikante Größe erreicht, wird der Schwimmwinkel β bei der kinematischen $\dot{\beta}$-Bestimmung berücksichtigt. Das hierbei verwendete $\hat{\beta}$ ist das kombinierte $\hat{\beta}$, wie es sowohl als Größe für die Regelung als auch zur Rückkopplung nach Fig. 6 verwendet wird. Nach der Rechnung 91 durchläuft der ermittelte Wert für die Schwimmwinkelgeschwindigkeit wie schon zuvor beschrieben einen Tiefpaß 92 und ergibt die geschätzte Schwimmwinkelgeschwindigkeit $\tilde{\dot{\beta}}$.

Die gefilterte Fahrzeugreferenzgeschwindigkeit $v_{RafFil}$ wird in Feld 93 differenziert zur Fahrzeugreferenzbeschleunigung $\dot{v}_{Ref}$, die in Feld 94 durch die gefilterte Fahrzeugreferenzgeschwindigkeit $v_{RefFil}$ dividiert wird, was nach nichtlinearer Multiplikation 95 zu einem Faktor $f_\beta$ führt. Diese nichtlineare Multiplikation 95 bewirkt, das bei kleinem Quotienten aus $\dot{v}_{Ref}$ und $v_{RefFil}$ der Faktor $f_\beta$ gleich Null gesetzt wird, so daß dieser Faktor, der vor dem Schwimmwinkel $\hat{\beta}$ steht, vernachlässigt werden kann. Nur dann, wenn die Fahrzeugbeschleunigung $\dot{v}_{Ref}$ eine signifi-kante Größe erreicht, wird der Schwimmwinkel β bei der kinematischen $\dot{\beta}$-Bestimmung berücksichtigt. Das hierbei verwendete $\hat{\beta}$ ist das kombinierte β, wie es sowohl als Größe für die Regelung als auch zur Rückkopplung nach Fig. 6 verwendet wird. Nach der Rechnung 91 durchläuft der ermittelte Wert für die wie schon zuvor beschrieben einen Tiefpaß 92 und ergibt die geschätzte Schwimmwinkelgeschwindigkeit $\tilde{\dot{\beta}}$.

Wie das Beobachterfahrzeugmodell 84 aus Fig. 6 arbeitet, ist in Fig, 8 dargestellt. Hierbei wurde eine Matrizendarstellung gewählt, wobei "□" skalare und "□" mehrdimensionale Gebilde darstellen.

Die Matrizendarstellung geht aus von den Gleichungen F 1.1 bis F 1.3. Dabei sind die Zustandsgrößen β und $\dot{\psi}$ zu einem Zustandsvektor x(t) zusammengefaßt, so daß sich folgendes Gleichungssystem ergibt:

F 2.7

$$\underline{\dot{x}(t)} = \underline{A(v(t))}\,\underline{x(t)} \;+\; \underline{B(v(t))}\,\underline{u(t)}$$

mit der Systemmatrix $\underline{A}(v(t))$, der Eingangsmatrix $\underline{B}(v(t))$, dem Zustandsvektor $\underline{x}(t)$ und dem Eingangsvektor $\underline{u}(t)$ :

F 2.8

$$\underline{A}(v(t)) = \begin{bmatrix} \dfrac{c_h + c_v}{m\,v(t)} & 1 + \dfrac{c_h\,l_h\ \ c_v\,l_v}{m\,v^2(t)} \\[4mm] \dfrac{c_h\,l_h\ \ c_v\,l_v}{\Theta} & \dfrac{c_h\,l_h^2 + c_v\,l_v^2}{\Theta\,v(t)} \end{bmatrix}$$

$$\underline{B}(v(t)) = \begin{bmatrix} \dfrac{c_v}{m\,v(t)} & 0 \\[4mm] \dfrac{c_v\,l_v}{\Theta} & \dfrac{1}{\Theta} \end{bmatrix} \;;\; \underline{x}(t) = \begin{bmatrix} \beta(t) \\ \dot{\Psi}(t) \end{bmatrix} \;;\; \underline{u}(t) = \begin{bmatrix} \delta \\ Y \end{bmatrix}$$

Der Eingangsvektor $\underline{u}(t)$ enthält als Eingangsgrößen den Lenkwinkel $\delta$ und den Term Y, der das durch die Giermomentregelung erzeugte Zusatzgiermoment darstellt.

Anstelle von Wichtungsfaktoren werden zur gewichteten Addition der ermittelten Größen eine Wichtungsmatrix $\underline{K}_1$ und ein Wichtungsvektor $\underline{k}_2$ verwendet.

F 2.9

$$\underline{K}_1 = \begin{bmatrix} 1-k & 0 \\ 0 & 1 \end{bmatrix} \;;\; \underline{k}_2 = \begin{bmatrix} k \\ 0 \end{bmatrix} \;;\; 0 \le k \le 1$$

Zur Ausblendung der Zustandsgrößen werden zwei Vektoren $\underline{c}_\beta$ und $\dot{\psi}$ eingeführt, die jeweils eine Komponente des Zustandvektors $\underline{x}(t)$ löschen:

F 2.10

$$\underline{c}_\beta = [1,0] \;;\; \underline{c}_\psi = [0,1]$$

Die Dynamik des Beobachter-Fahrzeugmodells, also die Größe der Korrekturschritte wird durch einen Vektor $\underline{h}$ bestimmt, dessen erste Komponente $h_1$ dimensionslos ist und dessen zweite Komponente $h_2$ die Dimension (1/s) aufweiset:

F 2.11

$$\underline{h} = \begin{bmatrix} h_1 \\ h_2 \end{bmatrix}$$

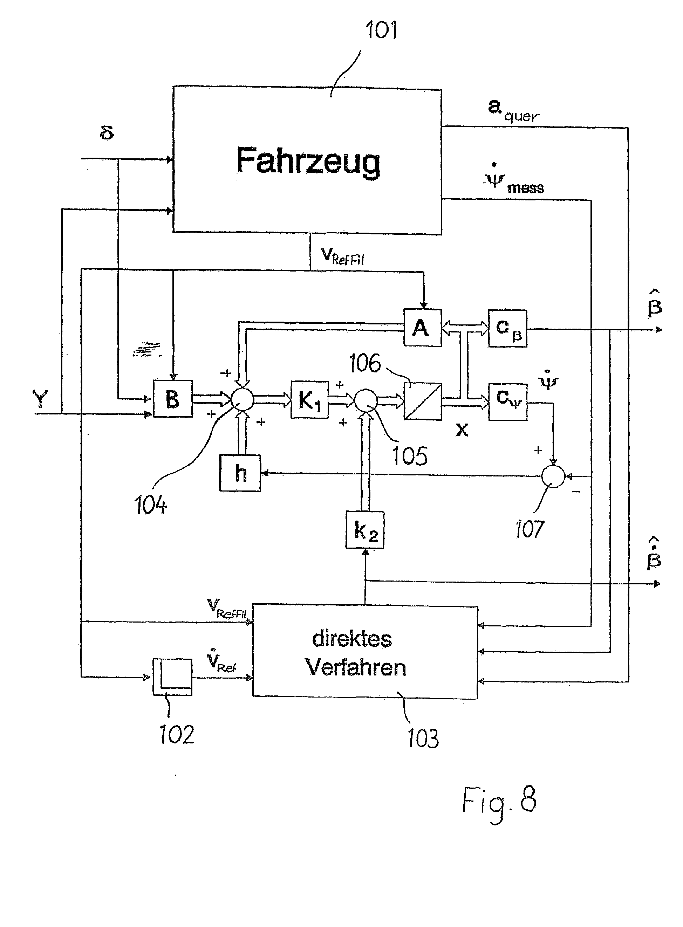

Ausgehend von dem Fahrzeugmodell in der Zustandsraumbeschreibung (F1.1 und F1.2) ergibt sich dann die im folgenden beschriebene Struktur zur Bestimmung des Schwimmwinkels $\beta$ mittels eines Beobachters nach Fig 8.

In Fig. 8 ist das Fahrzeug 101 lediglich zur Unterscheidung zwischen Eingangsgrößen und Ausgangsgrößen dargestellt. Es ist nicht Bestandteil des kombinierten Verfahrens zur Bestimmung der Schwimmwinkelgeschwindigkeit $\tilde{\dot{\beta}}$.

Im Addierer 104 werden die Systemgleichungen nach F 2.7 gebildet. Hierzu wird die System-Matrix $\underline{A}$ mit dem Zustandsvektor x multipliziert und die Eingangsmatrix $\underline{d}$ mit den Eingangsgrößen $\delta$ und $\gamma$ also dem Eingangsvektor $\underline{u}$ multipliziert.

Als einziger veränderlicher Parameter fließt sowohl in die System-Matrix $\underline{A}$ als auch in die Eingangsmatrix $\underline{B}$ die aktuelle Fahrzeugreferenzgeschwindigkeit $v_{RefFil}$ ein. Die durch Addition im Addierer 104 gebildete zeitliche Ableitung $\underline{\dot{x}}$ des Zustandvektors $\underline{x}$ wird nun mit der Wichtungsmatrix $\underline{K}_1$ nach F 2.9 multipliziert und einem weiteren Addierer 105 zugeführt.

Parallel zu diesen Vorgängen wird im direkten Verfahren 103 eine Schwimmwinkelgeschwindigkeit $\tilde{\dot{\beta}}$ abge-schätzt. Hierzu werden die gefilterte Fahrzeugreferenzgeschwindigkeit $v_{RefFil}$ sowie deren im Differenzierer 102 (identisch mit 93 in Fig. 7) ermittelte zeitliche Ableitung $\dot{v}_{Ref}$, die gemessene Querbeschleunigung $a_{quer}$ sowie die gemessene Gierwinkelgeschwindigkeit $\dot{\psi}_{Mess}$ nach Gleichung F 2.6 verwendet. Dabei wird im ersten Schritt der letzte Term der Gleichung vernachlässigt, da noch kein Wert des Schwimmwinltels $\beta$ vorliegt. Nach Ermittlung der Schwimmwinkelgeschwindigkeit durchläuft diese noch, wie bereits in Fig. 7 dargestellt, den Tiefpaß 92, worauf die daraus resultierende geschätzte Schwimmwinkelge-schwindigkeit $\tilde{\dot{\beta}}$ der weiteren Rechnung zur Verfügung gestellt wird. Dieses $\tilde{\dot{\beta}}$ ent-spricht dem $\tilde{\dot{\beta}}$, welches in Fig. 2 aus dem gestrichelt eingezeichneten Feld herausgeführt ist. Der Skalar $\tilde{\dot{\beta}}$ wird mit dem Wichtungsvektor $k_2$ multipliziert, so daß daraus ein Vektor resultiert, dessen erste Komponente die Dimension einer Winkelgeschwindigkeit hat und dessen zweite Komponente gleich Null ist. Auch dieser Vektor wird dem Addierer 105 zugeführt. Der aus der Summe der nach Gleichung F 2.7 gebildeten zeitlichen Ableitung $\dot{x}$ des Zustandsvektors $\underline{x}$ und des aus der Multiplikation mit $\underline{k}_2$ gewonnenen Vektors resultierende Vektor wird im Integrierer 106 zum Zustands-vektor $\underline{x}$ aufintegriert. Durch skalare Multiplikation mit $\dot{\psi}$ wird jeweils eine der Komponenten $\beta$ bzw. $\dot{\psi}$ aus dem Zustands-vektor als Skalar ausgeblendet und weiter verarbeitet. Während das ausgeblendete $\tilde{\dot{\beta}}$ zum einem dem GMR-Regelgesetz 16 und zum anderen dem direkten Verfahren 103 zugeführt wird, wird das berechnete $\dot{\psi}$ innerhalb des kombi-nierten Verfahrens lediglich als Zustandsgröße innerhalb des Beobachters und zur Schätzfehlerbestimmung verwendet. Im Addierer 107 wird hierzu die Differenz gebildet zwischen der aus dem Beobachterfahrzeugmodell ermittelten Gier-winkelgeschwindigkeit $\dot{\psi}$ und der gemessenen Gierwinkelgeschwindigkeit $\dot{\psi}_{Mess}$. Diese Differenz wird mit einem Vektor $\underline{h}$ multipliziert, dessen erste Komponente dimensionslos ist und die Größe der Korrekturschritte für die Schwimmwin-kelgeschwindigkeit $\dot{\beta}$ festlegt und dessen zweite Komponente die Dimension $s^{-1}$ trägt und die Größe der Regelschritte bei der Korrektur der Gierwinkelgeschwindigkeit $\dot{\psi}$ bestimmt.

Auch der Schwimmwinkel $\tilde{\beta}$ wird als Korrekturgröße rückgeführt und zwar in das direkte Verfahren der kinematischen $\dot{\beta}$-Bestimmung nach Fig. 7, so daß im darauffolgenden Regelschritt auch der letzte Term der Gleichung F 2.6 mit einem Wert belegt werden kann.

Durch die gegenseitige Korrektur der beiden Rechenverfahren, also der Berechnung anhand eines Fahrzeugmodells und der Berechnung anhand kinematischer Betrachtungen, ist eine wesentlich genauere Bestimmung des Schwimmwinkels $\tilde{\beta}$ möglich, so daß auch dieser als Regelgröße dem GMR-Regelgesetz 16 zugeführt werden kann.

2.3 Fahrzeugreferenzmodelle

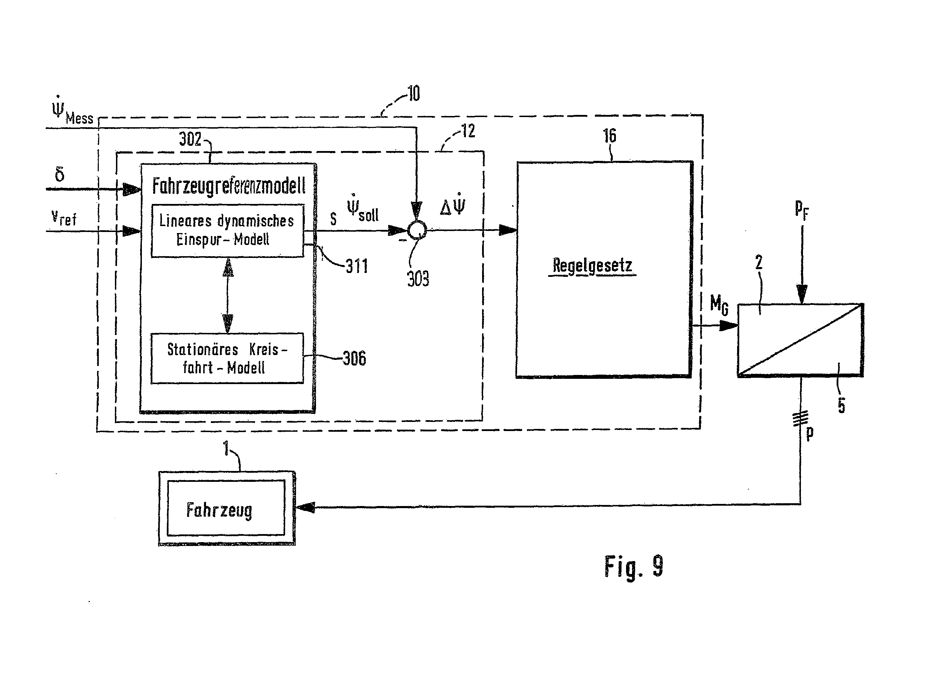

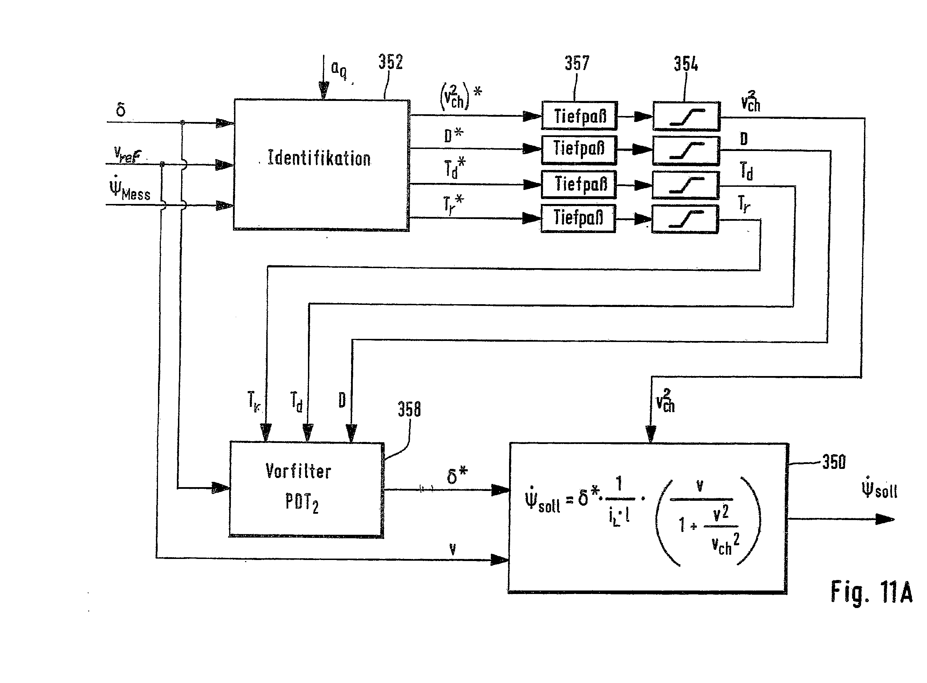

Nachfolgend wird das Fahrzeugreferenzmodell anhand der Fig. 9 bis 15 erläutert.

In Fig. 9 ist der Regelkreis gemäß Fig. 1 und Fig. 2 zur Regelung der Fahrstabilität eines Fahrzeugs nochmals vereinfacht dargestellt. Dabei wurden die Regler 7 bis 9 in Fig. 1, die zugehörige Prioritätsschaltung 3 und das Motormanagement 6 weggelassen sowie die Verteilungslogik 2 mit der Drucksteuerung 5 vereint dargestellt. Innerhalb des Regelkreises wird ein zusätzliche Giermoment $M_G$ um die Hochachse des Fahrzeuges berechnet und eingestellt, damit die vom Fahrer gewünschte Kurvenbahn eingehalten wird. Das zusätzliche Giermoment $M_G$ wird dabei durch gezielte Bremsvorgänge an den einzelnen Rädern erzeugt, wobei der Verlauf der Bremsvorgänge und die Auswahl der zu bremsenden Räder durch die Verteilungslogik 2 festgelegt wird. Die gewünschte Fahrtrichtung legt der Fahrer durch eine entsprechende Winkel-Stellung des Lenkrades fest Das Lenkrad ist in einem festen Übersetzungsverhältnis (Lenkübersetzung) mit dem gelenkten Rädern gekoppelt. Auf diese Weise wird ein bestimmter Lenkwinkel $\delta$ der Räder eingestellt.

### 2.3.1 Dynamisches Einspurmodell

In dem GMR-Regler 10 ist ein sog. Fahrzeugreferenzmodell 12 (Fig. 2) = 302 (Fig. 9) vorgesehen, das mit Eingangsdaten

(Geschwindigkeit v, repräsentiert durch $v_{Ref}$, Lenkwinkel $\delta$) beliefert wird. Im Fahrzeugreferenzmodell 302 wird aufgrund der Eingangsdaten berechnet, wie groß die Änderung des Gierwinkels pro Zeiteinheit (Gierwinkelgeschwindigkeit $\dot{\psi}_{Soll}$) sein soll. In einem nachgeschalteten Vergleicher 303 wird der Sollwert der Gierwinkelgeschwindigkeit $\dot{\psi}_{Soll}$ mit dem gemessenen Istwert der Gierwinkelgeschwindigkeit $\dot{\psi}_{Mess}$ verglichen. Als Ausgangswert gibt der Vergleicher 303 eine Ausgangsgröße $\Delta\dot{\psi}$ ab, die der Differenz zwischen $\dot{\psi}_{Soll}$ und $\dot{\psi}_{Mess}$ entspricht. Der so festgestellte Differenzwert wird einem Regelgesetz 16 zur Steuerung des Giermomentes zugeführt. Das Regelgesetz errechnet aufgrund von $\Delta\dot{\psi}$ ein zusätzliches Giermoment $M_G$, welches der Verteilungslogik 2 zugeführt wird. Die Verteilungslögik- 2 legt aufgrund des zusätzlichen Giermoments $M_G$ und ggf. eines Wunsches des Fahrers nach Druckaufbau in den Bremsen $p_{Fahrer}$ Ausgangsgrößen fest. Dies können Bremsdruckwerte oder Ventilschaltzeiten sein.

Auch im Bereich kleiner Geschwindigkeiten ist eine optimale Arbeitsweise des Fahrzeugreferenzmodells 302 wichtig. Zu diesem Zweck kann das Fahrzeugreferenzmodell 302 zusätzlich zu dem oben beschriebenen linearen dynamischen Einspurmodell 311 auch mit einem stationären Kreisfahrtmodell 306 versehensein.

Für die stationäre Kreisfahrt gilt

F 2.12

$$\dot{\Psi}_{soll} = \delta * \frac{v}{l_v + 1} * \frac{1}{1 + \dfrac{v^2}{v_{ch}^2}} + \dot{\Psi}_{korr}$$

F 2.13

$$\beta = \delta * \frac{\dfrac{l_v}{l_v + l_h} * \left(1 + \dfrac{m * v^2}{c_h * (l_v + l_h)}\right)}{1 + \dfrac{v^2}{v_{ch}^2}} + \beta_{korr}$$

mit

F 2.14

$$v_{ch}^2 = \frac{c_v * c_h * (l_h + l_v)^2}{m * (c_h * l_h \ c_v * l_v)}$$

Dabei gilt:

v = vorn; h = hinten; m = Masse; 1 = Abstand der Achse vom Schwerpunkt; $\dot{\psi}_{Korr}$, $\beta_{korr}$ = Korrekturgl ieder für $\dot{\psi}$, $\beta$.

Für das lineare dynamische Einspurmodell gelten die Systemgleichungen F1.1 und F1.2.

Die Umschaltung zwischen den Rechenmodellen 306 und 311 wird durch einen in der Zeichnung nicht dargestellten Umschalter im Fahrzeugreferenzmodel 302 in Abhängigkeit von der Geschwindigkeit des Fahrzeugs automatisch vorgenommen. Dabei ist für die Umschaltvorgänge von einem Modell zum anderen eine Hysterese von einigen km/h vorgesehen. Unterhalb der Schaltschwelle wird die Soll-Gierwinkelgeschwindigkeit $\dot{\psi}_{Soll}$ nach dem Modell der stationären Kreisfahrt 306 berechnet.

Überschreitet die Geschwindigkeit von einer niedrigen Geschwindigkeit kommend die in dieser Richtung geltende Schwelle, so wird die Berechnung des Sollwertes der Gierwinkelgeschwindigkeit $\dot{\psi}_{soll}$ mit Hilfe des dynamischen Einspurmodells 311 vorgenommen. Hierdurch lassen sich die für die Regelung bei höheren Geschwindigkeiten besonders wichtigen dynamischen Vorgänge in das Modell miteinbeziehen.

Beim Übergang von dem Kreisfahrtmodell 306 zu dem Einspurmodell 311 werden die durch das Kreisfahrtmodell berechneten Sollwerte wie $\dot{\psi}_{soll}$ und $\beta$ als Startwerte für das Einspurmodell eingesetzt. Hierdurch werden Einschwingvorgänge beim Umschalten vermieden. Die weitere Berechnung erfolgt nun mit Hilfe des Einspurmodells 311 solange, bis die bei abnehmender Geschwindigkeit niedrigere Geschwindigkeitsschwelle unterschritten wird. Um auch hier Einschwingvorgänge gering zu halten, werden die für das Kreisfahrtmodell notwendigen Korrekturfaktoren $\dot{\psi}_{Korr}$ und $\beta_{korr}$ mit den zuvor in dem Einspurmodell berechneten Werten für $\dot{\psi}_{soll}$ und $\beta$ sowie mit den Eingangsgrößen Geschwindigkeit $v_{ref}$ Lenkwinkel $\delta$ errechnet.

Die Korrekturwerte haben folgende Größe:

F2.15

$$\dot{\Psi}_{korr} = \dot{\Psi}_{soll} \quad \delta * \frac{v}{l_v + l_h} * \frac{1}{1 + \frac{v^2}{v_{ch}^2}}$$

F2.16

$$\beta_{korr} = \beta \quad \delta * \frac{1 \quad \frac{l_v}{l_v + l_h} * (1 + \frac{m * v^2}{c_h * (l_v + l_h)})}{1 + \frac{v^2}{v_{ch}^2}}$$

Diese Korrekturfaktoren nehmen in ihrem Einfluß über die Zeit exponentiell ab nach der Gesetzmäßigkeit:

F 2.17

$$korr(n+1) = korr(n) * \lambda$$

wobei $\lambda$ Werte zwischen 0 und kleiner 1 annehmen kann. Mit n bzw. n+1 werden die Rechendurchläufe gezählt.

Hierdurch werden sprungartige Änderungen vermieden, da im stationären Fall die beiden Berechnungsmethoden unterschiedliche Ergebnisse liefern. Somit ist durch den Rechenmodellwechsel die Möglichkeit gegeben, bis zu Geschwindigkeiten von v = 0 km/h die Sollwerte für die Regelung recht präzise zu bestimmen.

Im Zusammenhang mit Fig. 9 wurde erläutert, daß als Fahrzeugrechenmodelle unterschiedliche Modelle in Frage kommen. Ein bevorzugtes Modell kann dabei das der stationären Kreisfahrt sein. Nach diesem Modell läßt sich die Gierwinkelgeschwindigkeit $\dot{\psi}_{soll}$ nach der oben angegebenen Formel berechnen. Will man nun ein derartiges Fahrzeugrechenmodell darstellen, so bietet es sich an, einer Rechenschaltung die gemessenen Werte $\lambda$ und $v_{Ref}$ zuzuführen und als Ausgangswert dann den Sollwert der Gierwinkelgeschwindigkeit $\dot{\psi}_{soll}$ abzugreifen.

2.3.3 Vereinfachtes Modell

Im folgenden wird ein äußerst einfaches Modell zum Ermitteln einer Sollgierwinkelgeschwindigkeit hergestellt. Es soll eine Alternative sein zu dem vorher beschriebenen Kombinationsmodell. Es zeichnet sich dadurch aus, daß mit wenig Rechenleistung ein akzeptables Ergebnis erzielt wird.

Nach diesem Modell wird die Sollgierwinkelgeschwindigkeit $\dot{\psi}_{soll}$ berechnet zu

2.18

$$\dot{\Psi}_{soll} = \frac{\delta * v}{l}$$

Diese Gleichung ergibt sich aus F2.12, mit Gleichung F 2.14 und F 2.15, wenn man die Steifigkeiten $c_v$ und $c_h$ sehr groß annimmt.

Dieser Ansatz beruht auf den folgenden Überlegungen.

Bei dem bisher beschriebenen Fahrzeugreferenzmodell wird die Sollgierwinkelgeschwindigkeit $\dot{\psi}_{soll}$ entweder mittels eines dynamischen Fahrzeugmodells (z.B. eines Einspurmodells) oder durch ein statisches Modell (stationäre Kreisfahrtwert genannt) berechnet und mit der gemessenen Gierwinkelgeschwindigkeit $\dot{\psi}_{Mess}$ verglichen. Bei jedem dieser Ansätze hängt aber die Vorgabe (und damit auch der Regelungseingriff) direkt von der Güte des Fahrzeugmodells ab. Da es sich hierbei um lineare Ersatzmodelle handelt, weicht das Modell in einigen Fallen deutlich vom tatsächlichen Fahrzeugverhalten ab.

Verändert sich zusätzlich das wirkliche Fahrzeugverhalten aufgrund von z.B. Beladung oder Verschleiß einzelner Komponenten, so beschreibt das Modell das Fahrzeug nur unzureichend. Demzufolge sollte mittels einer fortlaufenden Parameterschätzung eine Modellanpassung durchgeführt werden, wobei folgende Probleme auftreten:

Für die Schätzung muß eine Anregung vorhanden sein, d.h. der Fahrer müßte das Fahrzeug mittels Lenkvorgabe im linearen Bereich (<0.4g) ausreichend anregen. Dies trifft bei normaler Fahrt kaum zu.

Weiter ist es nicht möglich, alle Parameter des linearen Einspurmodells direkt zu schätzen. Somit müßten bestimmte Parameter fest vorgewählt werden.

Die Regelung auf der Basis von Modellannahmen kann also immer nur bezüglich der Modellvorgaben eine zufriedenstellende Lösung bieten. In vielen Fällen kann es daher ausreichend sein, nach einem einfacheren Regelungsprinzip vorzugehen.

Ein wichtiges Ziel der Fahrstablitätsregelung ist es, das Fahrverhalten so abzustimmen, daß die Reaktion des Fahr-zeugs auf Lenk-, Brems - und Gaspedaleingaben des Fahrers stets vorhersehbar und gut kontrollierbar ist. Demzufolge müssen unter- und übersteuernde Betriebszustände des Fahrzeugs erkannt und durch einen entsprechenden Bremsen- bzw. Motormanagementeingriff auf neutrales Verhalten hin korrigiert werden.

Die Idee für ein vereinfachtes Regelungsprinzip besteht darin, ein direktes Maß für unter-/übersteuerndes Verhalten als Regelgröße zu verwenden. Nach einer der Definition für das Steuerverhalten eines Kraftfahrzeuges werden dazu die mittleren Schräglaufwinkel der Vorder- und Hinterachse ($\alpha_V, \alpha_H$) verglichen. Bei größeren Schräglaufwinkeln vorn hat das Fahrzeug danach ein untersteuerndes, im umgekehrten Fall ein übersteuerndes Verhalten. Neutrales Verhalten liegt definitionsgemäß vor, wenn die Schräglaufwinkel vorne und hinten gleich sind.

Somit gilt

F2.19

$$\alpha_v - \alpha_h \quad \begin{cases} > 0: & \text{untersteuernd} \\ = 0: & \text{neutral} \\ < 0: & \text{übersteuernd} \end{cases}$$

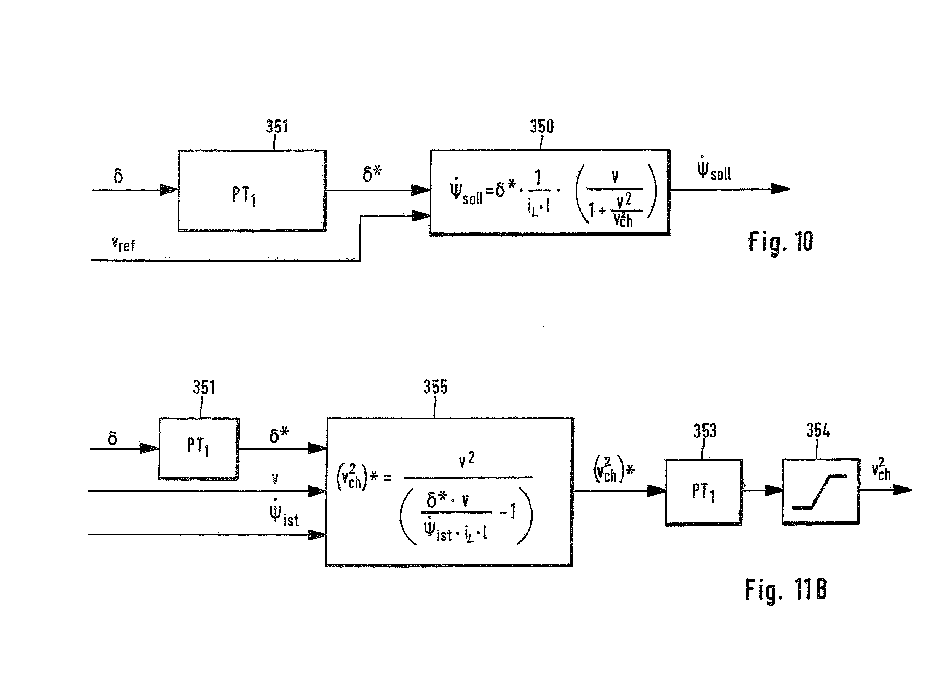

Auf Basis der Schräglaufwinkeldifferenz ist es also möglich, den augenblicklichen Fahrzustand des Fahrzeugs direkt zu bestimmen. Verwendet man als Ansatz das Einspur-Fahrzeugmodell (Fig. 10), lassen sich daraus die Schräglaufwinkel in Abhängigkeit vom Lenkwinkel $\delta$, dem Schwimmwinkels $\beta$, der Gierwinkelgeschwindigkeit $\dot{\psi}$ und der Fahr-zeuggeschwindigkeit v ableiten, und zwar wie folgt:

F2.20a

$$\alpha_v = \delta \quad \beta \quad \frac{\dot{\psi} * l_v}{v}$$

F2.20b

$$\alpha_h = \beta + \frac{\dot{\psi} * l_h}{v}$$

Da der Schwimmwinkel nicht direkt meßbar bzw. einfach berechenbar ist, kann keine explizite Berechnung der einzelnen Schräglaufwinkel vorgenommen werden. Wird aber deren Differenz gebildet, so ist es möglich, diese Größe auf Basis der vorhandenen Meßgrößen (Lenkwinkel, Gierwinkelgeschwindigkeit), der aus dem ABS-Regler bekannten Fahrzeugreferenzgeschwindigkeit $v_{Ref}$ und dem konstanten Radstand l zu berechnen.

F 2.21

$$\alpha_v - \alpha_h = \delta - \frac{l * \dot{\psi}}{v}$$

Damit steht eine Größe zur Verfügung, die als Maß für Unter-/Übersteuern verwendet werden kann.
Betrachtet man weiter den bekannten Zusammenhang zwischen dem momentanen Kurvenradius R der Kurvenbahn des Fahrzeugschwerpunktes und der Schräglaufwinkeldifferenz

F 2.22

$$R = \frac{l}{\delta - (\alpha_v - \alpha_h)}$$

so ist zu erkennen, daß unter der Annahme

F 2.23

$$\alpha_v - \alpha_h = 0$$

eines neutralen Fahrzustands F2.19 der Kurvenradius R nur noch durch den Lenkwinkel $\alpha$ bestimmt wird, nämlich

F 2.24

$$R = \frac{l}{\delta}$$

Es ist daher eine Regelung möglich, die als Regelgröße direkt die berechnete Schräglaufwinkeldifferenz verwendet. Vorgabe für diese Regelung ist es, die Regelgröße betragsmäßig klein zu halten, um so in etwa neutrales Verhalten zu erreichten. Eventuell ist es sinnvoll, diese Toleranzschwelle asymmetrisch anzusetzen, so daß in Richtung übersteuerndes Verhalten die Toleranz geringer gewählt werden kann.

Nach diesen Überlegungen läßt sich die Sollgiergeschwindigkeit $\dot{\psi}_{soll}$ berechnet (F2.1.8). Diese Sollgiergeschwindigkeit $\dot{\psi}_{soll}$ wird dann mit $\dot{\psi}_{Mess}$ verglichen und gemäß Fig. 1 der Regelung zugrundegelegt.

2.3.5 Sollwertbegrenzung im GMR-Reglers

Eine Regelung des Fahrverhaltens des Fahrzeugs hat nur solange Sinn, wie die Haftung der Fahrzeugräder auf der Fahrbahn erlaubt, das errechnete Zusätzdrehmoment am Fahrzeug wirksam werden zu lassen.

Beispielsweise ist es unerwünscht, daß die Regelung das Fahrzeug auf jeden Fall auf die durch den Lenkwinkel $\delta$ vorgegebene Kurvenbahn zwingt, wenn das Lenkrad zu stark oder zu schnell hinsichtlich der bestehenden Fahrzeuggeschwindigkeit eingeschlagen wurde.

Es sollte daher verhindert werden, daß $\dot{\psi}_{soll}$ unter allen Umständen, gemäß dem gewählten Fahrzeugreferenzmodell zur Vorgabe gemacht wird. Folgt man allein dem Referenzmodell, dann kann dies nämlich unter unglücklichen Umständen dazu führen, daß bei versehentlich zu groß eingestelltem Lenkradwinkel bei gleichzeitig hoher Geschwindigkeit über das dann auch zu große $\dot{\psi}_{Soll}$ die tatsächliche Gierwinkelgeschwindigkeit $\dot{\psi}$ so weit verstellt wird, daß im Extremfall das Fahrzeug sich um die eigene Achse dreht, während es sich mit seinem Schwerpunkt im wesentlichen geradeaus bewegt. Dieser Zustand ist für den Fahrer noch sehr viel ungünstiger als der Zustand, bei dem das Fahrzeug aufgrund der schlechten Reibungsverhältnisse dem Fahrerwunsch nicht zu folgen vermag und stark untersteuernd geradeausschiebt. Denn in letzterem Falle wird das Fahrzeug wenigstens nur geradeausfahren und sich nicht gleichzeitig dabei um die eigene Achse drehen. Um diese in Sonderfällen nachteiligen Folgen zu vermeiden, sind im Fahrzeugreferenzmodell zusätzlich Rechenalgorithmen vorgesehen, welche es gestatten, über den Reibwert $\hat{\mu}$ die für die gerade gemessene Geschwindigkeit gültige maximale Gierwinkelgeschwindigkeit $\dot{\psi}_{Sollmax}$ festzulegen. Das $\hat{\mu}$ wird in der Reibwerterkennung 13 bestimmt, Die Rechenalgorithmen basieren auf der Theorie der stationären Kreisfahrt, für die gilt, daß $\dot{\psi} = a_{quer}/v$ ist (F2.18).

Die maximal zulässige Querbeschleunigung $a_{qlim}$ läßt sich im wesentlichen als Funktion des Reibwertes der Geschwindigkeit v, der Längsbescheunigung $a_{long}$ sowie ggf. weiterer Parameter bestimmen. Damit wird

$$\text{F 2.25}$$

$$a_{qlim} = f(\mu, v, a_{long}, \ldots)$$

Die maximale Gierwinkelgeschwindigkeit berechnet sich zu.

$$\text{F 2.26}$$

$$\dot{\psi}_{Sollmax} = \frac{a_{qlim}}{v}$$

Es ist daher möglich, einen Grenzwert für die Gierwinkelgeschwindigkeit festzulegen, der dem Fahrerwunsch nicht mehr direkt Rechnung trägt, sondern mit dazu betragen soll, daß beim Ausbrechen des Fahrzeugs dieses nicht zusätzlich auch noch um seine Hochachse dreht.

Einzelheiten zur geeigneten $\mu$-Bestimmung sind weiter unter Punkt 2.1 ausführlich abgehandelt..

Es kann auch vorgesehen sein, einen Regeleingriff nur unter bestimmten Rahmenbedingungen zuzulassen. Eine Möglichkeit hierzu kann z.B. darin bestehen, daß die Aktivierungslogik 11 in Fig. 2 kein aktuelles $M_G$ an die Verteilungslogik 2 weiter leitet, wenn ein zu größer Schwimmwinkel $\hat{\beta}$ festgestellt wird, was in Abhängigkeit von der gerade herrschenden Geschwindigkeit geschehen kann.

2.4 Regelgesetz des GMR-Reglers

Im folgenden wird die Programmstruktur des Regelgesetzes 16 des Giermomentenreglers 10 beschrieben.

Das Programm errechnet aus vier Eingangsgrößen das zusätzliche Giermoment $M_G$ um die Hochachse des Fahrzeuges, das notwendig ist, um ein stabiles Fahrzeugverhalten vor allem bei Kurvenfahrt zu erhalten. Das errechnete Giermoment $M_G$ ist Grundlage für die Berechnungen der in die Radbremsen einzusteuernden Drücke.

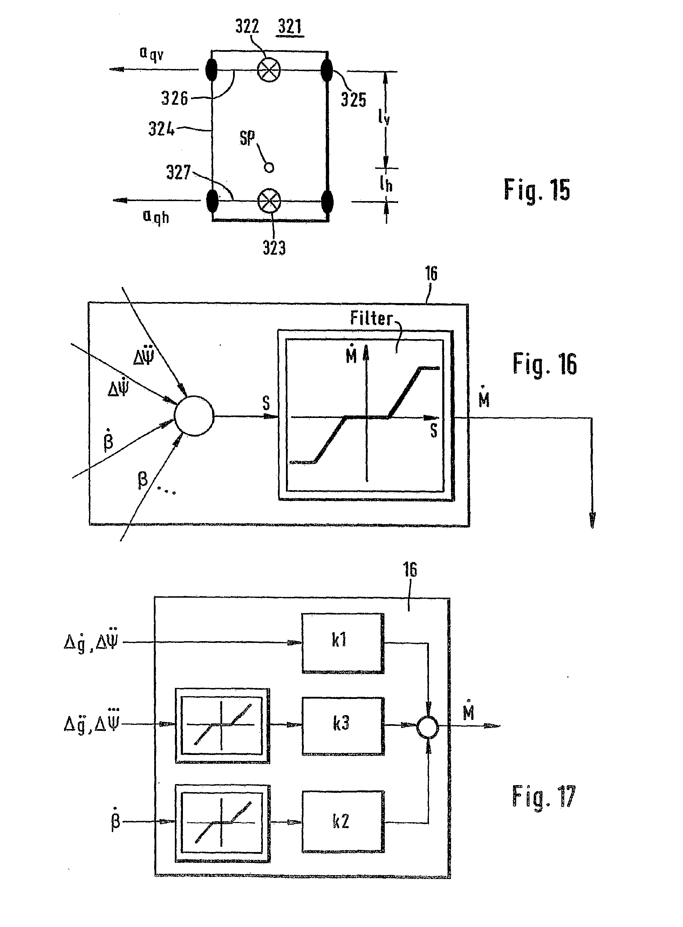

Als Eingangsgrößen für das Regelgesetz stehen zur Verfügung (siehe Fig. 17)

am Eingang 500 : $\Delta\dot\psi$

am Eingang 501 : $\Delta\ddot\psi$

am Eingang 502 : $\tilde{\dot\beta}$

am Eingang 503 : $\hat{\dot\beta}$

Für den Fall, daß als Grundlage die Schräglaufwinkeldifferenz herangezogen wird, liegt am Eingang 500 $\Delta\lambda$ und am Eingang 501 $\Delta\dot\lambda$ an.

Der Eingang 503 ist fakultativ. Er steht insbesondere dann zur Verfügung, wenn im Gesamtberechnungssystem ein sogenanntes Beobachterfahrzeugmodell 84 vorgesehen ist.

Der Wert am Eingang 500 ergibt sich als Differenz zwischen der gemessenen Gierwinkelgeschwindigkeit $\dot\psi_{Mess}$ und der mit Hilfe eines Fahrzeugreferenzmodells 12 errechneten Sollgierwinkelgeschwindigkeit $\dot\psi_{soll}$.

Der Wert am Eingang 501 ergibt sich entweder als zeitliche Änderung der Größe am Eingang 500 von Berechnungsloop zu Berechnungsloop dividiert durch die Loopzeit $T_0$, oder als Differenz der zeitlichen Ableitung der gemessenen Gierwinkelgeschwindigkeit und der zeitlichen Ableitung der errechneten Sollgierwinkelgeschwindigkeit.

Unter einem Berechnungsloop versteht man einen Rechendurchgang durch den FSR-Regler nach Figur 1. Ein solcher Durchgang nimmt durch seine Struktur eine bestimmte Echtzeit in Anspruch, die Loopzeit $T_0$. Für eine effektive Regelung muß diese ausreichend klein gehalten werden.

Die Werte an den Eingängen 500 und 501, nämlich $\Delta\dot\psi$ und $\Delta\ddot\psi$ werden zunächst jeweils einem Tiefpaßfilter 510 bzw. 511 zugeführt.

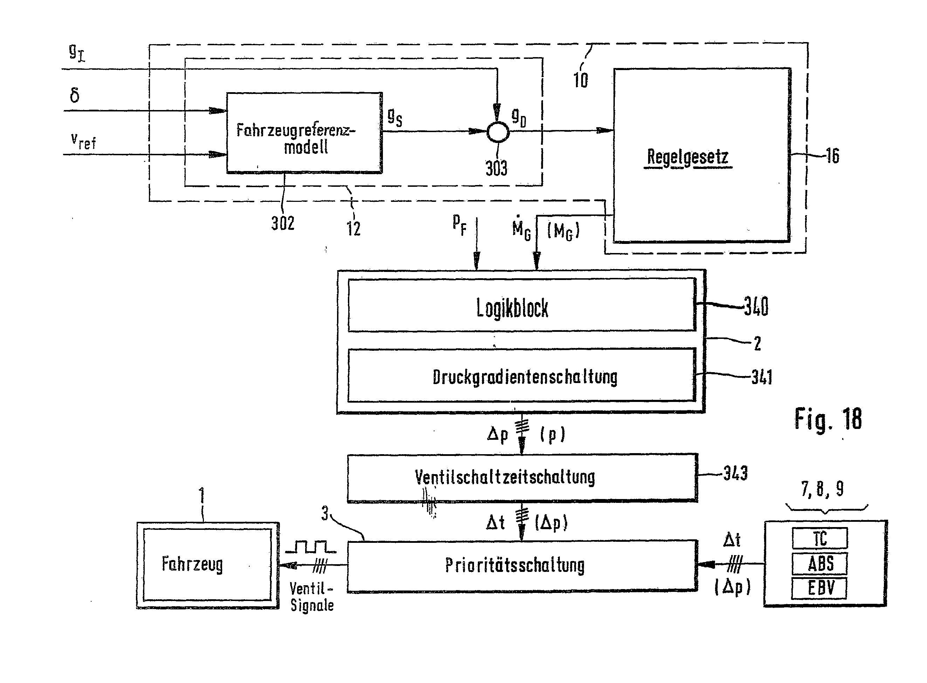

Die beiden Tiefpaßfilter sind im Prinzip gleich aufgebaut und haben eine Struktur, wie sie in der Figur 18 dargestellt ist.

Die Eingangsgröße 520 des Tiefpaßfilters nach Fig. 18 wird mit u die Ausgangsgröße 521 mit y bezeichnet. Die Ausgangsgröße 521 wird einem Register 522 zugeführt und steht bei der nächsten Berechnung als vorheriger Wert y(k-1) zur Verfügung. Der Ausgangswert 521 für die Berechnungsschleite errechnet sich dann nach folgender Formel

F 2.27

$$y(k) = \lambda * y(k1) + (1\lambda) * u * k_p$$

wobei $\lambda$ Werte zwischen 0 und 1 einnehmen kann. $\lambda$ beschreibt die Wertigkeit der Tiefpaßfilters. Für den Grenzwert $\lambda=0$, ist die Rekursionfunktion eliminiert: die vorhergehenden Werte y(k-1) haben für die Berechnung des neuen Ausgangswertes 521 keine Bedeutung. Je mehr sich $\lambda$ dem Wert 1 nähert, desto stärker wirken die vorhergehenden Werte, so daß sich der aktuelle Eingangswert 520 nur langsam als Ausgangswert 521 durchsetzt.

$k_p$ ist ein linearer Wertungsfaktor.

Die eben beschriebene Tiefpaßfilterung erfolgt für die beiden Eingangswerte 500 und 501 und führt zu gefilterten Werten 515,516.

Eine ebensolche Tiefpaßfilterung 512 erfolgt für die Eingangsgröße 502, nämlich für $\tilde{\dot\beta}$. Der gefilterte Wert 517 wird ebenso wie der ungefilterte Wert 503 nichtlinearen Filtern zugeführt. Diese Filter haben die Aufgabe, für kleine Eingangswerte den Ausgangswert zu 0 zu setzen und für Eingangswerte, die über einen bestimmten Grenzwert liegen, einen um den Grenzwert reduzierten Eingangswert weiterzuleiten. Die Begrenzung erfolgt sowohl im negativen als auch im positiven Bereich. Die Grenzwerte $\tilde\beta_{th}$ und $\beta_{th}$ können fest im Programm implementierte Größen sein, aber auch Größen, die von weiteren Parametern abhängen, zum Beispielvom Reibbeiwert zwischen den Reifen und der Fahrbahn. Die Grenzwerte werden in diesem Fall gesondert als lineare Funktion des Reibwertes berechnet.

Alle vier Größen, nämlich 515,516,517 und 518 werden in einem weiteren Schritt 530,531,532 bzw. 533 mit je einem linearen Faktor gewichte.

Diese Faktoren sind fest im Berechnungssystem implementiert. Sie lassen sich größenordnungsmäßig aus entsprechenden Fahrzeugmodellen errechnen, benötigen aber im allgemeinen eine Feinabstimmung durch Fahrversuche. Auf diese Weise wird für jedes Fahrzeug bzw. für jeden Fahrzeugtyp ein entsprechender Satz von linearen Faktoren festgelegt. Die so gewichteten Eingangsgrößen 500, 501, 502, 503 werden addiert, wobei (Additionsglied 540) sich das zusätzliche Giermoment $M_G$ ergibt, das dem weiteren Berechnungsgang des Programms zugrunde gelegt wird.

In der Praxis hat sich aber herausgestellt, daß noch Modifikationen des errechneten Giermoments notwendig sind.

Dazu können zwei Ansätze gemacht werden:

1. Die Eingangsgrößen, insbesondere $\Delta\dot{\psi}$, werden modifiziert.
2. Das errechnete Giermoment $M_G$ wird einer Filterung unterzogen.

Mit beiden Ansätzen wird versucht, die Regelung nicht nur unter Berücksichtigung der Gierwinkelgeschwindigkeit sondern auch unter Berücksichtigung des Schwimmwinkels durchzuführen.

2.4.1 Modifikation der Eingangsgrößen

Mit Hilfe eines Fahrzeugreferenzmodells wird - wie schon erläutert - ein Sollwert für die Gierwinkelgeschwindigkeit errechnet. Da das verwendete Fahrzeugreferenzmodell mit den tatsächlichen Gegebenheiten nicht vollständig übereinstimmen kann, ist es in der Regel notwendig, das Ergebnis des Modellrechnung nochmals zu korrigieren. Im Referenzmodell werden im wesentlichen die Werte ausgewertet, die ein Gierwinkelgeschwindigkeitssensor sowie ein Lenkwinkelsensor liefern. Eine Korrektur der errechneten Sollgierwinkelgeschwindigkeit kann erfolgen, indem zusätzlich die Werte berücksichtigt werden, die ein Querbeschleunigungssensor liefert.

Die Auswertung kann auf verschiedenen Wegen erfolgen. Im folgenden wird ein Weg vorgeschlagen, bei dem zunächst die gemessene Querbeschleunigung in eine Schwimmwinkelgeschwindigkeit $\hat{\dot{\beta}}$ umgerechnet wird. Mit diesem Wert wird eine Korrektur des Sollwertes für die Gierwinkelgeschwindigkeit vorgenommen.

Die Berechnung von $\hat{\dot{\beta}}$ erfolgt z. B. mit Hilfe der kinematischen $\dot{\beta}$-Bestimmung 14, 15 (Fig. 2).

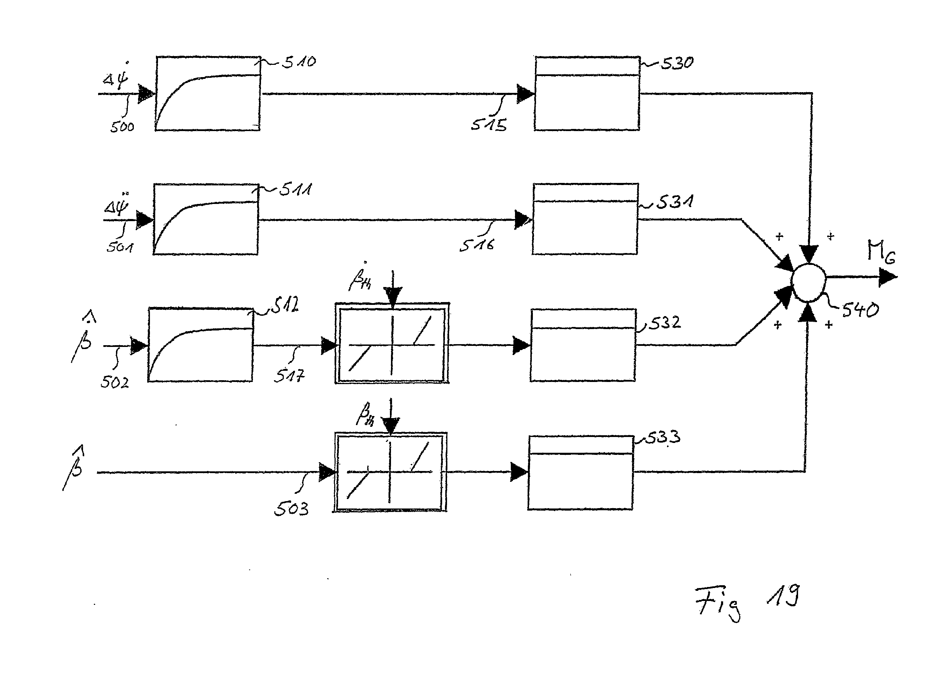

Das Verfahren erfolgt nach dem in Figur 19 gegebenen Schema.

Der geschätzte Wert für die Schwimmwinkelgeschwindigkeit $\hat{\dot{\beta}}$ wird ggf. nach einer Tiefpaßfilterung mit einem ersten Schwellenwert $th_1$ verglichen (Raute 400). Die Bedeutung dieses Vergleichs ergibt sich erst nach einer Korrektur des Sollwertes für die Gierwinkelgeschwindigkeit $\dot{\psi}_{soll}$ und wird daher im Anschluß näher erläutert.

Wenn $|\hat{\dot{\beta}}| > \mathtt{th_1}$ ist, wird der Betrag von $\hat{\dot{\beta}}$ mit einem zweiten Schwellenwert $th_2$ verglichen (Raute 401), wobei der zweite Schwellenwert größer ist als der erste Schwellenwert $th_1$. Wird auch dieser Schwellenwert überschritten, so erfolgt zu nächst eine Integration 402 der Schwimmwinkelgeschwindigkeit $\hat{\dot{\beta}}$ über die Zeit. Dazu wird die Schwimmwinkelgeschwindigkeit $\hat{\dot{\beta}}$ mit der Loopzeit $T_0$ multipliziert und zum vorherigen Integrationsergebnis $Intg_{i-1}$ addiert. Die Integrationsschritte werden mit n gezählt, so daß die Zahl n nach der Integration um 1 erhöht wird (Schritt 403). Die Integrationszeit wird damit repräsentiert durch die Anzahl n der erfolgten Integrationsschritte. Das Integrationsergebnis $Intgn\ \hat{\dot{\beta}}$ wird verglichen mit einem Schwellenwert $\beta_s$ (Raute 404). Die Schwellenwertgröße repräsentiert eine maximal zulässige Abweichung gegenüber einem theoretisch einzuhaltende Schwimmwinkel . Der Schwellenwert $\beta_s$ liegt in der Größenordnung von ca. 5 Grad.

Wird dieser Schwellenwert überschritten, so wird die Sollgierwinkelgeschwindigkeit $\dot{\psi}_{soll}$ durch eine additive Konstante S neu bewertet (Schritt 405), die abhängig ist von der momentanen Schwimmwinkelgeschwindigkeit $\hat{\dot{\beta}}$ und der Anzahl n der Integrationsschritte. Das heißt, daß mit jedem neuen Loop, in dem der Schwellenwert $\beta_s$ überschritten ist, die Sollgierwinkelgeschwindigkeit weiter reduziert wird. Die additive Konstante S wird je nach Vorzeichen von $\dot{\psi}$ soll entweder hinzuaddiert oder subtrahiert, so daß auf jeden Fall der betragsmäßige Wert der Sollgierwinkelgeschwindigkeit reduziert wird. Erreicht $Intg_n$ nicht man den Schwellenwert $\beta s$, dann wird $\dot{\psi}$ nicht limitiert (Schritt 407).

Bei einem erneuten Durchgang wird wiederum überprüft, ob der Betrag der geschätzten Schwimmwinkelge-

schwindigkeit kleiner als die Schwelle $th_1$ ist. Wenn dies der Fall ist, so wird dies dahingehend interpretiert, daß das Fahrzeug sich wieder stabilisiert hat. Dies hat zur Folge, daß n in Schritt 406 wieder zu 0 gesetzt wird und daß für die Weiterberechnung im Schritt 407 eine Sollgierwinkelgeschwindigkeit zugrunde gelegt wird, die nicht korrigiert wird, also identisch ist mit dem Wert, der als Ergebnis des Fahrzeugreferenzmodells vorliegt. Außerdem wird der Startwert $Intg_{n-1}$ der Integration gleich Null gesetzt.

Überschreitet eine Schwimmwinkelgeschwindigkeit betragsmäßig zwar $th_1$, nicht jedoch $th_2$, so bleibt der alte Wert $Intg_n$ unverändert, d.h. die Integration wird für einen Loop ausgesetzt. Die vorherige Limitierung bleibt erhalten. Sollte der Schwellenwert $th_2$ wieder überschritten werden, wird die Integration fortgeführt..

2.4.2 Korrektur $M_G$

Eine weitere Möglichkeit besteht darin, das Giermoment $M_G$, das vom Regelgesetz 16 berechnet wird, zu manipulieren. Dazu wird die Differenz zwischen dem vorherigen Wert $M_1(k-1)$ zum aktuellen Wert $M_1(k)$ gebildet. Der Index 1 weist darauf hin, daß diese Werte die unmittelbaren Ergebnisse des Giermomentenreglers sind, also noch nicht aufgrund der folgenden Korrektur berechnet worden sind. Diese Differenz wird auf die Loopzeit $T_0$ bezogen und ergibt $\Delta M_1$. Zu diesem Gradienten $\Delta M_1$ wird ein Korrekturgradient hinzuaddiert, der sich aus $\hat{\dot{\beta}}$ multipliziert mit einem Korrektur faktor ergibt. Der so korrigierte Gradient wird multipliziert mit der Loopzeit $T_0$ und zum Giermoment $M(k-1)$ der vorhergehenden Rechnung hinzuaddiert. Das ergibt das aktuelle Moment $M_G(k)$ das der weiteren Berechnung zugrunde gelegt wird,

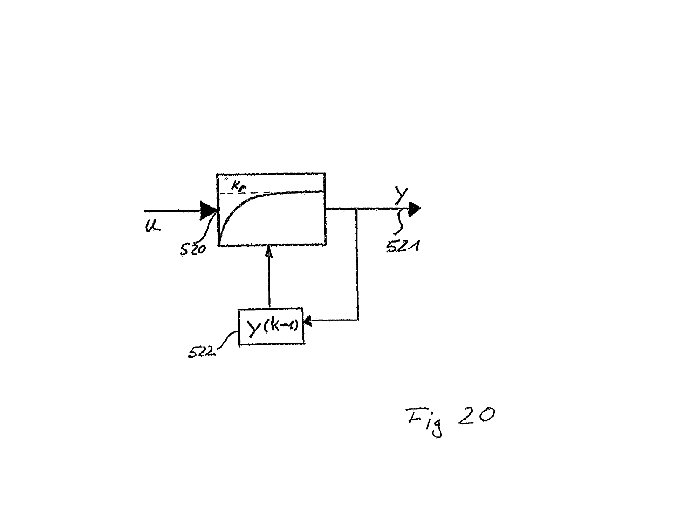

Realisiert wird diese Berechnung durch eine Logik wie sie in Figur 20 dargestellt ist. Die berechneten Momente, die sich aus dem Unterprogramm "Regelgesetz 16" ergeben, werden in ein Schieberegister 420 eingeführt. An der ersten Stelle 421 des Schieberegisters 420 befindet sich jeweils der aktuelle Wert $M_1(k)$; an zweiter Stelle 422 des Schieberegisters 420 befindet sich der vorherige Wert $M_1(k-1)$. Sobald ein neuer Wert $M_1$ vorliegt, wird der Wert aus dem Register 421 in das Register 422 geschoben und der Wert im Register 421 durch den neuen Wert ersetzt. Die Werte in den Registern 421 und 422 werden einer Berechnungslogik 430 zugeführt, die ein $\Delta M$ nach folgender. Formel berechnet:

$$\text{F } 2.28$$

$$\Delta M = M_1(k)\ M_1(k1) + a * \hat{\dot{\beta}} * T_0$$

Der Berechnungslogik 430 wird dazu außerdem aus der kinematischen $\dot{\beta}$-Bestimmung die geschätzte Schwimmwinkelgeschwindigkeit $\hat{\dot{\beta}}$ zugeführt. Weiterhin ist in einem Speicher ein Wert für einen Korrekturfaktor a festgelegt mit dem die Schwimmwinkelgeschwindigkeit in eine Momentenänderung umgerechnet wird. Die Berechnung des neuen Moments $M(k)$ geschieht nach folgender Formel

$$\text{F } 2.29$$

$$M(k) = M(k-1) + \Delta M$$

Im Register 431 wird der aktuelle Wert des korrigierten Moments, im Register 432 der Wert aus der vorherigen Berechnung abgelegt. Der Wert im Register 431 wird der weiteren Berechnung zugrunde gelegt.

2.5 SESP-Gieratenregelgesetz

Das Programm des SESP- Gierratenregelgesetzes 23 vergleicht die gemessene Gierrate mit einer spezifischen SESP-Referenz-Gierrate. Wenn eine Abweichung vorliegt, fordert der Regler ein zusätzliches Giermoment $MG_{SESP}$ zur Korrektur der Abweichung an.

2.5.1 SESP-Referenzsignalbildung

Die SESP-Referenzsignalbildung 24 berechnet die SESP-Referenz-Gierrate, die die vom Fahrer beabsichtigte Gierrate des Fahrzeugs darstellt. Das Ergebnis wird in **s**esp_**psip_ref** gespeichert.

Der SESP-Gierratenregler ist sensitiver als der GMR-Gierratenregler 10. Aus diesem Grund benötigt er einen speziellen Mechanismus, um falsche Eingriffe aufgrund von Sensor- oder Modellfehlern zu vermeiden. Die SESP-Referenz-Gierrate enthält einen Offset **SESP_DPSIP_STORED**, der diese Fehler über eine begrenzte Zeit ausgleicht

Wenn kein Verdacht auf eine Eindrehsituation vorliegt, stellt der Offset **SESP_DPSIP_STORED** die Abweichung zwischen der gemessenen oder geschätzten Gierrate $\dot{\psi}_{Mess}$ und der von der im Fahrzeugmodell 12 berechneten Referenz-Gierrate $\dot{\psi}_{Soll}$ dar.

Aber sobald ein Verdacht auf eine Eindrehsituation vorliegt, wird der Offset konstant gehalten. Ein Verdacht auf eine Eindrehsituation liegt vor, wenn folgende Bedingung erfüllt ist:

xx. SESP-Zustand 31 bis 34 liegt vor (ungleich 35) oder

xxi. eine mögliche vorgelagerte Ursache i bis xviiii für das Eindrehen ist erkannt.

Nun wird die SESP-Referenz-Gierrate $\dot{\psi}_{SESP(ref)}$ berechnet. Die SESP-Referenzgierrate repräsentiert den Fahrerwunsch. Zur Berechnung wird der Offset zur Referenz-Gierrate von der GMR (=AYC) -Referenzgierrate hinzuaddiert:

$$\dot{\psi}\mathrm{GMR_{ref}} + \mathrm{Offset} = \dot{\psi}_{SESP(ref)}$$

Der Offset ist die Differenz zwischen $\dot{\psi}_{Soll}$ - $\dot{\psi}_{Mess}$ bei z.B. Lastwechsel.

Gegenüber der GMR(=AYC)-Referenzgierrate enthält die SESP-Referenzgierrate einen Offset, der gerade so groß ist, daß die SESP-Gierratenabweichung zu Beginn des Lastwechsels oder des Einbremsens Null ist.

Durch diesen Offset werden zum einen etwaige unkompensierte Offsets des Gierratensensors ausgeglichen. Dies ist notwendig, um Fehlregelungen des empfindlichen SESP-Gierratenreglers zu vermeiden. Zum anderen werden durch die Offset-Kompensation nur die Abweichungen vom aktuellen Fahrzeugverhalten ausgeregelt.

Die Figur 31 zeigt die Bildung der SESP-Referenzgierrate für den Fall eines positiven Gierratensensor-Offsets.

Die SESP-Referenzsignalbildung 24 berechnet die Gierratenabweichung $\Delta\dot{\psi}_{SESP}$, die als Eingabe für den SESP-Gierratenregler verwendet wird. Weiterhin zeigt Figur 2, dass diese Eingabe $\Delta\dot{\psi}_{SESP}$ auch der SESP-Aktivierungslogik 25 zur Verfügung gestellt wird.

Die SESP-Gierratenabweichung wird als die Differenz zwischen der gemessenen Gierrate $\dot{\psi}_{Mess}$ und der SESP Referenz-Gierrate berechnet.

Bei der Bildung der Offset-Korrektur ist für bestimmte Anwendungen eine weitere Verfeinerung vorgesehen.

Es ist dazu ein Zustandsautomat vorgesehen, der die folgenden Situationen unterscheidet:

* Sesp_refcomp_idle: SESP-Referenzgrößen werden nicht benötigt

* Sesp_refcomp_straight; SESP-Refererizgrößen können bestimmt werden, sind Für Geradeausfahrt gültig

* Sesp_refcomp_curve: SESP-Referenzgrößen können bestimmt werden, sind für Kurvenfahrt gültig

* Sesp_refcomp_uncertain: SESP-Referenzgrößen werden benötigt, können aber aufgrund der dynamischen Fahrsituation nicht exakt bestimmt werden

Der (zusätzliche) Zustandsautomat ist so angelegt, daß auch während einer laufenden Referenz-Offsetkorrektur zu einem geeigneteren Zustand gewechselt werden kann. Dabei wird bei Bedarf eine Neubestimmung des Offsets getriggert.

Die SESP-Referenzgrößen werden nun abhängig vom aktuellen Zustand folgendermaßen gebildet:

* Sesp_refcomp_idle: nicht gebildet (ersatzweise SESP-Referenz = Istgräße)

* Sesp_refcomp_straight: SESP-Referenz = AYC-Referenz + Offset, wobei der Offset wie beschrieben und z.B. in Figure 31 dargestellt, bestimmt wird

* Sesp_refcomp_curve: falls beim Eintritt in diese Situation Untersteuern vorliegt: SESP-Referenz = AYC-Referenz;

sonst; SESP-Referenz = AYC-Referenz + Offset.

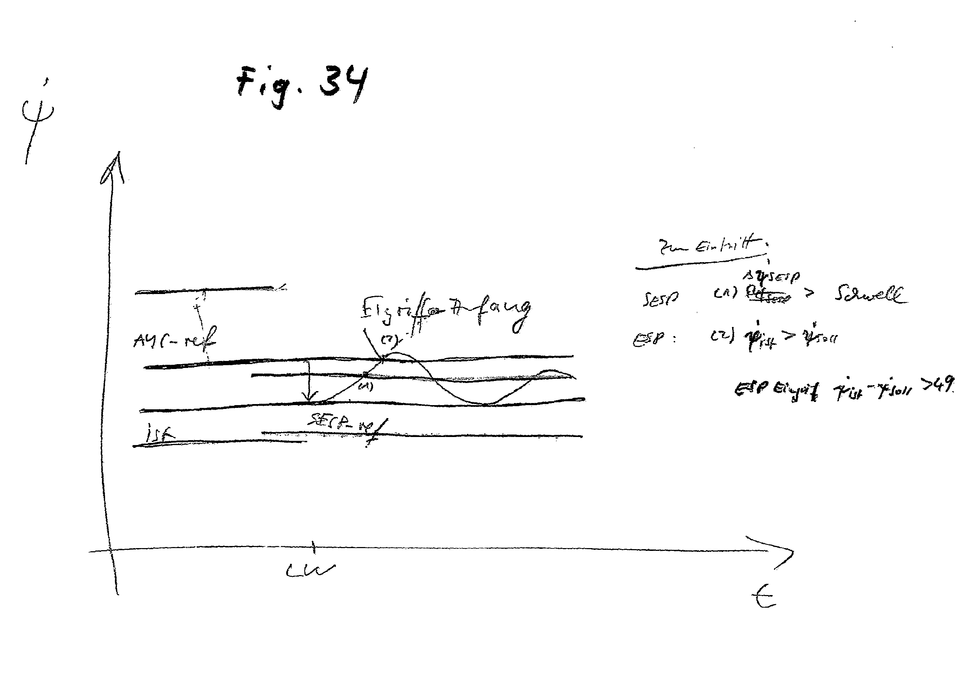

Durch diese Fallunterscheidung wird das Risiko von SESP-Fehlregelungen reduziert. Dies kann in der Figure 34 durch eine Erweiterung dargestellt werden, wobei gilt:

* Sesp_refcomp_uncertain: SESP-Referenz = AYC-Referenz (= "best guess").

Aufgrund der nicht exakt bestimmten SESP-Referenz werden die Aktivierungsschwellen der SESP-Regler in diesem Fall leicht erhöht.

2.5.2 SESP-Aktivierungslogik

das SESP-Gierratenregelgesetz 23 hat Zeitverzögerungen, um sehr kurze Aktivierungen oder Unterbrechungen der Regelung zu vermeiden. Die Verzögerung für den Reglereingang wird als **sesp_dpsip_in_delay** gespeichert. Die Verzögerung für den Reglerausgang wird als **sesp_dpsip_out_delay** gespeichert .

Die kurze Eingangsverzögerung **sesp_dpsip_out_delay = *Sesp_cipsip_in-delay_tab[0]*** wird gewählt, wenn die Tendenz zu einer höheren Übersteuerung vorliegt; d.h. wenn alle folgenden Bedingungen erfüllt sind:

a. $|\Delta\dot{\psi}_{SESP}|$ > Schwellenwert k20; der Schwellenwert k20 ist situationsabhängig, z.B. von der Fahrzeuggeschwindigkeit (Zustände 31,32 empfindlicher als 33,34), der Fahrbahnquerneigung u.dgl.

b. $|\dot{\psi}_{SESPref}| > |\dot{\psi}_{Mess}|$], wobei die Vorzeichen von $|\dot{\psi}_{SESPref}|$ und $|\dot{\psi}_{Mess}|$ gleich sein müssen; die Bedingung gibt an, daß eine Fahrsituation mit Übersteuerverhalten vorliegt; gilt nur für die Zustände 31 oder 32; die Eintrittszeit ist situationsabhängig, z.B. von $\ddot{\psi}_{Mess}$

Die Übersteuerungssituation wird nur als Voraussetzung für den Reglereingang verwendet. Dadurch wird die erste Aktivität des SESP-Gierratenreglers stets ein Übersteuerungseingriff sein. Aber die folgenden Aktivitäten können auch Untersteuerungseingriffe sein, um Übersteuerungsreaktionen des Fahrzeugs vorzubeugen. Das Übersteuerungsflag für die standardmäßige GMR(AYC)-Referenz-Gierrate wird ebenfalls verwendet, um sicherzustellen, dass während der realen Untersteuerungs situationen keine SESP-Übersteuerungseingriffe gestartet werden. Dies erfolgt auch, wenn die Qualität der Referenz reduziert werden könnte.

c. Der Zustandsautomat 22.1 ist in einem Zustand ungleich 35

Für die Bedingungen a. bis c. gilt, daß sie eine bestimmte Zeitdauer erfüllt sein müssen.
Die Deaktivierung ist von den folgenden Bedingungen abhängig:

d. $\Delta\dot{\psi}_{SESpref}$< Schwellenwert k21; Schwellenwert k21 ist situationsabhängig, er ist kleiner als die Eintrittsschwelle k20 oder

e. Zustandsautomat 22.1 ist im Zustand 35; dabei muß der Zustand "SESP inaktiv" über eine bestimmte Zeitdauer bestehen, bevor die Deaktivierung erfolgt. Die Austrittsverzögerung ist situationsabhängig, sie ist Null, falls der Zustand 35 vorliegt, sonst abhängig von $\dot{\psi}_{Mess}$

2.5.3 SESP-Regelgesetz

Das SESP-Regelgesetz 23 berechnet das zusätzliche Giermoment, das vom SESP-Gierratenregler angefordert werden muss, um die SESP-Gierratenabweichung zu korrigieren. Das Ergebnis wird im Wert **sesp_dpsip_req_yaw_tq** gespeichert.
Austrittsschwelle k21 berechnet und auf den Mindestwert Null nach unten begrenzt.Diese dort berechnet Größe ist der Eingangswert für einen P-Regler.
Der Verstärkungsfaktor ist von dem geschätzten Straßenreibungswert abhängig. Da der Reibwert der Reibwertschätzung 13 für die SESP-relevanten Fahrsituationen nicht aktiv ist, wird ein Ersatzwert verwendet, der aus gemessenem aquer und in Abhängigkeit von vref aus der Fahrzeuglängsbeschleunigung ermittelt wird. Dieser Reibwert repräsentiert den aktuell ausgenutzten Reibwert. Der Verstärkungsfaktor des P-reglers ist von diesem Reibwert abhängig. Am Ausgang des Regelgesetzes 23 liegt das Zusatzgiermoment $MG_{SESP}$.

### 2.5.4 SESP-Verteilungslogik

Die SESP-Verteilungslogik verteilt die zusätzliche Giermornentanforderung MG$_{SESP}$ vom SESP auf die Radbremsdrücke. Es gibt je nach Bremsdruck des Fahrers verschiedene Varianten. Der gegenwärtige Giermoment-Verteilungszustand des SESP ist in **SESP_TQDIS_STATE** gespeichert.

Das SESP beeinflusst den Bremsdruck mindestens eines Rades. Für diesen Eingriff sind die folgenden Varianten definiert.

**\* Druckabbaumodus:** Der Radbremsdruck an dem kurveninneren Hinterrad und bei Bedarf auch zusätzlich an dem kurveninneren Vorderrad wird reduziert, bis zu einer vorgesehenen Druckuntergrenze ayc_pdec_sec_pressure_limit erreicht wird. Falls das Potential durch Druckabbau nicht ausreicht um MG$_{SESP}$ umzusetzen, wird gegenwärtig aus Komfortgründen kein Druckaufbau durchgeführt. Ein Druckaufbau ist jedoch nach einer nach Komfortgesichtspunkten ausgerichteten Strategie durchaus auch möglich.

**• *Druckaufbaumodus*:**Der Radbremsdruck am kurvenäußeren Hinterrad wird erhöht, bis die Druckobergrenze, die durch die maximal mögliche Kraft in Längsrichtung definiert ist, erreicht wird; die Druckobergrenze wird durch den Radschlupfregler 26 mit der Bremsschlupfüberwachungsfunktion in Kombination mit einer Unterdrückung der EBV-Funktion sichergestellt; aus Komfortgründen erfolgt die Erhöhung des Drucks über die Funktion ETR.

Für bestimmte Anwendungen ist es eine Verteilung des zusätzlichen Giermoments von SESP auf die Räder vorgesehen.

Im SESP-Druckaufbau-Fall kann jetzt auch auf dem kurvenäußeren Vorderrad Druck aufgebaut werden.

Wieviel Prozent des Druckes des Hinterrades zusätzlich am Vorderrad aufgebaut werden, kann über eine Kennlinie abhängig vom geschätzten minimalen Reibwert SESP_MY_MIN eingestellt werden.

Für ein Bremssystem mit hydraulischer Bremskraftverstärkung hat sich folgende Abhängigkeit als sinnvoll erwiesen: 50% auf Eis, 100% bei mittleren Reibwerten, 0% auf Hochreibwert.

Ein Wert von 0% auf Hochreibwert ist sinnvoll, da dort ein Druckaufbau an der Vorderachse vom Fahrer als unkomfortabel empfunden wird. Andererseits reicht hier ein alleiniger Druckaufbau an der Hinterachse zur Stabilisierung meist schon aus, da auf Hochreibwert mehr Längs kraft aufgebaut werden kann.

Die Möglichkeit des Druckaufbaus an der Vorderachse ist in der Figure 32a dargestellt.

Wird der SESP-Druckaufbau beendet, so wird der Druck am Hinterrad nicht mehr schlagartig sondern langsam abgebaut. Der Fahrkomfort wird erhöht.

Der langsame Druckabbau wird auch angewandt, falls SESP wegen einer beginnenden AYC-Regelung abgebröchen werden muß.

Der Druck wird jedoch schlagartig abgebaut, sobald sich das Vorzeichen des AYC-Zusatzgiermomentes im Vergleich zum vorherigen SESP-Eingriff ändert, Die für auch zuvor beschriebenen SESP-Druckabbau-Fall (Seite 17) und zu Figure 32 bereits erwähnte Option zum zusätzlich Druckabbau an der Vorderachse ist insbesondere für Fahrzeuge mit einem Bremssystem mit Vakuunbremskraftverstärker und zusätzlicher hydraulischer Bremskraftverstärkung, z.B. über die hydraulische Rückförderpumpe des Bremssystems, bevorzugt.

Die Entscheidung ob ein Druckabbau oder Druckaufbau erfolgen soll, hängt von den folgenden Bedingungen ab:

Druckabbau

f. GMR-Regler 10 hat Fährerbremsung P$_{THZ}$ erkannt und

g. PTHZ > Schwellenwert k30

Liegen diese Bedingungen nicht vor, erfolgt Druckaufbau.

Wenn der Druckaufbaumodus aktiv ist, wird MG$_{SESP}$ in Abhängigkeit von vref reduziert. Dadurch wird berücksichtigt, daß das Zusatzgiermoment MG$_{SESP}$ beim Druckaufbau effektiver umgesetzt werden kann, als beim Druckabbau.

Die Entscheidung, ob der Eingriff der Bremse auf der linken oder rechten kurvenäußeren oder kurveninneren Fahrzeugseite erfolgt, wird nach den gleichen Regeln getroffen wie bei der GHR-Giermomentverteilunglogik 2. Selbstverständlich kann auch die SESP-Veteilungslogik 21 zur Entscheidungsfindung herangezogen werden.

Aus der Verteilungslogik 21 gehen unter Beachtung der Begrenzungen des Radschlupfreglers 26 individuelle Raddruckanforderungen vom SESP hervor. Zusätzlich wird den anderen Reglern 7, 8, 9 über ein Flag angezeigt, daß die SESP Regelung aktiv ist.

Dies ist vorteilhaft, da der GMR-Regler 10 den Offset zu dem Eingangssignal $|\Delta\dot{\psi}|$ der Aktivierungslogik 11 addiert, um dem SESP die Möglichkeit zu geben, auch oberhalb seiner Regelschwellen das Fahrzeug in einem gewissen Rahmen zu stabilisieren. Diese Möglichkeit eröffnet in Grenzsituationen, bei fast instabilen Fahrsituationen, dem SESP im Übergangsbereich zu regeln, jedoch nur, wenn SESP zuvor aktiv geworden ist. Der Offset ist veränderbar und kann bis auf Null reduziert werden.

3. Verteilungslogik des GMR-Reglers

3.1 Zusatzgiermoment durch Aufbringung von Bremskräften

Um eine stabile Fahrt des Fahrzeuges auch in einer Kurve zu erreichen, ist es zunächst notwendig, den Lenkwinkel zu erfassen. Der Lenkwinkel repräsentiert die vom Fahrer gewünsche Kurvenbahn des Fahrzeugs, Bei einer stabilen stationären Kurvenfahrt, soll das Fahrzeug mit einem annähernd konstanten Schwimmwinkel und gleichbleibender Gierwinkelgeschwindigkeit die Bahn durchlaufen. Abweichungen von diesem Schwimmwinkel bzw. von dieser Gierwinkelgeschwindigkeit muß der Fahrer durch Gegenlenken ausgleichen. Dies ist aber nicht immer möglich, insbesondere dann nicht, wenn der Fahrer die Kurve mit der Kurvengrenzgeschwindigkeit durchfährt. In solchen Situationen ist es notwendig, das Fahrzeug gezielt abzubremsen und zusätzliche Momente um die Hochachse auf das Fahrzeug aufzubringen, die eine Anpassung der tatsächlichen an die gewünschte Gierwinkelgeschwindigkeit hervorrufen sollen. Regelalgorithmen, die diese Zusammenhänge beschreiben, sind zuvor beschrieben worden, brauchen daher an dieser Stelle nicht näher ausgeführt zu werden.

Es bleibt allerdings die Problematik, ein vom Regelalgorithmus berechnetes zusätzliches Giermoment $M_G$ in geeigneter Weise durch ein gezieltes Aufbringen von Bremskräften zu verwirklichen.

Bei hydraulischen Bremsen besteht die Aufgabe daher praktisch darin, für jede einzelne Radbremse einen Bremsdruck festzulegen. Dabei soll das zu realisierende Moment um die Hochachse mit möglichst geringen Drücken in den einzelnen Bremsen erzielt werden. Es wird daher vorgeschlagen, für jedes Rad einen Koeffizienten zu bestimmen und die Bremsdrücke aus dem zu erzeugenden Fahrzeuggiermoment und den jeweils gewichteten Koeffizienten zu ermitteln.

Wie schon erläutert, ist es insbesondere bei Fahrzeugbremsanlagen, die auf hydraulischer Basis arbeiten, günstig, die Koeffizienten so zu bestimmen, daß unmittelbar der Bremsdruck für die einzelnen Radbremsen ermittelbar ist. Die Gewichtung der Koeffizienten erfolgt auf dem Wege, daß jeder einzelne Koeffizient durch die Summe der Quadrate aller Koeffizienten geteilt wird.

Dabei bestimmt jeder Koeffizient den Zusammenhang zwischen dem Radbremsdruck und dem Anteil der so erzeugten einzelnen Radbremskräfte am Giermoment des Fahrzeugs. Als Größen bei der Bestimmung der einzelnen Koeffizienten fließen Parameter ein, die sich während der Fahrt eines Fahrzeuges ändern. Diese sind insbesondere

- der Lenkwinkel $\delta$
- der Reibwert $\mu$ zwischen Reifen und Fahrbahn,
- das Fahrzeugmasse m
- die Achslastverteilung $N_2$.

Größen, die bei der Berechnung der Koeffizienten einfließen, und die fahrzeugspezifisch bzw. bremsspezifisch sind, sind zum Beispiel für eine Scheibenbremsanlage

- die Fläche A der Bremekolben
- die Anzahl n der Kolben pro Radbremse
- der Reibungskoeffizient $\mu_R$ zwischen Scheibe und Bremsbelag
- das Verhältnis s von effektivem Reibradius zu dynamischem Reifenhalbmesser
- sowie der Wirkungsgrad $\eta$ der Bremse.

Die vorgeschlagene Berechnungsmethode hat den Vorteil, daß sehr schnell aus einem vorgegebenen zusätzlichen Giermoment die entsprechenden Bremsdrücke berechnet werden können. Sollten sich die oben genannten Parameter während der Fahrt ändern, so wird dies über eine Änderung der Koeffizienten in der Bremsdruckberechnung berücksichtigt.

Während einige Einflußgrößen linear in die Berechnung der Koeffizienten eingehen, ist vor allem die Abhängigkeit der Koeffizienten vom Lenkwinkel $\delta$ nichtlinear.

Es hat sich ober gezeigt, daß eine linearisierte Abschätzung der Abhängigkeit zwischen den einzelnen Koeffizienten und dem Lenkwinkel ausreichend gute Ergebnisse liefert.

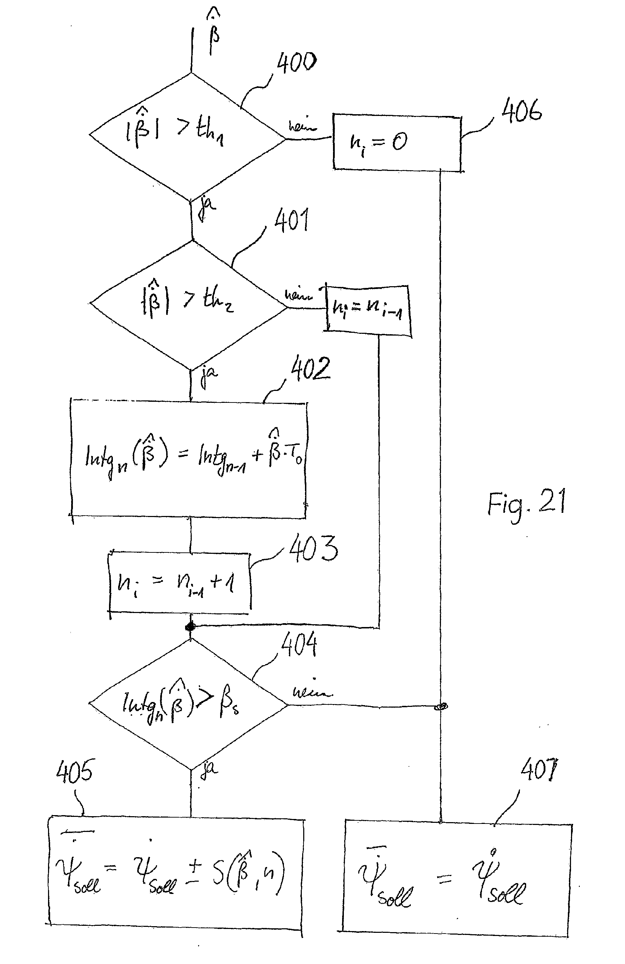

Die Figur 21 zeigt in schematischer Weise ein Fahrzeug in Geradeausfahrt mit vier Rädern 601,602,603,604. Jedem der Räder ist eine Radbremse 605,606,607,608 zugeordnet. Diese können unabhängig voneinander angesteuert werden, wobei durch die von den Radbremsen ausgeübten Radbremsmomente Bremskräfte in den Aufstandsflächen der Räder auf der Fahrbahnoberfläche erzeugt werden. So wird z.B. bei einer Ansteuerung der Radbremse 605 am Rad 601 eine Bremskraft F erzeugt, die wiederum ein Moment M (im Beispiel positiv gezählt) um die Hochachse erzeugt.

Derartige Momente um die Hochachse des Fahrzeuges können gezielt eingesetzt werden, um ein Fahrzeug stabil auf einer vom Fahrer gewünschten Bahn zu halten.

Im Fahrzeug sind weiterhin Sensoren vorhanden. Dazu gehören Radsensoren, die die Winkelgeschwindigkeit der Räder 601,602,603,604 erfassen. Außerdem wird der Lenkradwinkel mit. einem Lenksensor 612 erfaßt. Weiterhin ist ein Sensor 613, für die Gierwinkelgeschwindigkeit vorgesehen.

Aus diesen Sensoren, die einerseits den Fahrerwunsch andererseits das Verhalten des Fahrzeuges erfassen, läßt sich ein zu realisierendes Giermoment errechnen, das, wenn es aufgebracht wird, in der Lage ist, die Gierwinkelgeschwindigkeit des Fahrzeuges sowie seinen Schwimmwinkel mit dem Fahrerwunsch in Übereinstimmung zu dringen. Dazu werden die Radbremsen 605,606,607,608 unabhängig voneinander angesteuert, wozu eine Steuereinrichtung vorgesehen ist, die ein Teil eines komplexen Programms zur Regelung der Fahrstabilität ist.

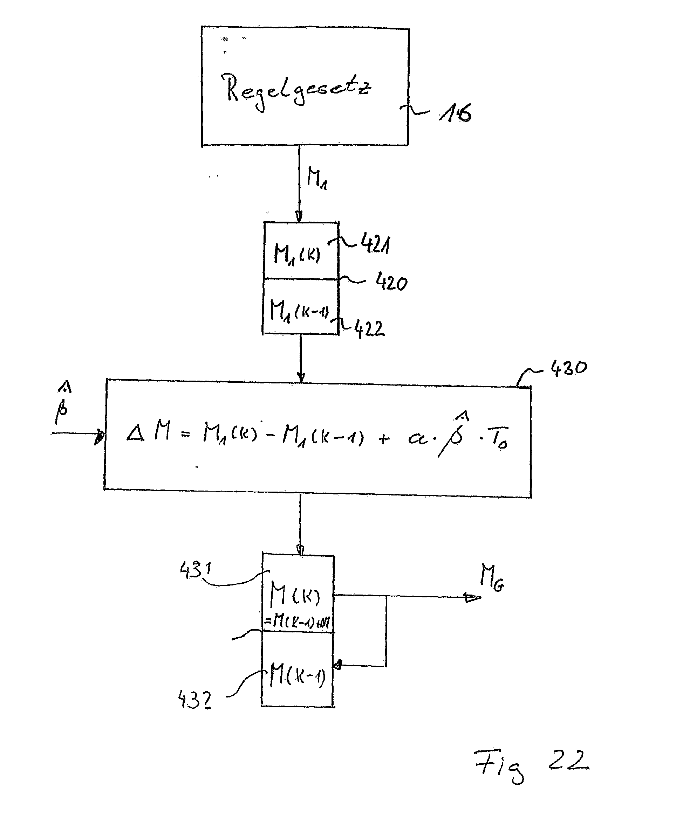

Die prinzipielle Situation ist in der Figur 22 dargestellt. Mit 16 ist ein Programmmodul bezeichnet, daß das Giermoment $M_G$ errechnet. Die Figur 22 zeigt eine Steuervorrichtung, die Drücke $p_{xx}$ berechnet, die in die einzelnen Radbremsen 605,606,607,608 eingesteuert werden sollen. Die ermittelten Druckwerte 622, 623,624,625 können weiter ausgewertet werden und in entsprechende Steuersignale für die Radbremsen 605,606,607,608 umgewandelt werden.

Die Steuervorrichtung selbst besteht aus zwei Teilen, nämlich aus einem ersten Teil 630, in dem Koeffizienten $c_{xx}$ für die einzelnen Räder berechnet werden. Die Koeffizienten $c_{xx}$ stellen eine lineare Beziehung zwischen dem Druck in der Radbremse und dem anteiligen Giermoment her, das durch die Bremskraft an dem entsprechenden Rad hervorgerufen wird. Im zweiten Teil 631 werden durch Gewichtung der einzelnen Koeffizienten sowie unter Berücksichtigung des zu realisierenden Giermomentes $M_G$ die einzelnen Druckwerte $p_{xx}$ 622,623,624,625 berechnet. Die Druckwerte sowie die Koeffizienten werden mit Indizes bezeichnet.

Es gilt:

v:    vorne
l:    links
h:    hinten
r:    rechts
x:    steht entweder für v/l oder h/r

Der erste Beirechnungsteil 630 berücksichtigt den Lenkwinkel der über eine Auswertung 632 des Lenksensors 612 dem Rechengang zur Verfügung gestellt wird. Zur Berechnung der Koeffizienten wird der Reibwert µ berücksichtig, der in einer Auswerteeinheit 633 aus dem Raddrehverhalten abgeleitet wird. (s. auch Abschnitt 2.1) Das Raddrehverhalten wird wiederum durch ein Signal der Radsensoren an den einzelnen Rädern ermittelt. Weiter hin fließt die Fahrzeugmasse sowie die Lastverteilung $N_z$ ein, die in einer Auswerteeinheit 634 ermittelt werden, in der das Fahrzeugverhalten in verschiedenen Situationen analysiert wird. Der erste Programmteil 630 hat Zugriff zu einem Speicher 635, der die oben genannten fahrzeugspezifischen und radbremsspezifischen Werte enthält.

Aus den genannten Werten wird für jedes Rad ein Koeffizient $c_{xx}$ errechnet, wobei die Werte 640,641,642,643 parallel oder nacheinander berechnet werden können. Die Berechnung erfolgt nach einer Funktion, die im Programm implementiert ist. In dieser Funktion sind die bekannten Zusammenhänge zwischen Bremsdruck und Bremskraft berücksichtigt. In der Regel ist der Zusammenhang lineare. Lediglich der Lenkwinkel δ muß gesondert berücksichtigt werden. Wie in geeigneter Weise der Lenkwinkel berücksichtigt werden kann, wird weiter unten beschrieben.

In dem zweiten Berechnungsschritt 631 werden entweder parallel oder sukzessive aus den einzelnen Koeffizienten 640,641,64,643 nach folgender Formel die Druckwerte für die einzelnen Radbremsen ermittelt;

F 3.1a

$$p_{xl} = \frac{c_{xl}}{c_{vl}^2 + c_{vr}^2 + c_{hl}^2 + c_{hr}^2} * M_G$$

F 3.1b

$$p_{xr} = \frac{c_{xr}}{c_{vl}^2 + c_{vr}^2 + c_{hl}^2 + c_{hr}^2} * M_G$$

Die Berechnung der einzelnen Drücke nach dieser Formel hat den Vorteil, daß, um das berechnete Bremsmoment zu erzielen, nur relativ geringe Drücke in die Radbremsen eingesteuert werden müssen. Zum weiteren kann die Bremsdrucksteuerung sehr empfindlich und schnell auf Änderungen insbesondere des Lenkwinkels und der Reibwerte reagieren.

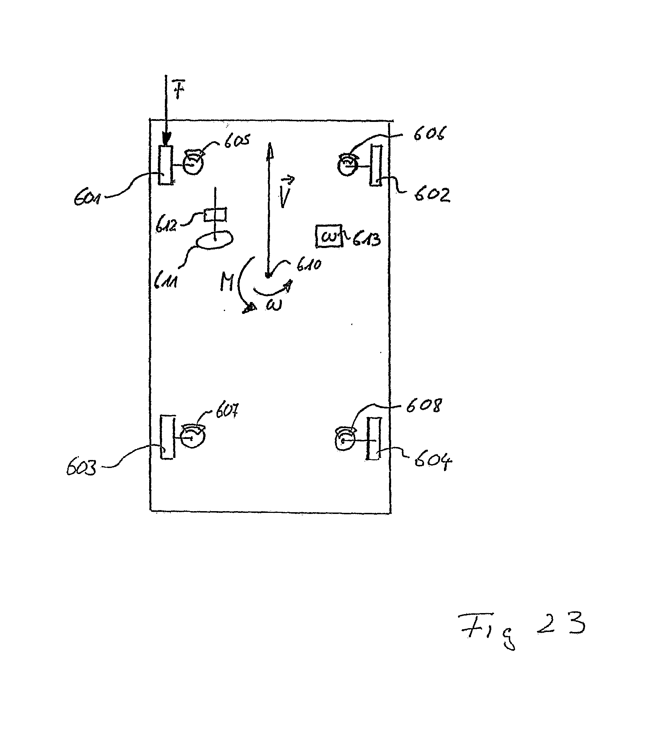

Der Lenkwinkel $\delta$ wird wie folgt bei der Berechnung der Koeffizienten berücksichtigt: Figur 23 zeigt dazu eine schematische Darstellung eines Fahrzeuges, wobei die Vorderräder 601 und 602 eingeschlagen dargestellt sind. Mit S ist der Abstand der Vorderränder bezeichnet, mit $l_v$ der Abstand des Schwerpunktes 610 zur Vorderachse.

Die Radebenen 650, 651 schließen Lenkwinkel 652,653 mit der Längsachse des Fahrzeuges ein. Der Einfachheit halber wird angenommen, daß die Lenkwinkel $\delta$ 652,653 gleich groß sind. Der effektive Hebelarm $h_l$ bzw. $h_r$ bezogen auf die Bremskraft F, die in der Radebene 650,651 wirkt, errechnet sich aufgrund von Näherungsüberlegungen für kleine Lenkwinkel wie folgt.

F 3.2a

$$h_r = \frac{s}{2} + \delta * l_v$$

F 3.2b

$$h_l = \frac{s}{2} \; \delta * l_v$$

Da die Näherung "kleine Lenkwinkel" nicht immer erfüllt ist, hat es sich als günstig erwiesen, ggf. mit der folgenden Formel zu rechnen.

F 3.3a

$$h_r = \frac{s}{2} + \delta * \sqrt{\frac{s^2}{4} + l_v^2}$$

F 3.3b

$$h_l = \frac{s}{2} \; \delta * \sqrt{\frac{s^2}{4} + l_v^2}$$

Sollten die berechneten Hebelarme kleiner Null werden, werden sie zu Null gesetzt.

Die Radkoeffizienten $c_{xx}$ lassen sich nun wie folgt berechnen, nämlich zu

F 3.4

$$c_{xx} = c_{hydxx} * h_{l,r,}$$

wobei in $c_{hydxx}$ alle Parameter außer dem Lenkwinkel $\delta$ berücksichtigt sind.

Auf diese Weise lassen sich die Koeffizienten darstellen als das Produkt zweiter Terme, wobei der eine Term den effektiven Hebelarm bestimmt und der andere Term vom Lenkwinkel unabhängig ist.

3.2 Zusatzgiermoment durch Reduzierung von Seitenkräften

Eine Methode, einseitig wirkende Bremskräfte aufzubringen, besteht darin, die Radbremsen derart anzusteuern, daß die Räder unterschiedlich stark abgebremst werden. Ein Verfahren, das dies bewerkstelligt, ist im vorherigen Abschnitt beschrieben worden.

Dieses Verfahren stößt dann an eine Grenze, wenn eine Fahrstabilitätsregelung während einer Pedalbremsung erfolgen soll, wenn also schon aufgrund der Abbremsung durch den Fahrer ein bestimmter Bremsdruck in den Radbremsen eingestellt ist. Im Prinzip läßt sich das oben beschriebene Verfahren auch für diesen Fall anwenden. Anstelle absoluter Drücke werden Änderungen der schon eingestellten Bremsdrücke ermittelt.

Dabei treten allerdings die folgenden Probleme auf. Ist in eine Radbremse schon eine sehr hoher Druck eingesteuert, so daß sehr hohe Bremskräfte realisiert werden, so würde eine Steigerung des Bremsdruckes nicht unbedingt zu einer Steigerung der Bremskraft führen, da die Haftgrenze zwischen Reifen und Fahrbahn erreicht ist. Der im oben genannten Modell unterstellte lineare Zusammenhang zwischen Bremsdruck und Bremskraft ist in diesem Fall nicht mehr gegeben.

Die nicht zu überschreitende Grenze der Bremskraft auf der einen Fahrzeugseite kann im Sinne einer Giermomentregelung kompensiert werden durch eine Bremskraftminderung auf der anderen Fahrzeugseite.

Dies hat allerdings den Nachteil, daß mit Minderung der Bremskraft auch die Verzögerung des Fahrzeuges gemindert wird. Das ist nicht immer hinnehmbar, da bei einem vom Fahrer eingeleitetem Bremsvorgang das Fahrzeug auf möglichst kurze Distanz zum Stillstand gebracht werden soll. Eine zu starke Minderung der tatsächlichen Verzögerung des Fahrzeugs gegenüber dem Fahrerwunsch kann daher im allgemeinen nicht hingenommen werden. Zur Lösung dieses Problems wird folgender Weg eingeschlagen.

Die Radbremsen zumindest eines Rades wird so angesteuert, daß der Längsschlupf 2 des Rades so eingestellt wird, daß er größer ist als der Längsschlupf, bei der der maximale Kraftschluß erreicht wird. Bei diesem Verfahren wird ausgenutzt, daß die übertragene Bremskraft, das ist die Längskraft am Reifen, ihren maximalen Wert bei einem Längsschlupf von ca. 20 % (0 % - freirollendes Rad; 100 % - blockiertes Rad) erreicht und bei Werten über 20 % die übertragbare Bremskraft nur wenig abnimmt, so daß keine erhebliche Einbuße bei der Verzögerung des Fahrzeuges bei einem Radschlupf zwischen 20 % und 100 % auftritt.

Betrachtet man aber gleichzeitig die übertragbare Seitenkraft, das ist die Kraft, die senkrecht zur Radebene wirkt, so zeigt die eine starke Abhängigkeit vom Radschlupf , der sich darin äußert, daß mit zunehmendem Schlupf die übertragbare Seitenkraft stark annimmt. Im Schlupfbereich von über 50 % zeigt das Rad ein ähnliches Verhalten wie ein blockiertes Rad. Das heißt es werden kaum noch Seitenkräfte aufgebracht.

Durch eine geschickte Auswahl der Räder, an denen ein hoher Längsschlupf eingestellt wird, kann ein kontrolliertes Schleudern des Fahrzeuges provoziert werden, wobei die mit dem Schleudern hervorgerufene Änderung des Gierwinkels der gewünschten Änderung entsprechen soll. Da bei diesem Verfahren die Längskräfte im wesentlichen erhalten bleiben, die Seitenkräfte aber deutlich reduziert werden, kann eine Kontrolle der Gierwinkelgeschwindigkeit erfolgen, ohne daß die Fahrzeugverzögerung zu stark reduziert wird.

Die Auswahl des Rades, das zumindest kurzzeitig mit einem erhöhten Längsschlupf gefahren wird, erfolgt nach folgenden Regeln. Dazu betrachtet man eine vom Fahrer gewollte Kurvenfahrt nach rechts. Für eine Kurvenfahrt nach links gelten entsprechende "gespiegelte" Regeln. Dabei kann der Fall auftreten, daß das Fahrzeug sich nicht so stark in die Kurve hineindreht wie erwartet. Mit anderen Worten, das Fahrzeug untersteuert. In diesem Fall wird das hintere kurveninnere Rad mit erhöhten Schlupfwerten betrieben. Dreht sich das Fahrzeug allerdings zu stark in die Kurve, dieser Fall wird als Übersteuern bezeichnet, so wird das vordere kurveäußere Rad mit hohen Schlupfwerten betrieben.

Zusätzlich kann der Druckabbau an einem Vorderrad unterbunden werden. Dies geschieht nach folgenden Regeln. In einer Fahrsituation, in der das Fahrzeug sich untersteuernd verhält, wird der Bremsdruckabbau am kurvenäußeren vorderen Rad unterbunden. In einer Situation, in der sich das Fahrzeug übersteuernd verhält, wird der Druckabbau am kurveninneren vorderen Rad unterbunden.

Die tatsächliche Steuerung des Bremsdruckes kann wie folgt erfolgen. Wie schon zuvor erläutert wurde, wird der Bremsdruck in den einzelnen Radbremsen in Abhängigkeit von dem zu erzielenden Giermoment und den gewichteten Radkoeffizienten bestimmt.

Bei der Berechnung der Koeffizienten kann ein vom Bremsschlupf abhängiger Faktor eingeführt werden, der derart nachgeregelt wird, daß sich der oben beschriebene gewünschte Bremsschlupf einstellt. Die Begrenzung des Druckabbaus an einem Rad kann durch Festlegung einer unteren Schwelle für den entsprechenden Koeffizienten erzielt werden.

Im folgenden soll das in dem Steuerprogramm der Bremsanlage implementierte Verfahren näher erläutert werden.

Das Steuerprogramm berechnet aufgrund von gewichteten Koeffizienten den Bremsdruck, der in jeder einzelnen Radbremse erzeugt werden muß Problematischer wird die Berechnung, wenn das Fahrzeug gebremst wird, insbesondere dann, wenn es unter Ausnutzung der Haftschlußgrenze zwischen Reifen und Fahrbahn verzögert wird. In solchen Fällen ist es durchaus möglich, daß zunächst eine Antiblockierregelung einsetzt, bevor eine überlagerte Fahrstabilitätsregelung erforderlich wird.

In solchen Fällen können die prinzipiellen Überlegungen für ein ungebremstes Fahrzeug nicht übernommen werden, da zum Beispiel bei der Erhöhung eines Druckes in einer Radbremse die entsprechende Bremskraft nicht linear anwächst, weil die Haftschlußgrenze erreicht ist. Eine Erhöhung des Drucks in dieser Radbremse würde also keine zusätzliche Bremskraft und damit kein zusätzliches Moment erzeugten.

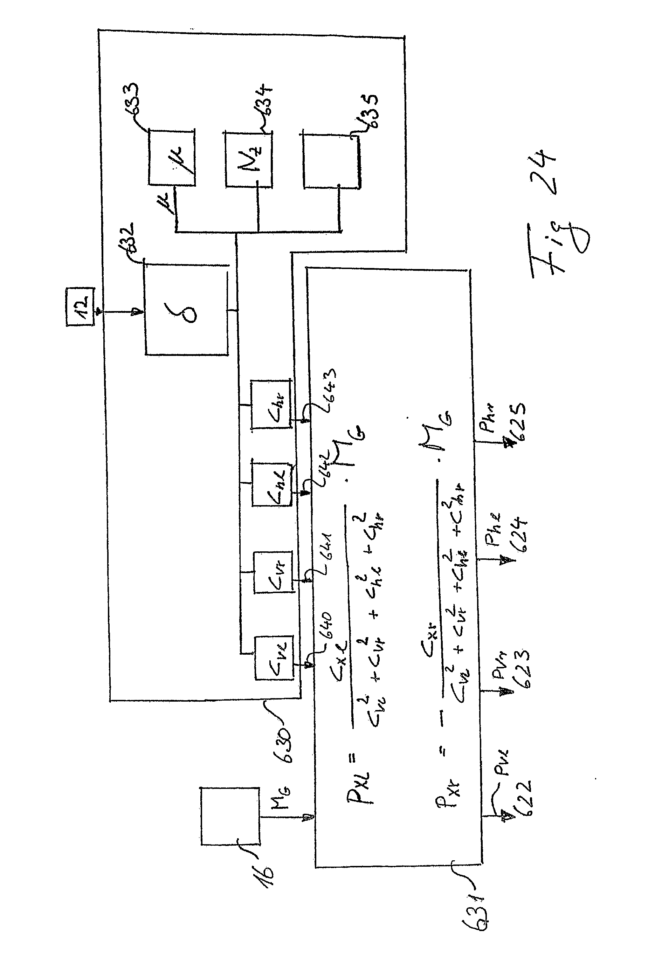

Zwar kann der gleiche Effekt, ein zusätzliches Giermoment zu erzeugen, durch die Minderung des Radbremsdrucks des anderen Rades der Achse hervorgerufen werden. Damit würde aber insgesamt eine Verringerung der Bremskraft bewirkt werden, was wiederum mit der Forderung kollidiert, daß das Fahrzeug auf möglichst kurze Distanz zum Stillstand gebracht werden soll. Es wird daher das in Figur 24 gezeigte Verhalten von Fahrzeugrädern ausgenützt. Diese Diagramm zeigt auf der X-Achse Schlupfwerte $\lambda$ zwischen 0 und 100 %, wobei mit 0 % ein freirollendes Rad und mit 100 % ein blockiertes Rad markiert ist. Die Y-Achse zeigt die Reib- und Seitenkraftwerte $\mu_B$ und $\mu_s$ im Wertebereich zwischen 0 und 1. Die durchgezogenen Linien zeigen die Abhangigkeit des Reibwertes vom Schlupf für unterschiedliche Schräglaufwinkel $\alpha$. Insbesondere für kleine Schräglaufwinkel erkennt man, daß die Kurve einen Maximumwert im Bereich Schlupf $\lambda$ = 20 % hat. In Richtung 100 % nimmt der Reibwert leicht ab. Für einen Schräglaufwinkel von 2□ beträgt der maximale Reibwert ca. 0,98, während er bei $\lambda$ = 100 % noch den Wert 0,93 aufweist. Betrachtet man dagegen die Seitenkraftwerte, so ergibt sich insbesondere für größere Schräglaufwinkel eine extreme Abnahme über den Schlupfbereich. Für einen Schräglautwinkel von 10□ liegt der Seitenkraftwert für einen Schlupfwert von 0 % bei 0,85 und sinkt für Schlupfwerte von nahezu 100 % auf 0,17.

Den Kurven der Figur 24 kann somit entnommen werden, daß bei Schlupfwerten im Bereich zwischen 40 und 80 % relativ hohe Bremskräfte, aber nur geringe Seitenkräfte übertragen werden können.

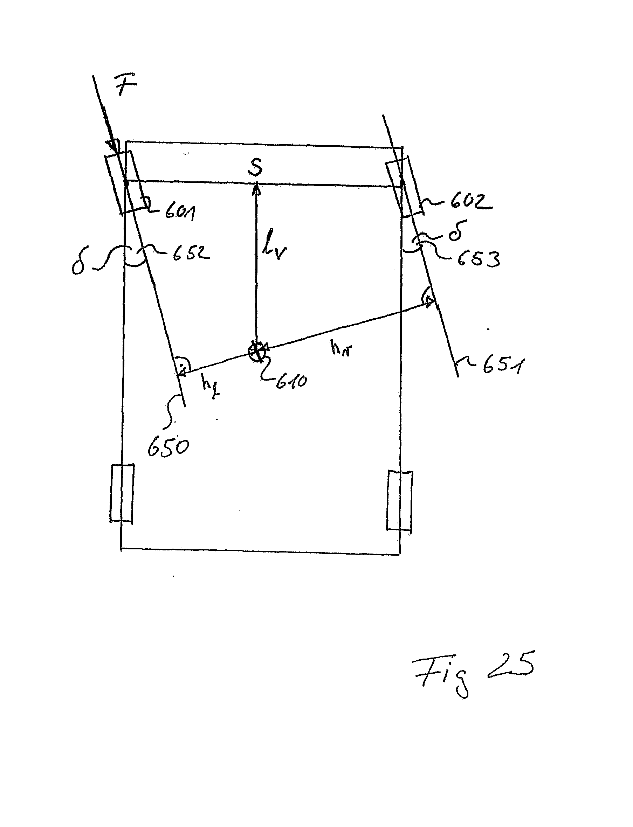

Dieses Radverhalten kann ausgenutzt werden, um gezielt die Seitenkraft eines bestimmten Rades am Fahrzeug zu verringern. Die Auswahl des Rades erfolgt nach dem folgenden Schema, was anhand der Figuren 25a und 25b näher erläutert werden soll.

Die Figur 25 a, b zeigt ein Fahrzeug in schematischer Darstellung in einer Rechtskurve. Entsprechend dem Kurvenradius und der Geschwindigkeit des Fahrzeuges muß sich das Fahrzeug. um seine Hochachse drehen, das heißt es muß eine bestimmte Gierwinkelgeschwindigkeit im Uhrzeigersinn vorliegen.

Das Fahrzeug verfügt, wie schon erläutert, über einen Gierwinkelsensor. Weicht die gemessene Gierwinkelgeschwindigkeit $\dot{\psi}_{Mess}$ von der zu erzielenden $\dot{\psi}_{soll}$ ab, so muß ein zusätzliches Moment $M_G$ um die Hochachse des Fahrzeuges aufgebracht werden.

Weicht die gemessene Gierwinkelgeschwindigkeit in der Weise von der zu erzielenden ab, daß das Fahrzeug sich nicht genügend dreht, so liegt ein sogenanntes untersteuerndes Verhalten vor. Es muß ein zusätzliches Moment aufgebracht werden, das in dieser Situation negativ gezählt wird. Es soll bewirken, daß sich das Fahrzeug in die Kurve hineindreht. Dies könnte in vorliegendem Fall dadurch erreicht werden, daß der Bremsdruck in den rechten Fahrzeugrädern erhöht wird.

Wenn das Fahrzeug aber schon vom Fahrer gebremst wird, kann es möglich sein, daß diese Räder schon maximale Bremskraft übertragen. Wenn dies von einer Auswerteelektronik festgestellt wird, wird der Druck in der rechten Hinterradbremse so gesteigert, daß das Rad bei Schlupfwerten im Bereich zwischen 40 und 80 % läuft. Das Rad 604 ist daher mit einem "$\lambda$" markiert. Dies hat, wie schon erläutert, eine erhebliche Senkung der Seitenkraft zur Folge, Es werden also nur noch geringe Seitenkräfte am rechten Hinterrad aufgebaut, was zur Folge hat, daß das Fahrzeug mit dem Heck nach links ausbricht, also eine Drehung im Uhrzeigersinn beginnt. Die Minimierung der Seitenkraft wird solange beibehalten, bis die tatsächliche Gierwinkelgeschwindigkeit $\dot{\psi}_{Mess}$ der Soll-Gierwinkelgeschwindigkeit $\dot{\psi}_{soll}$ des Fahrzeuges entspricht.

In der Figur 25b ist die Situation eines übersteuernden Fahrzeuges dargestellt. Das Fahrzeug dreht sich schneller um die Hochachse, als dies einer errechneten Soll-Gierwinkelgeschwindigkeit entspricht. In diesem Fall wird vorgeschlagen, die Seitenkraft am vorderen linken Rad 601 zu senken. Dies erfolgt ebenfalls dadurch, daß an diesem Rad Schlupfwerte zwischen 40 und 80 % eingesteuert werden. Das Rad 601 ist daher hier mit einem "$\lambda$" markiert.

Für beide Fälle kann im Steuerprogramm ein Unterprogramm abgelegt werden, das eine weitere Druckabsenkung am kurvenäußeren Vorderrad 601 für den Fall des Untersteuerns (Figur 25a) bzw, am kurveninneren Vorderrad 602 für den Fall des Übersteuerns (Figur 25b) bewirkt wird. Diese Räder sind jeweils mit "$p_{min}$" markiert. Für eine Kurvenfahrt nach links erfolgen die entsprechenden Ansteuerungen seitenverkehrt.

Die Regelung des Drucks in den einzelnen Rädern kann nun auf die Weise erfolgen, daß für jedes einzelne Rad ein Koeffizient bestimmt wird, der den Zusammenhang zwischen Druckänderung und dem berechneten zusätzlichen Giermoment $M_G$ darstellt.

Diese Koeffizienten sind eine Funktion von Parametern, die das Fahrzeug bzw. die Radbremsen beschreiben, sowie von Größen, die sich während einer Fahrt ändern. Dies sind insbesondere der Lenkwinkel $\delta$ und der Reibwert $\mu$ der Paarung Straße/Reifen (s. auch Abschnitt 3.1). Für die oben erwähnte Steuerung wird nun zusätzlich eine Abhängigkeit vom Längs - schlupf des jeweiligen Rades eingeführt. Die Unterbindung des Druckabbaus an einzelnen Rädern kann dadurch realisiert werden, daß für die Koeffizienten untere Grenzen definiert werden, wobei die errechnete Größe der Koeffizienten durch den Mindestwert ersetzt wird, falls der Mindestwert unterschritten wird.

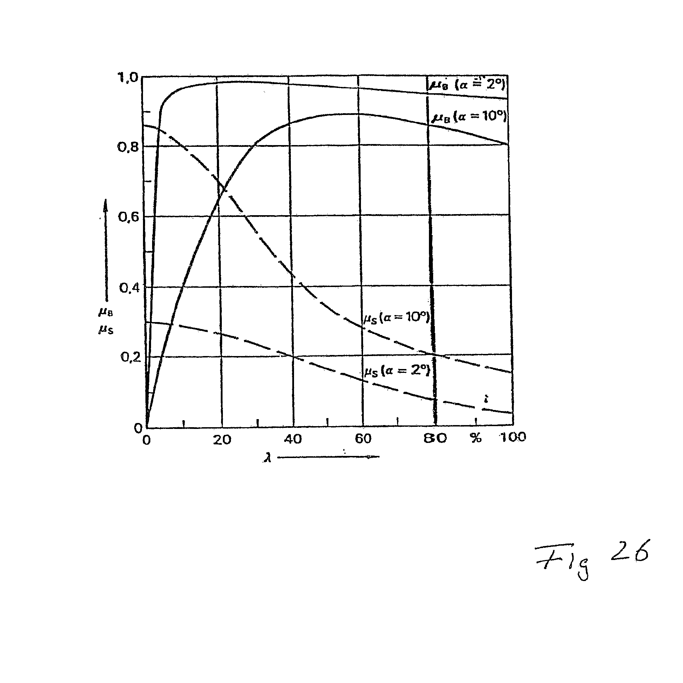

In Figur 26 ist ein entsprechender Algorithmus dargestellt. Zunächst wird das zusätzliche Giermoment $M_G$ errechnet (Programm 640). Aus diesem Moment werden die zugehörigen Bremskraftänderungen bzw. Bremsdruckänderungen für die einzelnen Räder ermittelt (Programm Teil 641). Die ermittelten Bremsdrücke werden mit Schwellen $p_{th}$ verglichen, die unter anderem von der Reibwertpaarung Straße/Reifen bestimmt werden (Raute 642). Die Schwellen $p_{th}$ legen fest, ob eine weitere Steigerung des Radbremsdruckes mit einer gleichzeitigen Erhöhung der Bremskraft möglich ist. Bleiben die einzusteuernden Drücke unterhalb dieser Grenzwerte, so erfolgt die Steuerung nach dem in Abschnitt 3.1 erwähnten Verfahren. Liegen die berechneten Bremsdrücke oberhalb dieser Schwellenwerte, so erfolgt die Berechnung der Drücke gemäß dem oben vorgestellten Schema 644.

4. Prioritätsschaltung

Aus dem Zusatzgiermoment $M_G$ werden mittels einer Verteilungslogik die in den Radbremsen einzustellenden Drücke errechnet (Abschnitt 3).

Aus diesen Druckwerten werden in einem unterlagerten Druckregelkreis Steuersignale für Ein- und Auslaßventile errechnet und ausgegeben. In diesem unterlagerten Druckregelkreis werden die tatsächlichen Radbremsdrücke mit den errechneten in Einklang gebracht.

Wenn auch Steuersignale anderer Regler (ABS7, ASR8, EBV9) einbezogen werden sollen (Abschnitt 1.) ist es notwendig, daß auch deren Steuersignale zunächst mit Hilfe eines im Rechner abgelegten hydraulischen Modells der Radbremsen in Druckwerte umgerechnet werden.

Die Druckanforderungen des GMR-Reglers 10 werden dann mit den Druckanforderungen des ABS-Reglers und weiterer Regler in Bezug gesetzt. Dies geschieht in einer Prioritätsschaltung, die entscheiden, welchen Anforderungen der Vorzug zu geben ist, bzw. in wie weit gemittelte Drücke an die Drucksteuerung 5 für die Radbremsen ausgegeben werden. Die Drucksteuerung 5 wiederum rechnet die Drücke in Ventilschaltzeiten um.

Der Prioritätssehaltung können anstelle von Solldrücken auch Solldruckänderungen zugeführt werden (s. Abschnitt 7).

In diesem Fall führt die Prioritätsschaltung 3 die Aufgabe der Druckänderungen $\Delta p$ an ihrem Ausgang nach der Regel durch, daß die Forderung nach einer Druckabsenkung an einem der Räder bevorzugt erfüllt wird und die Forderung, den Druck in einer Radbremse zu halten, Priorität gegenüber der Forderung nach Druckerhöhung hat. Damit werden die einzelnen Forderungen .an die Prioritätsschaltung nach der Regel abgearbeitet, daß bei Vorliegen einer Forderung nach Druckabbau Forderungen nach Aufrechterhaltung des Druckes oder nach Druckaufbau ignoriert werden. Auf gleiche Weise wird kein Druckaufbau vorgenommen, wenn Druckhalten gefordert ist.

5. Prioritätsschaltung mit direktem Vergleich von Ventilschaltzeiten

Alternativ hierzu kann auch eine andere Methode angewandt werden.

Die Verteilungslogik errechnet aus dem Zusatzgiermoment $M_G$ nicht Drücke, sondern unmittelbar Ventilschaltzeiten, wie die anderen Regler auch. Die Ventilschaltzeiten des GMR können somit verglichen werden mit den angeforderten Ventilschaltzeiten beispielsweise des ABS. In der Prioritätsschaltung werden dann nicht - wie bisher unterschiedliche Druckanforderungen bewertet, sondern unterschiedliche Ventilschaltzeiten.

Um Ventilschaltzeiten zu erhalten, errechnet die Verteilungslogik zunächst einzustellende Druckänderungen für jede Radbremse.

Mittels eines nachgeschalteten nichtlinwaren Regelelements werden aus den Druckänderungen Schaltzeiten für die Ansteuerung für die einzelnen Radbremsen berechnet.

Dieses nichtlineare Regelelement kann z. B. ein Zähler sein.

Dieser Zähler setzt die vorgegebenen Druckänderungen in Taktzahlen um. Dazu wird die Loopzeit $T_0$ in etwa 3 bis 10 Schaltintervalle (Takte) unterteilt. Die maximale Zahl der Takte pro Loopzeit ist eine feste Größe, die sich nach der zu erzielenden Regelgüte bestimmt.

Durch die errechnete Taktzahl wird festgelegt, wie lange ein Ventil innerhalb einer Loopzeit angesteuert sein soll.

Da im allgemeinen zwei Ventile pro Radbremse vorhanden sind, wobei das eine Ventil (Einlaßventil), die Druckmittelzufuhr zur Radbremse und das andere Ventil (Auslaßventil), den Druckmittelablaß aus der Radbremse regelt, sind insgesamt acht Signale zu generieren.

Diese Taktzahlen werden der Prioritätsschaltung zugeführt, die in weiteren Kanälen die Taktzahlen weiterer Regler aufnimmt.

Die Prioritätsschaltüng entscheidet, welchem Regler Vorrang zu geben ist, welche Taktzahl also zur tatsächlichen Ventilsteuerung übernommen wird.

Die Reaktion des Fahrzeuges auf die durch die Betätigung der Radbremsen erzeugten Bremskräfte ist eine geänderte Gierwinkelgeschwindigkeit. Diese wird vom GMR-Regler 10 erfaßt, der nun wiederum ein neues Zusatzgiermoment ermittelt.

Es werden also an keiner Stelle des Regelkreises Bremsdrücke berechnet oder eingestellt. Die Regelalgorithmen benötigen daher keine Information über die Radbremse, insbesondere keine Information über den Zusammenhang von Volumenaufnahme der Radbremsen und den sich daraus ergebenden Bremsdrücken.

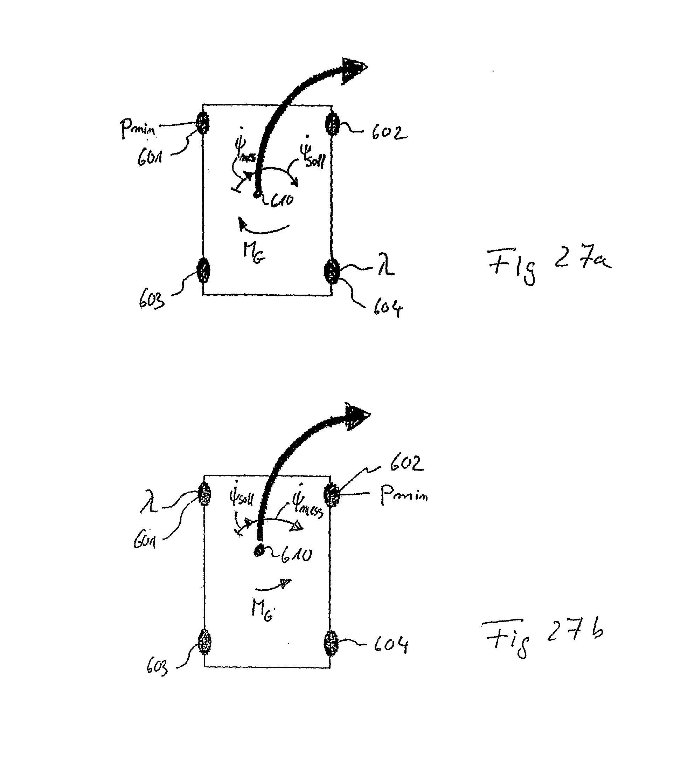

Eine Möglichkeit zur Errechnung der Taktzeiten wird anhand von Fig. 27 erläutert.

Aus dem Zusatzgiermoment $M_G$ werden über die Verteilungslogik 700 Bremsdrücke errechnet, die in den einzelnen Radbremsen aufgebaut werden sollen. Wie dies geschieht, kann den Abschnitten 3.1 und 3.2 entnommen werden. Als Ergebnis der Berechnung innerhalb der Verteilungslogik liegen für ein Vierrad-Fahrzeug vier Druckwerte $p_1$ bis $p_4$ vor. Diese Größen müssen in Schaltzeiten für die Ventile umgesetzt werden, die die Druckmittelzufuhr (Druckerhöhung) beziehungsweise den Druckmittelablaß (Dxuckabbau) in bzw. aus den Radbremsen steuern. Die Schaltzeiten für die Ventile werden - wie schon erwähnt - nicht aus den Absolutwerte für die Druckvorgaben berechnet, sondern aus der Änderung in der Druckvorgabe. Daher wird jeder Wert $p_n$ (n = 1 bis 4) einem Schieberegister 701 zugeführt. Auf dem ersten Registerplatz 702 wird der aktuelle Wert eingeschrieben- In den zweiten Registerplatz 703 wird der vorherige Wert aus dem ersten Registerplatz 702 aufgenommen, so daß dort die Druckanforderung aus der vorangegangenen Berechnungsschleife eingeschrieben ist. Dieser Wert wird mit $p_n^*$ bezeichnet.

In einem nächsten Schritt 705 wird aus dem ersten Registerplatz 702 die aktuelle Druckanforderung $p_n$ ausgelesen. Ist dieser Wert 0 oder kleiner als ein Minimalwert, so zweigt das Programm in eine Schleife 706 ein, mit der sichergestellt werden soll, daß der Radbremse so viel Druckmittel entnommen wird, daß der sich einstellende Druck zu Null wird. Dazu wird das Einlaßventil geschlossen und das Auslaßventil über mindestens eine Loopzeit $T_0$ geöffnet.

Liegt der aktuelle angeforderte Druckwert über diesem Minimalwert, so wird die Differenz aus den beiden Registerwerten 702 und 703 gebildet. Dies geschieht im Differenzbildner 707. Die berechnete Druckänderung $\Delta p$ kann entweder größer oder kleiner 0 sein. Ist sie größer 0, muß in der jeweiligen Radbremse der Druck erhöht werden. Ist sie kleiner 0, muß der Druck in der jeweiligen Radbremse erniedrigt werden. Für den Fall der Druckerhöhung durchläuft das Programm den rechten Entscheidungspfad 710. Unter Berücksichtigung der einzu-stellenden Druckdifferenz sowie der Druckanforderung oder falls entsprechende Signale vorliegen, aufgrund des tatsächlichen Drucks in der Radbremse, wird für das Einlaßventil eine Öffnungszeit $\Delta t_{ein}$ berechnet. Die Öffnungszeit $\Delta t_{aus}$ des Auslaßventils wird zu Null gesetzt. Umgekehrt (Entscheidungspfad 711) wird für den Fall der angeforderten Druck-erniedrigung die Öffnungszeit $\Delta t_{ein}$ des Einlaßventils zu Nullgesetzt, während die Öffnungszeit $\Delta t_{aus}$ aus des Auslaßventils aus der angeforderten Druckdifferenz und dem aktuellen Druck in der Radbremse bzw. dem angeforderten Druck, der im ersten Registerplatz 702 eingeschrieben ist, berechnet.

In der Regel liegt ein linearer Zusammenhang zwischen der Öffnungszeit $\Delta t$ und der beabsichtigten Druckänderung $\Delta p$ vor.

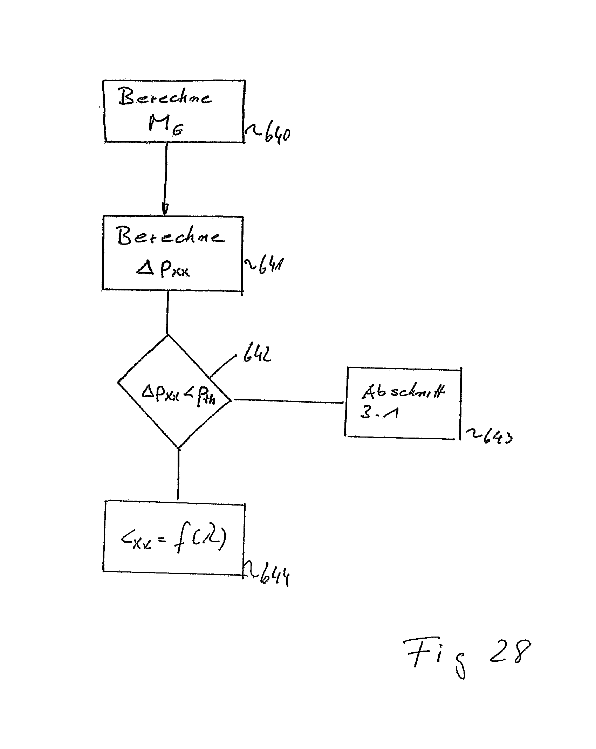

Wie erläutert wird nicht mit den Öffnungszeiten selbst gerechnet, sondern mit Taktzahlen. Dies ist im Diagramm der Fig. 28 näher erläutert. Die oben beschriebenen Berechnungen werden in gleichbleibenden Zeitabständen (Loopzeit $T_0$) durchgeführt, wobei als Ergebnis einer Berechnung die Steuersignale für die Ventile der Radbremsen im nächsten Loop festgelegt werden. Eine Loopzeit $T_0$ beträgt ca. 3 ms.

Je nach dem wie fein die Regelung laufen soll, wird jede Loop-Zeit $T_0$ in N Zeitabsschnitte unterteilt.

In dem Diagramm der Fig. 28 ist eine Unterteilung in sechs Schritte vorgesehen. Die Schaltzeiten für die Ventile werden dann nicht mehr als Zeitgrößen ausgegeben, sondern als Anzahl der Takte innerhalb eines Loops, in der das Ventil geöffnet sein soll. Für n = 3 ergibt sich z. B., wie der Fig. 28 zu entnehmen ist, eine Öffnungszeit von 1,5 ms.

Sollte die angeforderte Öffnungszeit größer sein als die Loop-Zeit, wird n auf den jeweils maximalen Wert N gesetzt (im dargestellten Beispiel auf sechs).

Diese Berechnung wird für jede Radbremse durchgeführt, für ein Vierradfahrzeug also vier mal. Die Berechnungen können parallel oder nacheinander erfolgen. Als Ergebnis liegen acht Werte vor, vier Werte für Einlaßventile, vier Werte für Auslaßventile. Diese Werte werden einer modifizierten Prioritätsschaltung 720 zugeführt. In diese Prioritätsschaltung 720 fließen die Schaltzeitenanforderung, ebenfalls ausgedrückt in Taktzeiten, eines ABS-Reglers sowie weiterer Regler ein.

Diese Ansteuerung wird ausgeführt, so daß sich eine Druckänderung in den Radbremsen ergibt. Damit ändern sich die Bremskräfte und die damit auf das Fahrzeug ausgeübten Momente. So ergibt sich eine Änderung in den Größen, die die Fahrdynamik des Fahrzeuges beschreiben. Diese werden durch Sensoren direkt oder indirekt erfaßt und wiederum der Berechnung zugeführt.

Hieraus folgt erneut eine veränderte Momentenanforderung, die, wie oben beschrieben, in neue Steuersignale für die Ventile umgesetzt wird.

Die Berechnung der einzustellende Druckdifferenzen basiert auf den Druckanforderungen aus dem vorhergehenden Berechnungsloop. Diese müssen aber nicht tatsächlich eingestellt worden sein, so daß sich die tatsächlichen Drücke in den Radbremsen von den jeweils errechneten Druckanforderungen unterscheiden. Es ist daher notwendig, in bestimmten Situationen. den tatsächlichen Druck in der Radbremse mit den Druckanforderungen abzugleichen. Dies kann am einfachsten dann geschehen, wenn die Druckanforderung Null ist, die Verteilungslogik 700 also einen Wert fordert, der dem Druck Null in einer Radbremse entspricht. In einem solchen Fall wird nicht die Differenz zum vorhergehenden Wert gebildet und daraus die Steuersignale abgeleitet, sondern im Schritt 705 in die Schleife 706 zur Berechnung der Schaltzeiten abgezweigt, die sicherstellen soll, daß tatsächlich ein Druckwert Null eingestellt wird. Dies geschieht dadurch, daß die Schaltzeit $\Delta t_{aus}$ für das Auslaßventil mindestens auf die Loop-Zeit $T_0$ gesetzt wird.

Es kann auch notwendig werden, eine entsprechende Information an die Prioritätsschaltung 720 zu geben, so daß diese Zeitanforderung, die zu einem Druck Null in einer Radbremse führen soll, nicht durch Vorgaben der anderen Regler überlagert wird. Außerdem kann in dieser Information festgelegt werden, daß der Druckabbau über mehrere Loop-Zeiten erfolgen soll, so daß sichergestellt ist, daß tatsächlich ein vollständiger Druckabbau erfolgt.

6. Radbremsdruckerkennung

Der bis Abschnitt 4 beschriebene FSR-Druckregler liefert als Ergebnis Bremsdruckwerte für die Radbremsen. Diese Wertvorgaben müssen realisiert werden. Eine Methode besteht darin, die Drücke in den Radbremsen zu messen und mit den Wertvorgaben zu vergleichen. Ein Druckregler, der nach den üblichen Gesetzen arbeitet, regelt den Radbremsdruck auf den vorgegebenen Sollwert ein. Dieses Verfahren benötigt je einen Drucksensor pro Radbremse, also für ein vierrädriges Fahrzeug vier Drucksensoren.

Im allgemeinen wird man allein schön aus Kostengründen versuchen, mit möglichst wenig Sensoren auszukommen. Außerdem stellt jeder Sensor eine weitere potentielle Störungsquelle dar. Der Ausfall eines Sensors kann dazu führen, daß das gesamte Regelsystem abgeschaltet werden muß.

Es wird daher vorgeschlagen, ein Auswertesystem vorzusehen, das aufgrund von Daten, die von den schon vorhandenen Sensoren vorliegen, eine Druckgröße ableitet, die dem Druck in den Radbremsen entspricht. Dazu wird das folgende Konzept vorgeschlagen.

Der Druck in jeder Radbremse wird, wie schon erläutert, durch zwei Ventile geregelt. Das Einlaßventil steuert die Druckmittelzufuhr, während das Auslaßventil den Druckmittelablaß steuert.

Die Signale, die von einem Druckregler abgegeben werden, sind daher Steuerzeiten, die anzeigen, wie lange ein Ventil geöffnet bzw. geschlossen sein soll. Eine Loopzeit ist unterteilt in eine feste Zahl von Zeitabschnitten (Takte). Die Steuerzeiten können dann als Taktzahl dargestellt werden, die angibt, wie viele Zeitabschnitte ein Ventil geöffnet bzw. geschlossen sein soll.

Die Grundüberlegung besteht nun darin, diese Steuersignale nicht nur an die Radbremsen zu geben, sondern auch als Rechengrößen an ein Fahrzeugmodell. Das reale Fahrzeug reagiert auf die eingesteuerten Bremsdrücke, wobei sich eine bestimmte Schwerpuriktsgeschwindigkeit v sowie Raddrehzahlen $\omega_i$ der einzelnen Räder einstellen. Die Geschwindigkeit des Fahrzeugs wird nicht direkt gemessen, sondern ebenfalls aus den Raddrehzahlen $\omega_i$ der einzelnen Räder in besonderen Rechenschritten abgeleitet. Sie wird daher als Referenzgeschwindigkeit $v_{Ref}$ bezeichnet.

Entsprechende Werte lassen sich auch innerhalb eines Fahrzeugmodells nachbilden.

Aus einem Vergleich der tatsächlichen Werte für $\omega_i$, $v_{Ref}$ mit den errechneten bzw. aufgrund des Fahrzeugmodells abgeschätzten Werte für $\omega_i$ und $v_{Ref}$ läßt sich eine Korrekturgröße für den Druck in den einzelnen Radbremsen ermitteln, wobei mit Hilfe der Korrekturgröße ein über ein Hydraulikmodell errechneter Druck modifiziert werden kann, so daß eine bessere Abschätzung der Radbremsdrücke gegeben werden kann.

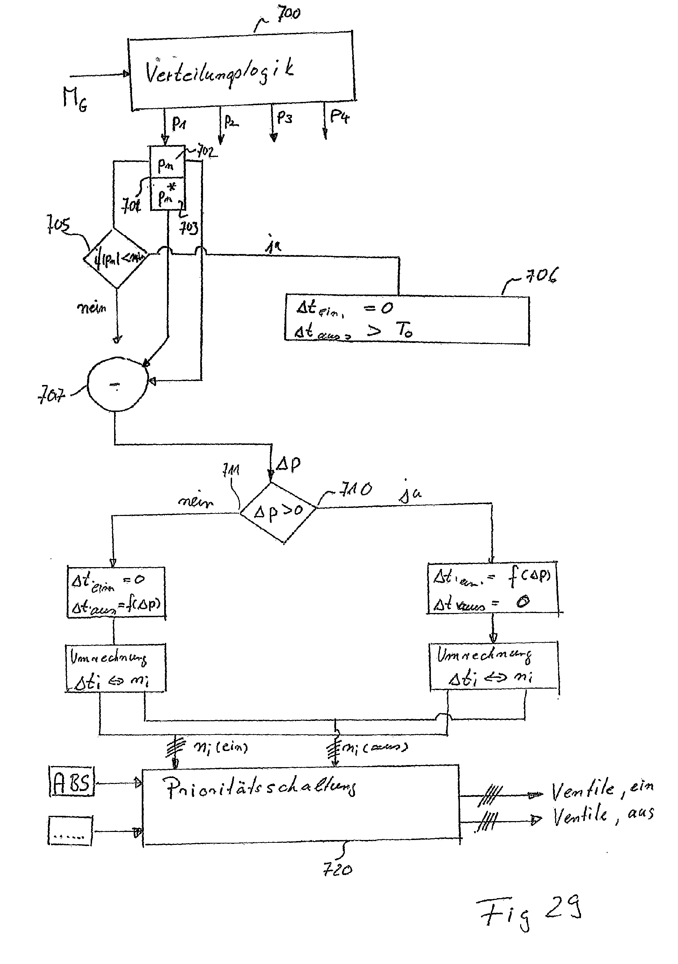

Die eben beschriebene prinzipielle Struktur ist in der Figur 29 näher erläutert.

Mit 800 ist eine Drucksteuerung bezeichnet die in Fig. 1 die Nummer 5 trägt. Die Drucksteuerung berechnet aus einem ersten Wert 801, der den einzustellenden Druck charakterisiert und aus einem zweiten Wert 802, der einen in der Radbremse vorhandenen, geschätzten oder gemessenen Druck markiert, Steuerzeiten für die Ventile der Radbremsen. Die Steuerzeiten sind hier als Ausgangsgröße 803 dargestellt. Mit 810 ist das Fahrzeug bezeichnet. Damit soll dargestellt werden, daß das Fahrzeug auf die Kräfte reagiert, die durch die in den Radbremsen eingestellten Drücke hervorgerufen werden. Dabei andern sich auch die Raddrehzahlen $\omega_i$ der einzelnen Räder.

Zum Fahrzeug 810 sollen auch Radsensoren gehören, die die Raddrehzahlen der Räder erfassen, so daß die Werte $\omega_i$ unmittelbar zur Verfügung stehen.

Zum Fahrzeug 810 gehört auch eine Auswerteeinheit für $\omega_i$, die in der Regel einen Teilbereich eines ABS-Reglers darstellt, welcher unter bestimmten Randbedingungen aus den Raddrehzahlen $\omega_i$ der einzelnen Räder eine sogenannte Referenzgeschwindigkeit $v_{ref}$, berechnet, die der tatsächlichen Geschwindigkeit des Fahrzeuges entsprechen soll.

Aus den einzelnen Raddrehzahlen, sowie der Fahrzeugreferenzgeschwindigkeit läßt sich für jedes Rad ein Schlupf $\lambda_i$ errechnen.

Die Werte $\omega_i$, $v_{Ref}$ stehen als Ausgangswerte 811 zur Verfügung. Der Schlupf $\lambda_i$ steht als Wert 812 zur Verfügung.

Das verwendete Rechenmodell wird als Ganzes mit 820 bereichnet. Es enthält drei Untermodelle, nämlich

| | |
|---|---|
| ein Hydraulikmodell | 821 |
| ein Fahrzeugmodell | 822 |
| ein Reifenmodell | 823 |

Das Hydraulikmodell 821 beschreibt in zwei Näherungsformeln den Zusammenhang zwischen Bremsdruck p und den in der Radbremse eingeschlossenen Volumen V sowie die Änderung ΔV des Volumens, wenn das Einlaß- bzw. Auslaßventil für eine gewisse Zeit geöffnet sind.

F 6.1

$$p = a*V + b*V^2$$

F 6.2

$$\Delta V = + c * t_{ein/aus} * \sqrt{\Delta p}$$

Die Parameter a, b und c sind Größe, die das Bremssystem beschreiben und als Werte in entsprechenden Speicher abgelegt sind. p beschreibt den aktuellen Druck in der Radbremse. V beschreibt das aktuelle Volumen, das in der Radbremse eingeschlossen ist.

Δp wird entweder über das Einlaßventil oder über das Auslaßventil gemessen, wobei bei der Messung über das Einlaßventil die Differenz zwischen einer Druckquelle und p erfaßt wird, während bei der Messung über das Auslaßventil die Differenz zwischen p und dem Druck in einem Reservoir ermittelt wird, der im allgemeinen bei 1 bar liegt und damit vernachlässigt werden kann.

Geht man davon aus, daß zu Beginn einer Regelung der Druck in den Radbremsen sowie das eingeschlossene Volumen zu 0 gesetzt werden, so läßt sich über die Verfolgung der Ventilöffnungszeiten die Volumenänderung und damit die Druckänderung in den einzelnen Radbremsen nachvollziehen.

Allerdings ist klar, daß die angegebenen Formeln die tatsächlichen Verhältnisse nur sehr grob wiedergeben können, so daß eine entsprechende Korrektur notwendig ist. Das Fahrzeug wird im Modell 822 im allgemeinen durch einen starren Körper beschrieben, der in vier Auf standspunkten (Radaufstandsflächen) auf einer Ebene steht.

Der Körper kann sich parallel zur Ebene also in x- und y- Richtung bewegen sowie sich um seinen Schwerpunkt drehen, wobei die Drehachse senkrecht zur Bewegungsebene steht.

Kräfte, die auf den Körper wirken, sind die Bremskräfte in den Radaufstandsflächen sowie Luftwiderstandskräfte.

Die Radlasten. $F_{z,v}$ und $F_{z,h}$ berechnen sich aufgrund dieser Überlegungen zu:

F 6.3a

$$F_{z,v} = \frac{m*g*l_h + h*(F_{x,v}\ F_{x,h})}{l_v + l_h} = \frac{m*g*l_h\ h*m*\dot{v}_{ref}}{l_v + l_h}$$

F 6.3b

$$F_{z,h} = \frac{m * g * l_v + h * (F_{x,v} \quad F_{x,h})}{l_v + l_h} = \frac{m * g * l_v \quad h * m * \dot{v}_{ref}}{l_v + l_h}$$

Ein solches Modell reicht in der Regel aus, um die gewünschte Druckkorrektur durchführen zu können. Falls notwendig, kann das Modell natürlich verfeinert werden. Für die weitere Berechnung liefert das Modell im wesentlichen die Belastungen $F_x$ der Aufstandsflächen in Abhängigkeit von der Schwerpunktsverzögerung. Das Rad wird als drehbare Scheibe betrachtet, das ein gewisses Trägheitsmoment aufweist.

F 6.4

$$\dot{\omega} = \frac{R_{rad} * F_x \quad M_{Br}}{\Theta}$$

Die Verzögerungsmomente, die auf das Rad wirken, werden linear aus dem Radbremsdruck ermittelt.

F 6.5

$$M_{Br} = C_{Br} * p$$

Im Reifenmodell wird unterstellt, daß die Kraftschlußausnutzung f, nämlich das Verhältnis von Bremskraft zu Radlast, sich linear mit dem Schlupf des Rades ändert.

F 6.6

$$F_x \approx \lambda * F_z$$

Die angegebenen Gleichungen ermöglichen es, die Raddrehzahl eines jeden Rades sowie die Referenzgeschwindigkeit des Fahrzeugmodells zu berechnen.

Diese Werte können mit den tatsächlichen Werten 811 verglichen werden. Dies geschieht im Vergleichspunkt 830. Aus der Differenz zwischen der gemessenen und der abgeschätzten Raddrehzahl eines jeden Rades kann unter Berücksichtigung eines Korrekturfaktors k ein zusätzliches Volumen ermittelt werden.

Dieses zusätzliche Druckmittelvolumen ΔV wird zum errechneten Sollvolumen hinzuaddiert und ergibt das neue Sollvolumen, aus dem heraus nach Formel F 6.1 ein Radbremsdruck abgeleitet werden kann, der relativ genau den tatsächlichen Radbremsdruck entspricht.

Die Genauigkeit der Abschätzung hängt natürlich ab vom Korrekturfaktor k, der ggf. durch Versuche vorab ermittelt werden muß.

Dieser Faktor wird von Fahrzeug zu Fahrzeug- verschieden sein und unter anderem auch davon abhängen wie, gut das Fahrzeugmodell die tatsächlichen Verhältnisse wiedergibt.

In dem zusätzlichen Volumen kann auch ein Toleranzvolumen enthalten sein, mit dem berücksichtigt werden soll, daß der Volumendurchsatz durch die Ventile nicht proportional zu den Schaltzeiten ist. Beim Öffnen und Schießen eines Ventils erweitert bzw. verengt sich der Öffnungsquerschnitt des Ventils nur langsam, so daß in den Zeitabschnitten, in denen der volle Öffnungsquerschnitt noch auf- bzw. abgebaut wird, nur ein reduziertes Volumen fließt.

7. Substitution eines Gierwinkelgeschwindigkeitsmessers

Für die oben beschriebene Regelung bildet die Gierwinkelgeschwindigkeit eine besonders markante Größe, da sie als Regelgröße dient, deren Abweichung $\Delta\dot{\psi}$ minimiert werden soll. Es können aber mit Vorteil auch andere Regelgrößen Verwendung finden, wie nachfolgend beschrieben wird. Zur Vereinfachung werden in diesem Abschnitt folgende Bezeichnungen verwendet:

$\dot{\psi}_{Mess}$ $= g_l$ als gemessener Istwert der Gierwinkelgeschwindigkeit

$\ddot{\psi}_{Mess}$ $= \dot{g}_l$ als gemessener Istwert der Gierwinkelbeschleunigung

$$\frac{d}{dt}\ddot{\psi}_{Mess} = \ddot{g}_I$$ als gemessener Istwert der Gierwinkelbeschleunigungsgungsänderung (Gierwinkelruck)

Entsprechendes gilt für die Sollwerte gemäß Fig. 9, die jeweils mit dem Index "s" versehen werden.

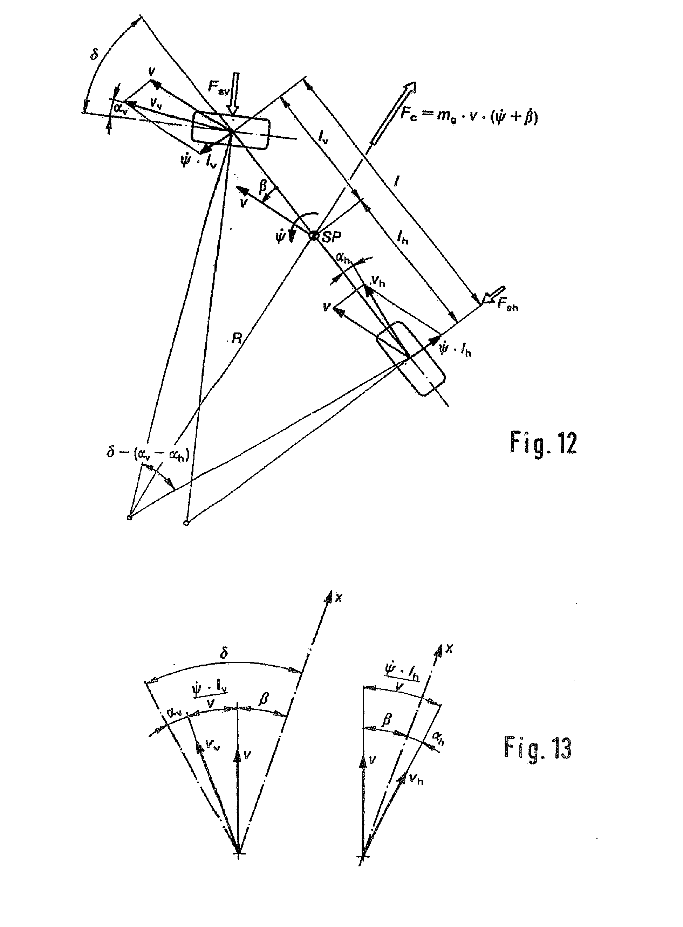

Die gemessene Gierwinkelgschwindigkeit in Fig. 12 wird üblicherweise mittels eines Gierwinkelgeschwindigkeitssensors 321 bestimmt, der das Ausgangssignal $g_l$ abgibt. Derartige bekannte Gierwinkelgeschwindigkeitssensoren mit direkter Abgabe der Gierwinkelgeschwindigkeit sind aber recht komplex aufgebaut und damit sehr teuer. Entsprechendes gilt für den nachgeschalteten Vergleicher sowie den zur Regelschaltung gehörenden Regler. Es wird daher angestrebt, hier für Abhilfe zu sorgen und eine einfachere Sensorik sowie einen einfacher aufgebauten Regler vorzustellen.

Fig. 13 zeigt als Skizze die Wirkungsweise eines neuartigen Sensors 321, der einen ersten Querbeschleunigungsmesser 322 und einen zweiten Querbeschleunigungsmesser 323 besitzt. Die beiden Beschleunigungsmesser 322,323 sind jeweils auf der Fahrzeuglängsachse über der Vordere- bzw. Hinterachse angeordnet. Prinzipiell können die Querbeschleunigungsmesser an beliebigen Stellen außerhalb des Schwerpunktes SP angeordnet sein, wobei dann eine entsprechende Umrechnung erfolgt.

In Fig. 15 ist der viereckige Umriß 32 4 eines Fahrzeugs mit seinen Reifen 325 und Sensoren angedeutet. Aufgrund dieser Anordnung mißt der vordere Querbeschleunigungsmesser 322 die Querbeschleunigung $a_{qv}$ in Höhe der Vorderachse 326 und der hintere Querbeschleunigungsmesser 323 die Querbeschleunigung $a_{qh}$ in Höhe der Hinterachse 327.

Die beiden Querbeschleunigungsmesser sind in der Lage, eine von der Gierwinkelgeschwindigkeit abhängige Größe anzugeben. Aus mathematischen Herleitungen läßt sich zeigen, daß sich aus den Meßergebnisse der Querbeschleunigungsmesser Gierwinkelbeschleunigung und die Querbeschleunigung $a_{quer}$ des Schwerpunktes SP folgendermaßen ermitteln lassen:

$$\mathrm{F}\ 7.1$$

$$\ddot{\Psi} = \frac{a_{qh}\, a_{qv}}{l_h + l_v}$$

$$\mathrm{F}\ 7.2$$

$$a_{quer} \approx \dot{v}_{ref} * \beta \ \frac{a_{qh} * l_v + a_{qv} * l_h}{l_h + l_v}$$

Dabei sind, wie aus Fig. 13 ersichtlich, $l_v$, $l_h$ die Abstände der Querbeschleunigungsmesser 322,323 von dem Schwerpunkt SP, während v die Geschwindigkeit des Fahrzeugs ist und $\beta$ der Schwimmwinkel ist. Es läßt sich somit aus den Querbeschleunigungen und den Abständen der Beschleunigungsmesser 322,323 die Gierwinkelbeschleunigung $\dot{g}_l$ bestimmen. Daher wird vorgeschlagen, die Gierwinkelbeschleunigung $\dot{g}_l$ einzusetzen, anstelle der in den vorherigen Abschnitten vorgeschlagenen Gierwinkelgeschwindigkeit. Oder es ist auch möglich, eine lineare Gewichtung der einzelnen Eingangswerte für den Vergleicher ähnlich der bekannten Zustandsregelung vorzunahmen. Dabei können die Gierwinkelgeschwindigkeit g und der Schwimmwinkel $\beta$ aus dem Gierwinkeldruck $\dot{g}$ und der Schwimmwinkelgeschwindigkeit $\dot{\beta}$ mittels einer bandbegrenzten Integration oder eines skalierten Tiefpasses erster Ordnung berechnet werden, um aus dem Sensor 321 Größen zu erhalten, die in ihrer Dimension den Ausgangsgrößen des Fahrzeugreferenzmodells 302 entsprechen (Abschnitt 2.3.1).

Dabei gilt für die bandbegrenzte Integration

$$F\ 7.3$$

$$G(z') = \frac{\lambda^2 * \frac{T_0}{2} * (1\ z') * (1 + z')}{1\lambda * z'}$$

während man bei der Anwendung eines Tiefpasses zu der folgenden Abhängigkeit kommt

$$F\ 7.\ 4$$

$$G(z') = \frac{T_I * (1\lambda)}{1\ \lambda * z'}$$

Die Schwimmwinkelgeschwindigkeit erhält man nach der Auswertung der Beziehung

$$F\ 7.5$$

$$a_q = v * (\dot{\Psi} + \dot{\beta})$$

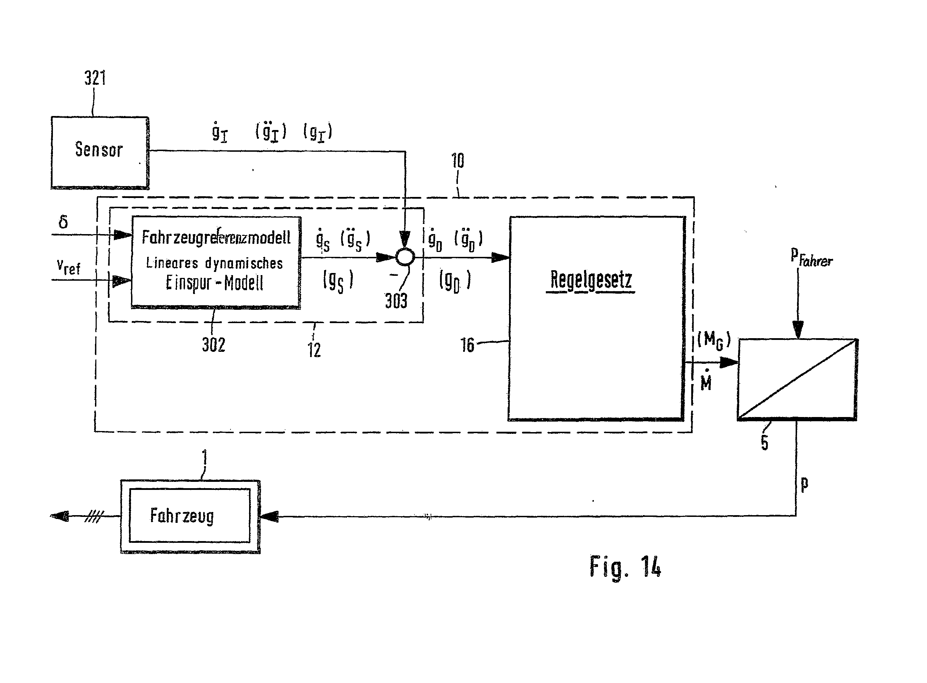

Es zeigt sich somit, daß durch die Verwendung von zwei Querbeschleunigungsmessern zwar ein bekannter Gierwinkelgeschwindigkeitsmesser ersetzt werden kann. Es müssen dabei aber die eben beschriebenen Maßnahmen getroffen werden, um die Gierwinkelbeschleunigung in die Gierwinkelgeschwindigkeit zu transformieren. Nach Bildung von $\Delta g$ und $\Delta\dot{g}$ kann sich unverändert das Regelgesetz 16 von Fig. 1 anschließen. In Fig. 14 wird das so errechnete Moment $M_G$ zusätzlich im Regelgesetz 16 durch zeitliche Ableitung in eine Momentenänderung M umgerechnet.

Es ist aber u.U. zweckmäßiger, zu einer nichtlinearen Regelung gemäß Fig. 17 überzugehen, bei der die Gierwinkelbeschleunigung $\dot{g}$ sowohl als Ist-Wert als auch Sollwert als Ergebnis aus dem Fahrzeugreferenzmodell 302 dem Vergleicher 303 zugeführt wird. Dazu müssen innerhalb des Fahrzeugreferenzmodells entsprechende Ableitungen gebildet werden.

Als Konsequenz ergibt sich, daß statt der Gierwinkelgeschwindigkeitsdifferenz $\Delta g$ am Ausgang des Vergleichers 303 die Abweichung der Gierwinkelbeschleunigung $\Delta\dot{g}$ ansteht und als Eingangsgröße dem Regelgesetz 16 zugeht. Weiterhin kann dem Giermomentenregelgesetz 16, wie aus Fig. 15 ersichtlich, zur genaueren Bestimmung der Momentenänderung zusätzlich die Schwimmwinkelgeschwindigkeit $\dot{\beta}$ zugeführt werden.

Wie schon zu Fig. 14 erwähnt, kann man von einem Zusatzgiermoment $M_G$ als Ausgangssignal des Regelgesetzes 16 abgehen und statt dessen die Momentenänderung $\dot{M}$ als Ausgangssignal verwenden. In einer modifizierten Verteilungslogik wird die Momentenänderung $\dot{M}$, also die Ableitung des Zusatzgiermomentes $M_G$, in einzelne Druckänderungen umgesetzt. Das bedeutet, daß die Druckänderungen auf die einzelnen Radbremsen so verteilt werden, daß sich insgesamt das erwünschte Zusatzgiermoment $M_G$ ergibt. Einzelheiten hierzu sind weiter unten in Verbindung mit Fig. 16 angegeben.

Es ist zu berücksichtigen, daß möglicherweise gleichzeitig durch eine Bremsbetätigung des Fahrers eine bestimmte Druckverteilung in den Radbremsen vorhanden ist. In diesem Fall ist es günstiger, durch Integration der Momentenänderung $M$ das Moment $M_G$ zu bestimmen, aus dem sich dann direkt die Druckdifferenzen bestimmen lassen, welche hinsichtlich des schon in jeder einzelnen Radbremse herrschenden Drucks aufgebracht werden müssen. Die vorteilhafte, oben erläuterte Weiterbildung durch Verwendung der Ableitungen der in den Abschnitten 1 bis 3 verwendeten Regelgrößen kann auch mit der Verteilungslogik nach Abschnitt 3 kombiniert werden. Hiermit stehen zwei Regelprinzipen zur Verfügung, von denen das eine ein Zusatzgiermoment $M_G$ und das andere eine Änderung des Zusatzgiermoment $M$ als Vorgabe liefert. Dabei kann eine Umschaltung zwischen den Prinzipien vorgesehen sein. Eine Umschaltung auf das jeweils andere Regelprinzip muß insbesondere dann erfolgen, wenn die andere Berechnung von Zusatzregelgrößen (Schwimmwinkel etc.) eines Prinzips nicht mit ausreichender Genauigkeit durchgeführt werden kann (s. z.B. Abschnitt 2.2.2) Es ist noch anzumerken, daß dem Regelgesetz 16 nach Fig. 15 zusätzlich zu $\Delta\dot{g}$ als Korrekturgröße auch noch

$\Delta \dot{g}$ zugeführt werden kann.

Im Regelgesetz 16 nach Fig. 15 sind neben anpassende Verstärkern k1, k2, k3 zwei Schwellenwertschalter S2,S3 gezeigt, die das Regelverhalten innerhalb des Regelgesetzes 16 verbessern und den Einfluß der eingeführten Größen optimal in Abhängigkeit von der Geschwindigkeit an das ideale Regelverhalten anpassen sollen. Eine vergleichbare Aufgabe haben die Verstärker k1 bis k3. Die einzelnen Werte werden dann in einem Addierer addiert und als Ausgangssignal des GMR-Reglers 10 abgegeben. Allgemeine Erläuterungen zum Regelgesetz, die hier entsprechend gelten, finden sich in Abschnitt 2.4.

Im Zusammenhang mit Fig. 1 wurde ge:zeigt, wie in einer Prioritätsschaltung 3 die Druckvorgaben am Ausgang der Regler 7,8,9 mit der Druckvorgabe einer Verteilungslogik 2 verknüpft werden. Die Verwendung von Druckvorgaben setzt eine entsprechende vorherige Umformung in den diese Vorgaben abgebenden Einrichtungen voraus. Durch die nachfolgend beschriebenen Maßnahmen läßt sich der Aufwand für den Informationsaustausch zwischen den Programmodulen des regelkreises vereinfachten.

In Fig. 16 ist der Regelkreis zur Regelung der Fahrstabilität der Figuren 9, 14 nochmals stark vereinfacht gezeigt, wobei die dort eingeführten Bezeichnungen beibehalten werden.

Der GMR-Regler 10 nach Fig. 1 ist hier insoweit modifiziert, als am Ausgang die Änderung $\dot{M}$ des zusätzlichen Giermomentes $M_G$ vorliegt, der zusammen mit der vom Fahrer gewünschten Druckverteilung an den Bremsen (Bremswunsch) in die Verteilungslogik 2 eingegeben wird. Zur Berechnung von $\dot{M}$ sei auf Fig, 12 erwiesen.

Die Verteilungslogik 2 weist einen Logikblock 340 und eine Druckgradientenschaltung 341 auf. Die wesentliche Aufgabe des Logikblocks 340 ist es, dafür zu sorgen, daß trotz Eingriff der Fahrstabilitätsregelung das Fahrzeug insgesamt nicht stärker abgebremst wird, als von dem Fahrer durch Vorgabe seines Drucksignals am Eingang der Verteilungslogik 2 gewünscht wird. Damit soll verhindert werden, daß durch die Fahrstabilitätsregelung zusätzlich noch Instabilitäten herbeigeführt werden Wenn also aufgrund des Bremswunsches des Fahrers ein Bremsdruck an einem Rad vorgesehen ist und andererseits über den FSR-Regler an ein oder zwei Rädern ein Druckaufbau und an den gegenüberliegenden Rädern ein Druckabbau gefordert wird, um das zusätzliche Giermoment zu erreichen, so können hinsichtlich der einzelnen Räder einander widersprechende Forderungen bestehen, nämlich Druckaufbau bei gleichzeitigem Druckabbau. Hinsichtlich anderer Räder kann sich dann die Forderung ergeben, daß der Druck nicht nur aufgrund des Bremswunsches des Fahrers, sondern gleichzeitig auch aufgrund der Stabilitätsregelung aufgebaut werden soll. Der Logikblock sorgt nun dafür, daß zuerst in den entsprechenden Rädern der Bremsdruck erniedrigt wird, während nachfolgend eine Erhöhung des Bremsdruckes über den Fahrerwunsch hinaus bis zu einem bestimmten Grenzwert erfolgen kann. Damit wird sichergestellt, daß die mittlere Bemskraft über alle Räder gesehen, unter Berücksichtigung des durch die FSR-Regelung herbeigeführten zusätzlichen Drehmoments nicht größer wird als von dem Fahrer gewünscht.

Wie schon in Abschnitt 3,2 erläutert wurde, kann eine gezielte Erhöhung des Längsschlupfes λ an einem Rad dazu eingesetzt werden, die Seitenkxäfte zu reduzieren, während die Bremkraft in Längsrichtung erhalten bleibt. Auf diese Weise kann also ein Giermoment aufgebracht werden, ohne daß die Fahrzeugverzögerung abnimmt.

In der Drückgradientenschaltung 341 der Verteilungslogik 2 werden die Druckänderungen $\Delta P_{xx}$ an den einzelnen Rädern xx aufgrund vorgegebener Konstanten $d_{xx}$ und der Momentenänderung $M$ berechnet, wobei in die Berechnung auch noch die Differenz zwischen dem von dem Fahrer gewünschten Bremsdruck $P_{Fahrer}$ zu dem tatsächlich gemessenen Bremsdruck $P_{xxist}$ eingeht. Es gilt somit die Beziehung

F 7.6

$$\Delta p_{xx} = + \frac{d_{xx} * \dot{M}}{\Sigma d_{xx}^2} + g_1 * (p_{Fahrer} \, p_{xxist})$$

wobei gilt

$xx \varepsilon$ [vr,vl,hr,hl]

und $g_1$ = Proportionalitätsfaktor

Der tatsächliche Bremsdruck $p_{xxist}$ wird entweder durch einen Druckmesser an dem betroffenen Rad abgenommen oder über ein Bremsenmodell errechnet, welches den an dem Rad vorgeschriebenen Druckänderungen folgt und somit ein Abbild des gerade am Rad herrschenden Druckes ist (Abschnitt 6).

Die errechneten Druckanforderungen werden einer Prioritätsschaltung 3 zugeführt und dort ausgewertet (siehe oben Abschnitt 4).

Die vorangegangene Beschreibung setzt voraus, daß in der Prioritätsschaltung unmittelbar Druckgradienten verarbeitet wurden. Dies ist aber nicht notwendig. Es ist auch möglich, daß in der Prioritätsschaltung 3 Ventilschaltzeiten Δt verarbeitet werden. (Abschnitt 5). In diesem Fall muß allerdings eine Ventilschaltzeitschaltung 343 zwischen die Verteilungslogik 2 und die Prioritätsschaltung 3 geschaltet werden, wobei von den weiteren Reglern 7,8,9 dann auch Ventilschaltzeiten $\Delta t$ abgegeben werden. Die Prioritätsschaltung arbeitet dann die eingegebenen Ventilschaltzeiten $\Delta t$ nach einem entsprechenden Schema ab, wie in Abschnitt 4 schon für die Bremsdrücke beschrieben. Ausgangsgrößen der Prioritätsschaltung sind Ventilschaltzeiten. Die Umwandlung der geforderten Druckänderungen $\Delta t_{xx}$ der einzelnen Räder xx in Ventilschaltzeiten $\Delta p$, geschieht nach der Gleichung

$$F\ 7.7$$

$$S_{xx} = Kr\ p_{xxist} \cdot \Delta p_{xx}$$

Dabei ist $Kr_{xx}$ ein Verstärkungsfaktor, der von dem Ist-Druck der einzelnen Räder abhängt und bei Druckaufbau nach der folgenden Regel

$$F\ 7.8$$

$$Kr_{xx}(p_{xxist}) = \frac{1}{Dv_{auf} * T_0 * \sqrt{a^2 + 4*b* p_{xxist}} * \sqrt{160\, p_{xxist}}}$$

berechnet wird, während für den Druckabbau

$$F\ 7.9$$

$$Kr_{xx}(p_{xxist}) = \frac{1}{Dv_{ab} * T_0 * \sqrt{a^2 + 4*b* p_{xxist}} * \sqrt{p_{xxist}}}$$

gilt. xx ist dabei wieder ein Index, welcher die Lage der einzelnen Räder kennzeichnet,

**Patentansprüche**

1. Fahrsituationserkennungsverfahren zum Beobachten und Analysieren von mindestens den Fahrsituationen Geradeausfahrt und Kurvenfahrt eines Fahrzeugs, **dadurch gekennzeichnet, dass** in der Fahrsituationserkennung (22) Fahrsituationen mit nahezu stationären Kursverläufen des Fahrzeugs mit einer Lenkwinkelgeschwindigkeit kleiner/gleich 120°/s beobachtet und analysiert werden, wobei die Fahrsituationserkennung als Zustandsautomat aufgebaut ist, der mindesten einen der Zustände Geradeausfahrt mit Teilbremsung, Kurvenfahrt mit Teilbremsung und/oder Kurvenfahrt mit Lastwechsel erkennt und in Abhängigkeit von den Zuständen, die eine Kursabweichung wiedergeben, einen Regler mit einem Programm (23) aktiviert, mittels dem eine Referenzsignalbildung (24) einer Giergeschwindigkeitsgröße aktiviert wird, bei der in einem Referenzsignalmodell ein Offset korrigiert wird, und wobei die Fahrsituationserkennung den Zeitpunkt bestimmt, wann die Offsetkorrektur beginnt und endet, und der Offsetwert zum Startzeitpunkt der Giergeschwindigkeitsgröße überlagert wird, wobei das Referenzsignal mit einer gemessenen Gierwinkelgeschwindigkeit verglichen und ein zusätzliches Giermoment berechnet wird, um die Kursabweichung zu korrigieren.

2. Vorrichtung zur Regelung des Gierverhaltens eines zweiachsigen, vierrädrigen Fahrzeugs, welches mit einer hydraulischen Bremsanlage, die für jedes Rad eine Bremse aufweist, und mit mindestens einer Sensorik oder Modellen zur Erfassung und/oder Berechnung der Raddrehzahlen, der Querbeschleunigung, der Gierwinkelgeschwindigkeit, des Lenkwinkels und/oder der Lenkwinkelgeschwindigkeit ausgestattet ist, umfassend mindestens zwei elektronische Gierratenregler, wobei der erste Regler (20) ein zusätzliches Giermoment $M_{G;SESP}$ zur Verbesserung des Spurverhaltens des Fahrzeugs in Abhängigkeit von einem Soll-/Istgierratenvergleich unterhalb der ESP-Eingriffsschwelle und der zweite Regler (10) ein zusätzliches Giermoment $M_G$ zur Stabilisierung des Fahrzustandes des Fahrzeugs oberhalb der ESP-Eingriffsschwelle durch entsprechende Bremsbetätigung umsetzt, **dadurch gekennzeichnet, dass** der erste Regler (20) von einem Fahrsituationserkennungsverfahren nach Anspruch 1 aktiviert wird.

**Claims**

1. Driving situation detection method for observing and analysing at least the driving situations of straight-ahead travel and cornering of a vehicle, **characterized in that** driving situations with virtually steady-state course profiles of the vehicle with a steering angle speed of less than/equal to 120°/s are observed and analysed in the driving situation detection means (22), wherein the driving situation detection means is embodied as an automatic state device which detects at least one of the states of straight-ahead travel with partial braking, cornering with partial braking and/or cornering with a load change, and actuates a regulator with a program (23) as a function of the states which represent a deviation from the course, by means of which program (23) a reference signal forming means (24) of a yaw speed variable is activated, in which reference signal forming means (24) an offset is corrected in a reference signal model, and wherein the driving situation detection means determines the time when the offset correction starts and ends, and the offset value is superimposed at the start of the yaw speed variable, wherein the reference value is compared with a measured yaw angle speed, and an additional yaw moment is calculated in order to correct the course deviation.

2. Device for regulating the yaw behaviour of a two-axle, four-wheeled vehicle which is equipped with a hydraulic brake system which has a brake for each wheel, and with at least one sensor system or models for detecting and/or calculating the wheel speeds, the lateral acceleration, the yaw angle speed, the steering angle and/or the steering angle speed, comprising at least two electronic yaw rate regulators, wherein the first regulator (20) implements an additional yaw moment $M_{G;SESP}$ for improving the lane-keeping behaviour of the vehicle as a function of a set point/actual yaw rate comparison below the ESP intervention threshold, and the second regulator (10) implements an additional yaw moment $M_G$ for stabilizing the driving state of the vehicle above the ESP intervention threshold by corresponding activation of the brakes, **characterized in that** the first regulator (20) is activated by a driving situation detection method according to Claim 1.

**Revendications**

1. Procédé de détection d'une situation routière pour observer et analyser au moins les situations routières de conduite en ligne droite et de conduite en virage d'un véhicule, **caractérisé en ce que** dans la détection d'une situation routière (22), des situations routières avec des évolutions de trajectoire presque stationnaires du véhicule avec une vitesse d'angle de braquage inférieure ou égale à 120°/s sont observées et analysées, la détection d'une situation routière étant établie en tant qu'automate d'état qui détecte au moins l'un des états de conduite en ligne droite avec freinage partiel, de conduite en virage avec freinage partiel et/ou de conduite en courbe avec freinage en charge, et qui, en fonction des états qui reproduisent un écart de trajectoire, active un régulateur avec un programme (23) au moyen duquel une formation de signal de référence (24) d'une grandeur de vitesses de lacet est activée, dans laquelle, dans un modèle signal de référence, un décalage est corrigé, et la détection de la situation routière déterminant l'instant auquel la correction de décalage commence et se termine, et la valeur de décalage étant superposée à l'instant de démarrage de la grandeur de vitesse de lacet, le signal de référence étant comparé à une vitesse angulaire de lacet mesurée et un couple de lacet supplémentaire étant calculé, afin de corriger l'écart de trajectoire.

2. Dispositif de régulation du comportement de lacet d'un véhicule à quatre roues et deux essieux qui est muni d'une installation de frein hydraulique qui présente un frein pour chaque roue, et d'au moins un système de capteur ou de modèles de détection et/ou de calcul des vitesses de rotation des roues, de l'accélération transversale, de la vitesse angulaire de lacet, de l'angle de braquage et/ou de la vitesse d'angle de braquage, comprenant au moins deux régulateurs électroniques de vitesse de lacet, le premier régulateur (20) mettant en ouvre un couple de lacet supplémentaire $M_{G;SESP}$ pour améliorer la tenue de route du véhicule en fonction d'une comparaison des vitesses de lacet de consigne et réelle en dessous du seuil d'engagement de l'ESP et le deuxième régulateur (10) mettant en oeuvre un couple de lacet supplémentaire $M_G$ pour stabiliser l'état de conduite du véhicule au-dessus du seuil d'engagement de l'ESP par un actionnement correspondant des freins, **caractérisé en ce que** le premier régulateur (20) est activé par un procédé de détection d'une situation routière selon la revendication 1.

Fig. 1

Fig. 2

Fig. 3

Fig. 4

Fig. 5

Fig. 6

EP 1 682 392 B1

Fig. 7

Fig. 8

Fig. 9

EP 1 682 392 B1

Fig. 10

$$\dot{\psi}_{soll} = \delta^* \cdot \frac{1}{i_L \cdot l} \cdot \left( \frac{v}{1 + \frac{v^2}{v_{ch}^2}} \right)$$

Fig. 11B

$$\left(v_{ch}^2\right)^* = \frac{v^2}{\left( \frac{\delta^* \cdot v}{\dot{\psi}_{ist} \cdot i_L \cdot l} - 1 \right)}$$

Fig. 11A

$$F_c = m_g \cdot v \cdot (\dot{\psi} + \dot{\beta})$$

Fig. 12

Fig. 13

Fig. 14

Fig. 15

Fig. 16

Fig. 17

Fig. 18

EP 1 682 392 B1

Fig 19

EP 1 682 392 B1

Fig 20

Fig. 21

Regelgesetz — 16

$M_1$

$M_1(K)$ — 421
— 420
$M_1(K-1)$ — 422

— 430

$\beta$

$$\Delta M = M_1(K) - M_1(K-1) + a \cdot \hat{\beta} \cdot T_0$$

431

$M(K)$
$= M(K-1) + \Delta M$

$M_G$

$M(K-1)$

432

Fig 22

Fig 23

Fig 24

$$P_{xl} = \frac{c_{xl}}{c_{vl}^2 + c_{vr}^2 + c_{hl}^2 + c_{hr}^2} \cdot M_G$$

$$P_{xr} = \frac{c_{xr}}{c_{vl}^2 + c_{vr}^2 + c_{hl}^2 + c_{hr}^2} \cdot M_G$$

Fig 25

Fig 26

72

$P_{min}$  
601

$\dot\psi_{mes}$    $\dot\psi_{soll}$  
610  
602

$M_G$  

$\lambda$  
603    604

Fig 27a

$\lambda$  
601

$\dot\psi_{soll}$    $\dot\psi_{mess}$  
610  
602  $P_{min}$

$M_G$  

603    604

Fig 27b

Berechne
$M_G$ ~640

Berechne
$\Delta P_{xx}$ ~641

$\Delta P_{xx} < P_{th}$ 642

Abschnitt
3.1 ~643

$\angle_{xx} = f(\lambda)$ ~644

Fig 28

Fig 29

Fig 30

Fig. 30

| Geradeausfahrt mit Lastwechsel | Geradeausfahrt mit Teilbremsung | Kurvenfahrt mit Teilbremsung | Kurvenfahrt mit Lastwechsel |
|---|---|---|---|

SESP inaktiv

EP 1 682 392 B1

*Pi* → 801

Pressure Controller — 800

802

803
s1/s2 →

Car — 810

811
$\omega_i$, $V_{Ref}$

812 ⌐ $\lambda_i$

$u$ ⌐ Hydraulic model — 820

Car model

822

Tyre model

823 ⌐

Pest

$(\omega_i, V_{Ref})_{est}$

830

$\Delta k\lambda$
$\Delta Vest$

Gain

Fig 31

Bahn des Fahrzeugschwerpunkts

(−)

−          +

Fig. 32

Gierrate

gemessen

SESP-Referenz

AYC-Referenz

Eindreh-Ursache                    Zeit

Fig. 31

Bahn des Fahrzeugschwerpunkts

(−)     (+)

−       +

*Fig. 32 a*

Gierrate

gemessen

SESP-Referenz
*mit offset-Korrektur*

SESP-Referenz
*ohne offset-Korrektur*

Eindreh-Ursache                Zeit

*Fig. 31a*

**Fig 33**

— = standard AYC, -.-. = SESP straight on, .... = SESP in curve

AYC_standard

SESP_straight

SESP_curve

# Fig. 34

gemessene/geschätzte Zustandsgrößen

Referenz-Zustandsgrößen

| Fahrsituations-<br>erkennung | → | Referenzsignal-<br>bildung |

offsetkorrigierte
Referenz-Zustandsgrößen

| Regler |

SESP-Stellgrößen

| Arbitrierung |

Hauptzylinderdruck,
geschätzter Reibwert

zusätzliches
Giermoment

zusätzliches Motorment,
zusätzlicher Lenkwinkel, ...

| Wahl des<br>Giermomenten-<br>verteilungs-<br>modus | → | Standard-ESP:<br>Giermomentenverteilung,<br>Radschlupfüberwachung,<br>Raddruckarbitrierung |

Fig 35

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03002392 A1
- DE 19936439 A1
- DE 4030704 A1

**In der Beschreibung aufgeführte Nicht-Patentliteratur**

- **VON ADAM ZOMOTOR.** Fahrwerktechnik: Fahrver-halten. Vogel Buchverlag, 1987